# EUROPEAN PATENT APPLICATION

(11) **EP 4 831 647 A2**
(43) Date of publication of application: **28.10.2026**
(21) Application number: 26204878.8
(22) Date of filing: 14.06.2024
(51) Int. Cl.: G01N 35/04

(54) **AUTOMATED FLUID SAMPLE HANDLING SYSTEMS AND METHODS**

(30) Priority: 16.06.2023 US 202363521524 P
(62) Document number(s) of the earlier application(s) in accordance with Art. 76 EPC: 24742352.8 / 4 728 281
(71) Applicant: Gen-Probe Incorporated, San Diego, CA 92121 (US)
(72) Inventor: SILBERT, Rolf, Del Mar, 92014 (US); PENG, HongRan, San Diego, 92121 (US); CHANG, Ching Wei, Woodinville, 98072 (US)
(74) Representative: Script Intellectual Property LLP

(57) **Abstract**

There is disclosed a method for processing a sample collection vial with an automated processing station, wherein the sample collection vial contains a fluid sample and comprises a cap removably attached to a container vessel and a sample collection swab attached to the cap, wherein the processing station comprises a vial holder, a cap holder, a capper/decapper, a pick-and-place robot, and a waste receptacle, and wherein the method comprises: (a) with the pick-and-place robot, transporting the sample collection vial to the vial holder; (b) with the pick-and-place robot, transporting a replacement cap to the cap holder, wherein the replacement cap does not include a sample collection swab; (c) with the capper/decapper, altering an attachment between the cap and attached sample collection swab and the container vessel so that the cap may be separated from the container vessel; (d) with the pick-and-place robot, removing the cap and attached sample collection swab from the container vessel; (e) with the pick-and-place robot, transporting the cap and attached sample collection swab to the waste receptacle and depositing the cap and attached sample collection swab in the waste receptacle; (f) with the capper/decapper, removing the replacement cap from the cap holder; (g) with the capper/decapper, attaching the replacement cap to the container vessel of the sample collection vial; and (h) with the pick-and-place robot, removing the sample collection vial with the replacement cap attached thereto from the vial holder.

## Description

### FIELD OF THE DISCLOSURE

This disclosure relates to systems and methods for transferring fluid sample material from a sample collection vial to a vial suitable for processing in an automated analyzer or for replacing one type of cap on a sample collection vial with another type of cap.

### BACKGROUND

Various types of analytical tests or assays are performed in laboratories for patient diagnosis and to guide therapy. Such assays may be performed by analysis of a liquid or liquefied sample obtained from a patient and are typically performed with automated analyzers onto which receptacles, such as tubes or vials, containing patient samples have been loaded. Samples may be provided to the analyzer by an operator first placing the sample-containing receptacles, typically carried on a rack holding multiple receptacles, into the analyzer. The analyzer may extract an amount of the sample from the receptacle, combine a purified or unpurified form of the extracted sample with various reagents in a special reaction vessel (e.g., tube, well, vial, cuvette, etc.), expose the resulting reaction mixture to reaction conditions, and detect a measurable output (e.g., an optical output), if any, from which an assay result may be determined. Exemplary analyzers include analyzers described in U.S. Patent Nos. 8,731,712 and 9,732,374, and in International Publication No. WO 2019/014239, and are embodied in the Panther^{®} and Panther Fusion^{®} systems available from Hologic, Inc. (Marlborough, MA).

Biological samples are often collected using sample collection swabs that are placed in a container, or vial, which may contain a buffer solution or other liquid for eluting sample material from the swab, and the container is subsequently capped to enclose the swab within the container. In some sample collection systems, upon attaching the cap to the container, the swab becomes coupled (attached) to the cap so that when the cap is subsequently removed from the container, the swab remains connected to the cap and can thus be removed from the container by separating the cap from the container, and without requiring that the swab itself be touched.

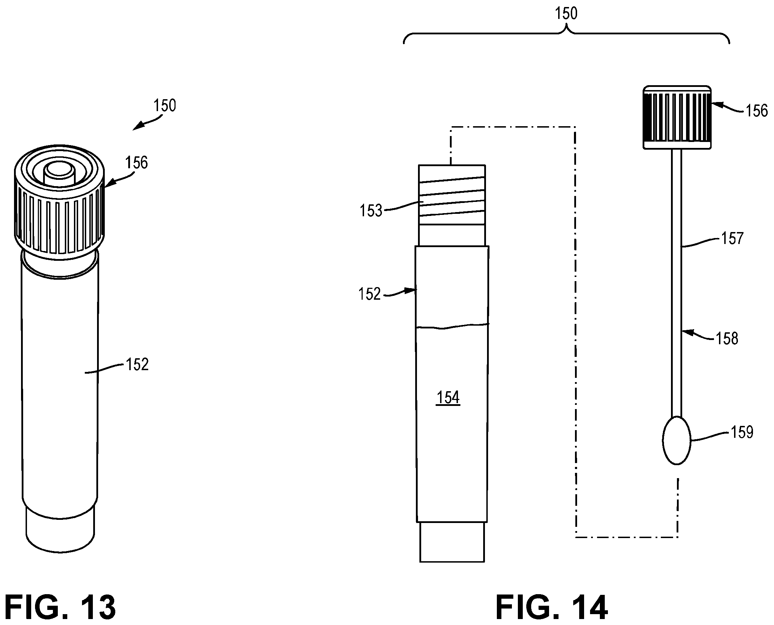

An example of an input vial or sample collection vial, having a cap with a collection swab coupled thereto is shown in FIGS. 13 and 14. In this context, the term "vial" is not intended to invoke any particular configuration of a fluid container. The input vial 150 includes a vessel 152 (a container, such as a tube) with a threaded neck 153 on which a cap 156 may be secured to the vessel 152. A sample collection swab 158 comprises a stem 157 with a collection head 159 (e.g., spun fiber) at one end of the stem 157. After a sample is collected with the sample collection swab 158, the swab 158 is placed within the vessel 152 with the head 159 at the bottom of the vessel 152. In some examples, the stem 157 is longer than the height of the vessel 152 to facilitate sample collection, and the stem 157 is formed with a weakened break point at a position along the length of the stem corresponding to the height of the vessel 152. After sample is collected, the swab is placed in the vessel, and the stem is snapped off at the break point. The portion of the swab remaining in the vessel 152 below the breakpoint generally corresponds to the height of the vessel 152, and the portion of the stem above the breakpoint can be discarded.

Vessel 152 contains a fluid 154 for eluting sample material from the head 159. The 156 cap is secured to the vessel, and the inside of the cap includes a feature to capture an end of the stem 157 opposite the head 159 thereby securing the swab 158 to the cap 156 such that the swab 158 is removed from the vessel 152 when the cap 156 is removed from the vessel 152.

The ESwab^{®} container available from Copan Diagnostics, Inc. is an example of a sample collection system that includes a tube, a swab that is placed in the tube after sample is collected with the swab, and a cap that, when placed on the tube, becomes coupled to an end of the swab. An example of a swab having a weakened breakpoint is described in U.S. Patent No. 5,623,942. A container having a cap with a connector for capturing the end of a sample collection device, such as a swab, is described in U.S. Patent No. 8,728,414.

Frequently, sample collection vials used in clinical or industrial settings for collecting and transporting a liquid sample are not suitable for being processed in an automated analyzer. For example, sample collection vials that are processed in an automated analyzer may include a cap that is penetrable by a pointed object, such as a pipette tip, so that the fluid contents of the container can be accessed by the analyzer and withdrawn from the container for testing without physically removing the cap from the associated container. Alternatively, the sample collection vial with a threaded cap may be placed in an automated analyzer, and the cap may be temporarily remove by a capper/decapper and replaced after an amount of sample material has been withdrawn from the container. Sample collection containers having a collection swap connected to the cap present a number of challenges for processing within an automated analyzer. First, such caps are not penetrable by a pipette tip. Also, the length of the swab attached to the cap requires that the cap removed from the container be separated by at least a distance corresponding to the length of the swab, which may be difficult within an automated analyzer typically having tight space constraints. In addition, the presence of the swab extending from the removed cap creates potential contamination issues as sample material may drip from the swab and/or the swab may come into contact with adjacent components within the analyzer. Accordingly, it becomes necessary to transfer an amount of the liquid sample from the sample collection vial, or input vial, to a vial that can be processed in the analyzer, referred to herein as the output vial. An automated instrument for transferring an amount of sample material from an input vial to an output vial that is subsequently placed in an automated analyzer is described in U.S. Patent Nos. 9,335,336 and 10,094,847 and embodied in the Tomcat^{®} instrument available from Hologic, Inc. (Marlborough, MA).

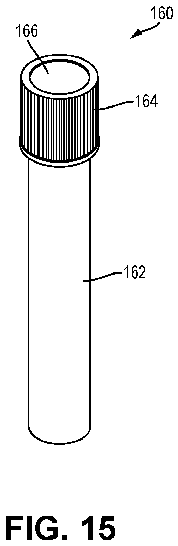

An exemplary output vial is shown in FIG. 15. Again, in this context, the term "vial" is not intended to invoke any particular configuration of a fluid container. Output vial 160 includes a vessel 162 (a container, such as a tube), and a cap 164 which may be threadably attached to a threaded neck (not shown) of the vessel 162 and having a top portion 166 comprised of a foil or other material(s) that can be penetrated by a pipette tip to permit access to the contents of the vessel 162 within an automated analyzer without requiring that the cap 164 be removed. An exemplary output vial having a penetrable cap is described in U.S. Patent No. 8,685,347 and embodied in the Aptima^{®} Multitest Swab Specimen Collection Kit available from Hologic, Inc. (Marlborough, MA).

Available systems and processes for automated transfer of sample material from an input vial to an output vial are not effective for processing input vials having sample collection swabs coupled to an associated cap of the vial.

### SUMMARY

The following presents a simplified summary in order to provide a basic understanding of some aspects described herein. This summary is not an extensive overview of the claimed subject matter. It is intended to neither identify key or critical elements of the claimed subject matter nor delineate the scope thereof. Its sole purpose is to present some concepts in a simplified form as a prelude to the more detailed description that is presented later.

Implementations of the disclosure can be described in view of the following embodiments, the features of which can be combined in any reasonable manner.

Embodiment 1 is a method for processing a first input vial and a second input vial with a processing station, wherein each of the first and second input vials contains a fluid sample and comprises a cap removably secured to a container vessel and a sample collection swab extending from the cap, and wherein the processing station comprises an input vial holder, an output vial holder, a cap holder, a capper/decapper, and a pipettor, and the input vial holder, the output vial holder, and the cap holder are movable with respect to the capper/decapper and with respect to the pipettor, wherein the method comprises automatically: transporting the first input vial from an input rack to the input vial holder; transporting a first output vial to the output vial holder, wherein the first output vial includes a container vessel and a cap secured to the container vessel; moving the first input vial relative to the capper/decapper to place the first input vial at a capping/decapping position with respect to the capper/decapper; removing the cap from the container vessel of the first input vial with the capper/decapper and raising the cap relative to the container vessel with the capper/decapper to fully remove the sample collection swab from the container vessel of the first input vial; moving the container vessel of the first input vial relative to the pipettor to place the container vessel of the first input vial at a position that is accessible to the pipettor; removing an amount of fluid sample from the container vessel of the first input vial with the pipettor; moving the container vessel of the first input vial relative to the capper/decapper to place the container vessel of the first input vial at the capping/decapping position with respect to the capper/decapper; securing the cap to the container vessel of the first input vial with the capper/decapper; moving the first output vial relative to the capper/decapper to place the first output vial at the capping/decapping position with respect to the capper/decapper; removing the cap from the container vessel of the first output vial with the capper/decapper; moving the container vessel of the first output vial relative to the pipettor to place the container vessel of the first output vial at a position that is accessible to the pipettor; dispensing an amount of fluid sample into the container vessel of the first output vial with the pipettor; moving the container vessel of the first output vial relative to the capper/decapper to place the container vessel of the first output vial at the capping/decapping position with respect to the capper/decapper; securing the cap to the container vessel of the first output vial with the capper/decapper; transporting the first input vial from the input vial holder to the input rack and transporting the first output vial from the output vial holder to an output rack; transporting the second input vial from the input rack to the input vial holder; transporting a second output vial to the output vial holder, wherein the second output vial includes a container vessel and a cap secured to the container vessel; moving the second output vial with respect to the capper/decapper to place the first output vial in an operative position with respect to the capper/decapper; removing the cap from the container vessel of the second output vial with the capper/decapper; moving the cap holder relative to the capper/decapper to place the cap holder at a transfer position with respect to the capper/decapper; placing the cap removed from the container vessel of the second output vial onto the cap holder with the capper/decapper; moving the second input vial relative to the capper/decapper to place the second input vial at the capping/decapping position with respect to the capper/decapper; removing the cap from the container vessel of the second input vial with the capper/decapper and raising the cap relative to the container vessel with the capper/decapper to fully remove the sample collection swab from the container vessel of the second input vial; moving the container vessel of the second output vial relative to the capper/decapper to place the container vessel of the second output vial at the capping/decapping position with respect to the capper/decapper; securing the cap removed from the container vessel of the second input vial to the container vessel of the second output vial with the capper/decapper; moving the cap holder relative to the capper/decapper to place the cap holder at the transfer position with respect to the capper/decapper; grasping the cap held by the cap holder with the capper/decapper; moving the container vessel of the second input vial with respect to the capper/decapper to place the container vessel of the second input vial at the capping/decapping position with respect to the capper/decapper; securing the cap removed from the container vessel of the second output vial onto the container vessel of the second input vial with the capper/decapper; transporting the second input vial from the input vial holder to the output rack; and transporting the second output vial from the output vial holder to the input rack.

Embodiment 2 is a method for processing a first vial with a processing station, wherein the first vial contains a fluid sample and comprises a container vessel, a cap removably secured to the container vessel, and a sample collection swab coupled to the cap, wherein the processing station comprises a first vial holder, a second vial holder, a cap holder, and a capper/decapper, and wherein the method comprises automatically: (a) transporting the first vial to the first vial holder; (b) transporting a second vial to the second vial holder, the second vial comprising a container vessel and a cap removably secured to the container vessel; (c) removing the cap from the container vessel of the second vial with the capper/decapper; (d) placing the cap removed from the container vessel of the second vial in (c) onto the cap holder with the capper/decapper; (e) removing the cap and the sample collection swab from the container vessel of the first vial with the capper/decapper; (f) securing the cap removed from the container vessel of the first vial in (e), with the sample collection swab still coupled thereto, to the container vessel of the second vial with the capper/decapper; (g) removing the second vial from the second vial holder; (h) grasping the cap held by the cap holder with the capper/decapper; (i) securing the grasped cap to the container vessel of the first vial with the capper/decapper; and (j) removing the first vial from the first vial holder.

Embodiment 3 is the method of embodiment 2, wherein (a) comprises transporting the first vial from an input rack to the first vial holder, and the method further comprises, after (j), transporting the first vial to an output rack.

Embodiment 4 is the method of embodiment 3, wherein, prior to transporting the first vial to the output rack, the first vial is transported to an incubator to expose the first vial to an elevated temperature for a prescribed period of time.

Embodiment 5 is the method of embodiment 3 or 4, wherein (b) comprises transporting the second vial from the input rack to the second vial holder, and the method further comprises, after (g), transporting the second vial to the input rack.

Embodiment 6 is the method of embodiment 5, wherein the processing station comprises at least one pick and place robot, and wherein the first vial is transported from the input rack to the first vial holder by the at least one pick and place robot, the first vial is transported from the first vial holder to the output rack by the at least one pick and place robot, the second vial is transported from the input rack to the second vial holder by the at least one pick and place robot, and the second vial is transported from the second vial holder to the input rack by the at least one pick and place robot.

Embodiment 7 is the method of any one of embodiments 2 - 6, wherein the first vial holder, the cap holder, and the second vial holder are movable relative to the capper/decapper, and wherein: (c) comprises moving the second vial holder relative to the capper/decapper to place the second vial held in the second vial holder at a capping/decapping position with respect to the capper decapper, (d) comprises moving the cap holder relative to the capper/decapper to place the cap holder at a transfer position with respect to the capper decapper, (e) comprises moving the first vial holder relative to the capper/decapper to place the first vial held in the first vial holder at the capping/decapping position with respect to the capper decapper, (f) comprises moving the second vial holder relative to the capper/decapper to place the container vessel of the second vial held in the second vial holder at the capping/decapping position with respect to the capper decapper, (h) comprises moving the cap holder relative to the capper/decapper to place the cap held by the cap holder at the transfer position with respect to the capper decapper, and (i) comprises moving the first vial holder relative to the capper/decapper to place the container vessel of the first vial held in the first vial holder at the capping/decapping position with respect to the capper decapper.

Embodiment 8 is the method of any one of embodiments 2 to 7, wherein the processing station includes a movable drip shield, and wherein the method further comprises the step of moving the drip shield under the cap and the sample collection swab after (e) and before (f) and while moving the second vial holder and the container vessel of the second vial held by the second vial holder to the capping/decapping position with respect to the capper/decapper.

Embodiment 9 is the method of embodiment 8, wherein the method further comprises the step of moving the drip shield under the cap after (c) and before (d) while moving the cap holder to the transfer position with respect to the capper/decapper.

Embodiment 10 is the method of any one of embodiments 7 to 9, wherein the first vial holder is carried on a movable platform, and the capper/decapper is in a fixed position, and wherein moving the first vial holder relative to the capper/decapper to place the first vial held in the first vial holder in the capping/decapping position with respect to the capper/decapper comprises moving the movable platform until the first vial held in the first vial holder is disposed beneath the capper/decapper.

Embodiment 11 is the method of embodiment 10, wherein the movable platform comprises a carousel that is rotatable about a carousel axis of rotation, and wherein the first vial holder is radially spaced from the carousel axis of rotation, and the capper/decapper is spaced apart from the carousel axis of rotation by the same distance as the first vial holder.

Embodiment 12 is the method of embodiment 11, wherein the first vial holder is rotatable about a first vial holder axis of rotation, and the method further comprises rotating the first vial holder about the first vial holder axis of rotation as the carousel is rotated about the carousel axis of rotation such that the first vial holder is always in a predetermined orientation when the first vial or the container vessel of the first vial held by the first vial holder is in the capping/decapping position.

Embodiment 13 is the method of embodiment 10, wherein the second vial holder is carried on the movable platform and the capper/decapper is in a fixed position, and wherein moving the second vial holder relative to the capper/decapper to place the second vial held in the second vial holder at the capping/decapping position with respect to the capper/decapper comprises moving the movable platform until the second vial held in the second vial holder is disposed beneath the capper/decapper.

Embodiment 14 is the method of embodiment 13, wherein the movable platform comprises a carousel that is rotatable about a carousel axis of rotation, and wherein the second vial holder and the capper/decapper are radially spaced from the carousel axis of rotation by the same distance.

Embodiment 15 is the method of embodiment 14, wherein the second vial holder is rotatable about a second vial holder axis of rotation, and the method further comprises rotating the second vial holder about the second vial holder axis of rotation as the carousel is rotated about the carousel axis of rotation such that the second vial holder is always in a predetermined orientation when the second vial or the container vessel of the second vial held by the second vial holder is in the capping/decapping position

Embodiment 16 is the method embodiment 10, wherein the cap holder is carried on the movable platform, and the capper/decapper is in a fixed position, and wherein moving the cap holder relative to the capper/decapper to place the cap holder at the transfer position with respect to the capper/decapper comprises moving the movable platform until the cap holder is disposed beneath the capper/decapper.

Embodiment 17 is the method of embodiment 16, wherein the movable platform comprises a carousel that is rotatable about a carousel axis of rotation and wherein the cap holder and the capper/decapper are radially spaced from the carousel axis of rotation by the same distance.

Embodiment 18 is the method of embodiment 17, wherein the cap holder is rotatable about a cap holder axis of rotation, and the method further comprises rotating the cap holder about the cap holder axis of rotation as the carousel is rotated about the carousel axis of rotation such that the cap holder is always in a predetermined orientation when the cap holder or a cap carried on the cap holder is in the transfer position.

Embodiment 19 is the method of embodiment 2 to 6, wherein, the first vial holder, the second vial holder, and the cap holder are carried on a movable platform, and the capper/decapper is in a fixed position, and wherein: moving the first vial holder relative to the capper/decapper to place the first vial held in the first vial holder or the container vessel of the first vial held in the first vial holder at the capping/decapping position with respect to the capper/decapper comprises moving the movable platform until the first vial held in the first vial holder or the container vessel of the first vial held in the first vial holder is disposed beneath the capper/decapper; moving the second vial holder relative to the capper/decapper to place the second vial held in the second vial holder or the container vessel of the second vial held in the second vial holder at the capping/decapping position with respect to the capper/decapper comprises moving the movable platform until the second vial held in the second vial holder or the container vessel of the second vial held in the second vial holder is disposed beneath the capper/decapper; and moving the cap holder relative to the capper/decapper to place the cap holder or the cap held on the cap holder at the transfer position with respect to the capper/decapper comprises moving the movable platform until the cap holder or the cap held on the cap holder is disposed beneath the capper/decapper.

Embodiment 20 is the method of embodiment 19, further comprising: after (e), moving a drip shield under the cap and the sample collection swab removed in (e), and, before (f), moving the drip shield away from the cap and the sample collection swab; and after (c), moving the drip shield under the cap removed in (c), and, before (d), moving the drip shield away from the cap.

Embodiment 21 is the method of embodiment 19 or 20, wherein the movable platform comprises a carousel that is rotatable about a carousel axis of rotation, and wherein the first vial holder, the second vial holder, and the cap holder are radially spaced from the carousel axis of rotation by the same distance, and the capper/decapper is spaced apart from the carousel axis of rotation by the same distance as the first vial holder, the second vial holder, and the cap holder.

Embodiment 22 is a method for processing an input vial with a processing station, wherein the input vial contains a fluid sample and comprises a cap removably secured to a container vessel and a sample collection swab coupled to the cap, and wherein the processing station comprises an input vial holder, an output vial holder, a capper/decapper, and a pipettor, and wherein the method comprises automatically: (a) transporting the input vial to the input vial holder; (b) transporting an output vial to the output vial holder; (c) removing the cap and the sample collection swab from the container vessel of the input vial with the capper/decapper; (d) removing an amount of the fluid sample from the container vessel of the input vial with the pipettor; (e) securing the cap removed in (c), with the sample collection swab still coupled to the cap, to the container vessel of the input vial with the capper/decapper; (f) after (e), removing the input vial from the input vial holder; (g) removing a cap from a container vessel of the output vial with the capper/decapper; (h) dispensing an amount of the fluid sample removed in (d) into the container vessel of the output vial with the pipettor; (i) securing the cap removed in (g) to the container vessel of the output vial with the capper/decapper; and (j) after (i), removing the output vial from the output vial holder.

Embodiment 23 is the method of embodiment 22, wherein (a) comprises transporting the input vial from an input rack to the input vial holder, and the method further comprises, after (f), transporting the input vial to the input rack.

Embodiment 24 is the method of embodiment 23, wherein (b) comprises transporting the output vial from the input rack to the output vial holder.

Embodiment 25 is the method of embodiment 24, wherein the processing station comprises at least one pick and place robot, and wherein the input vial is transported from the input rack to the input vial holder, the output vial is transported from the input rack to the output vial holder, and the input vial is transported from the input vial holder to the input rack by the at least one pick and place robot.

Embodiment 26 is the method of any one of embodiments 22-24, wherein (j) comprises transporting the output vial from the output vial holder to an output rack.

Embodiment 27 is the method of embodiment 26, wherein (j) comprises transporting the output vial from the output vial holder to an incubator to expose the output vial to an elevated temperature for a prescribed period of time.

Embodiment 28 is the method of any one of embodiments 22-27, wherein: the input vial holder is movable relative to the capper/decapper, and (c) comprises moving the input vial holder relative to the capper/decapper to place the input vial held in the input vial holder at the capping/decapping position with respect to the capper/decapper, and (e) comprises moving the input vial holder relative to the capper/decapper to place the container vessel of the input vial held in the input vial holder at the capping/decapping position with respect to the capper/decapper; the input vial holder is movable relative to the pipettor, and (d) comprises moving the input vial holder to place the container vessel of the input vial at a pipetting position with respect to the pipettor; the output vial holder is movable relative to the capper/decapper, and (g) comprises moving the output vial holder relative to the capper/decapper to place the output vial in the capping/decapping position with respect to the capper/decapper, and (g) and (i) comprise moving the output vial holder relative to the capper/decapper to place the container vessel of the output vial in the capping/decapping position with respect to the capper/decapper; and the output vial holder is movable relative to the pipettor, and (h) comprises moving the output vial holder to place the container vessel of the output vial at the pipetting position with respect to the pipettor.

Embodiment 29 is the method of embodiment 28, wherein the input vial holder is positioned on a movable platform, and the capper/decapper is in a fixed position, and wherein: moving the input vial holder relative to the capper/decapper to place the input vial or the container vessel of the input vial held in the input vial holder in the capping/decapping position with respect to the capper/decapper comprises moving the movable platform until the input vial or the container vessel of the input vial held in the input vial holder is disposed beneath the capper/decapper, and moving the input vial holder to place the input vial at the pipetting position comprises moving the movable platform until the container vessel of the input vial held in the input vial holder is disposed at the pipetting position.

Embodiment 30 is the method of embodiment 29, further comprising, after (c), moving a drip shield under the cap and the sample collection swab removed in (c), and, before (e), moving the drip shield away from the cap and the sample collection swab.

Embodiment 31 is the method of embodiment 29 or 30, wherein the movable platform comprises a carousel that is rotatable about a carousel axis of rotation, and wherein the input vial holder is radially spaced from the carousel axis of rotation and the capper/decapper is radially spaced from the carousel axis of rotation by the same distance as the input vial holder.

Embodiment 32 is the method of any one of embodiments 28-31, wherein the pipettor is movable with respect to the input vial holder, and (d) further comprises moving the pipettor to the pipetting position after the container vessel of the input vial held in the input vial holder has been moved to the pipetting position.

Embodiment 33 is the method of embodiment 28, wherein the output vial holder is supported on a movable platform and the capper/decapper is in a fixed position, and wherein: moving the output vial holder relative to the capper/decapper to place the output vial or the container vessel of the output vial held in the output vial holder in the capping/decapping position with respect to the capper/decapper comprises moving the movable platform until the output vial or the container vessel of the output vial held in the output vial holder is disposed beneath the capper/decapper, and moving the output vial holder to place the output vial at the pipetting position comprises moving the movable platform until the container vessel of the output vial held in the output vial holder is disposed at the pipetting position.

Embodiment 34 is the method of embodiment 33, further comprising, after (g), moving a drip shield under the cap removed in (g), and, before (i), moving the drip shield away from the cap.

Embodiment 35 is the method of embodiment 33 or 34, wherein the movable platform comprises a carousel that is rotatable about a carousel axis of rotation and wherein the output vial holder is radially spaced from the carousel axis of rotation and the capper/decapper is radially spaced from the carousel axis of rotation by the same distance as the output vial holder.

Embodiment 36 is the method of any one of embodiments 28-35, wherein the pipettor is movable with respect to the output vial holder, and (h) further comprises moving the pipettor to the pipetting position after the container vessel of the output vial held in the output vial holder has been moved to the pipetting position.

Embodiment 37 is the method of embodiment 28, wherein, the input vial holder and the output vial holder are positioned on a movable platform, and the capper/decapper is in a fixed position, and wherein: moving the input vial holder with respect to the capper/decapper to place the input vial or the container vessel of the input vial held in the input vial holder in the capping/decapping position with respect to the capper/decapper comprises moving the movable platform until the input vial or the container vessel of the input vial held in the input vial holder is disposed beneath the capper/decapper, moving the input vial holder to place the input vial at the pipetting position comprises moving the movable platform until the container vessel of the input vial held in the input vial holder is disposed at the pipetting position; moving the output vial holder with respect to the capper/decapper to place the output vial or the container vessel of the output vial held in the output vial holder in the capping/decapping position with respect to the capper/decapper comprises moving the movable platform until the output vial or the container vessel of the output vial held in the output vial holder is disposed beneath the capper/decapper; and moving the output vial holder to place the output vial at the pipetting position comprises moving the movable platform until the container vessel of the output vial held in the output vial holder is disposed at the pipetting position.

Embodiment 38 is the method of embodiment 37, further comprising: after (c), moving a drip shield under the cap and the sample collection swab removed in (c), and, before (e), moving the drip shield away from the cap and the sample collection swab; and after (g), moving the drip shield under the cap removed in (g), and, before (i), moving the drip shield away from the cap.

Embodiment 39 is the method of embodiment 37 or 38, wherein the movable platform comprises a carousel that is rotatable about a carousel axis of rotation, and wherein the input vial holder and the output vial holder are radially spaced from the carousel axis of rotation by the same distance, and the capper/decapper is radially spaced from the carousel axis of rotation by the same distance as the input vial holder and the output vial holder.

Embodiment 40 is the method of any one of embodiments 37-39, wherein the pipettor is movable with respect to the input vial holder and with respect to the output vial holder, and wherein: (d) further comprises moving the pipettor to the pipetting position after the container vessel of the input vial held in the input vial holder has been moved to the pipetting position, and (h) further comprises moving the pipettor to the pipetting position after the container vessel of the output vial held in the output vial holder has been moved to the pipetting position.

Embodiment 41 is a method for processing a first input vial and a second input vial with a processing station, wherein each input vial contains a fluid sample and comprises a cap removably secured to a container vessel and a sample collection swab coupled to the cap, and wherein the processing station comprises an input vial holder, an output vial holder, a cap holder, a capper/decapper, and a pipettor, and wherein the method comprises automatically: (a) transporting the first input vial to the input vial holder; (b) transporting a first output vial to the output vial holder; (c) removing the cap and the sample collection swab coupled thereto from the container vessel of the first input vial with the capper/decapper; (d) removing an amount of the fluid sample from the container vessel of the first input vial with the pipettor; (e) securing the cap removed in (c), with the sample collection swab still coupled thereto, to the container vessel of the first input vial with the capper/decapper; (f) after (e), removing the first input vial from the input vial holder; (g) removing a cap from a container vessel of the first output vial with the capper/decapper; (h) dispensing an amount of the fluid sample removed in (d) into the container vessel of the first output vial with the pipettor; (i) securing the cap removed in (g) to the container vessel of the first output vial with the capper/decapper; (j) after (i), removing the first output vial from the output vial holder; (k) transporting the second input vial to the input vial holder; (1) transporting a second output vial to the output vial holder; (m) removing a cap from a container vessel of the second output vial with the capper/decapper; (n) placing the cap removed from the container vessel of the second output vial in (m) onto the cap holder with the capper/decapper; (o) removing the cap and the sample collection swab coupled thereto from the container vessel of the second input vial with the capper/decapper; (p) securing the cap removed from the container vessel of the second input vial in (o), with the sample collection swab still coupled thereto, to the container vessel of the second output vial with the capper/decapper; (q) removing the second output vial from the output vial holder; (r) grasping the cap held by the cap holder with the capper/decapper; (s) securing the grasped cap to the container vessel of the second input vial with the capper/decapper; and (t) removing the second input vial from the input vial holder.

Embodiment 42 is the method of embodiment 41, wherein (a) comprises transporting the first input vial from an input rack to the input vial holder, and the method further comprises, after (f), transporting the first input vial to the input rack.

Embodiment 43 is the method of embodiment 41 or 42, wherein (k) comprises transporting the second input vial from an input rack to the input vial holder, and the method further comprises, after (q), transporting the second output vial to the input rack.

Embodiment 44 is the method of embodiment 41, wherein (j) comprises transporting the first output vial from the output vial holder to an output rack, and (t) comprises transporting the second input vial from the input vial holder to an output rack.

Embodiment 45 is the method of embodiment 44, wherein (j) comprises transporting the first output vial from the output vial holder to an incubator to expose the first output vial to an elevated temperature for a prescribed period of time before the first output vial is transported to the output rack, and/or (t) comprises transporting the second input vial from the output vial holder to the incubator to expose the second output vial to an elevated temperature for a prescribed period of time before the second output vial is transported to the output rack.

Embodiment 46 is the method of embodiment 45, wherein the first output vial is transported to the same output rack in (j) that the second input vial is transported to in (t).

Embodiment 47 is the method of any one of embodiments 41-46, wherein: the input vial holder is movable with respect to the capper/decapper, and (c) comprises moving the input vial holder with respect to the capper/decapper to place the first input vial held in the input vial holder at a capping/decapping position with respect to the capper/decapper, (e) comprises moving the input vial holder with respect to the capper/decapper to place the container vessel of the first input vial held in the input vial holder at the capping/decapping position with respect to the capper/decapper, (o) comprises moving the input vial holder with respect to the capper/decapper to place the second input vial held in the input vial holder at the capping/decapping position with respect to the capper/decapper, and (s) comprises moving the input vial holder with respect to the capper/decapper to place the container vessel of the second input vial held in the input vial holder at the capping/decapping position with respect to the capper/decapper; the input vial holder is movable with respect to the pipettor, and (d) comprises moving the input vial holder to place the container vessel of the first input vial held in the input vial holder at a pipetting position with respect to the pipettor; the output vial holder is movable with respect to the capper/decapper, and (g) comprises moving the output vial holder with respect to the capper/decapper to place the first output vial held in the output vial holder at the capping/decapping position with respect to the capper/decapper, (i) comprises moving the output vial holder with respect to the capper/decapper to place the container vessel of the first output vial held in the output vial holder at the capping/decapping position with respect to the capper/decapper, (m) comprises moving the output vial holder with respect to the capper/decapper to place the second output vial at the capping/decapping position with respect to the capper/decapper, and (p) comprise moving the output vial holder with respect to the capper/decapper to place the container vessel of the second output vial at the capping/decapping position with respect to the capper/decapper; the output vial holder is movable with respect to the pipettor, and (h) comprises moving the output vial holder to place the container vessel of the first output vial held in the output vial holder at the pipetting position; and the cap holder is movable with respect to the capper/decapper, and (n) and (r) comprise moving the cap holder with respect to the capper/decapper to place the cap holder at a transfer position with respect to the capper/decapper.

Embodiment 48 is the method of embodiment 47, wherein the input vial holder is carried on a movable platform, and the capper/decapper is in a fixed position, and wherein: moving the input vial holder with respect to the capper/decapper to place the first or second input vial or the container vessel of the first or second input vial held in the input vial holder at the capping/decapping position with respect to the capper/decapper comprises moving the movable platform until the first or second input vial or the container vessel of the first or second input vial held in the input vial holder is disposed beneath the capper/decapper, and moving the input vial holder to place the container vessel of the first input vial held in the input vial holder at the pipetting position comprises moving the movable platform until the container vessel of the first input vial held in the input vial holder is disposed at the pipetting position.

Embodiment 49 is the method of embodiment 48, further comprising, after (c), moving a drip shield under the cap and the sample collection swab coupled thereto held in the capper/decapper, and, before (e), moving the drip shield away from the cap and the sample collection swab coupled thereto.

Embodiment 50 is the method of embodiment 48 or 49, wherein the movable platform comprises a carousel that is rotatable about an axis of rotation and the input vial holder and the capper/decapper are radially spaced from the axis of rotation, and wherein moving the movable platform comprises rotating the carousel about its axis of rotation.

Embodiment 51 is the method of embodiment 50, wherein the input vial holder is rotatable about an axis of rotation, and the method further comprises rotating the input vial holder about its axis of rotation as the carousel is rotated about its axis of rotation such that the input vial holder is always in a predetermined orientation when the first or second input vial or the container vessel of the first or second input vial held by the input vial holder is in the capping/decapping position.

Embodiment 52 is the method of any one of embodiments 47-50, wherein the pipettor is movable with respect to the input vial holder, and (d) further comprises moving the pipettor to the pipetting position after the container vessel of the first input vial held in the input vial holder has been placed at the pipetting position.

Embodiment 53 is the method of embodiment 47, wherein the output vial holder is carried on a movable platform and the capper/decapper is in a fixed position, and wherein: moving the output vial holder with respect to the capper/decapper to place the first or second output vial or the container vessel of the first or second output vial held in the output vial holder at the capping/decapping position with respect to the capper/decapper comprises moving the movable platform until the first or second output vial or the container vessel of the first or second output vial held in the output vial holder is disposed beneath the capper/decapper, and moving the output vial holder to place the container vessel of the first output vial held in the output vial holder at the pipetting position comprises moving the movable platform until the container vessel of the first output vial held in the output vial holder is disposed at the pipetting position.

Embodiment 54 is the method of embodiment 53, further comprising, after (g), moving a drip shield under the cap held in the capper/decapper, and, before (i), moving the drip shield away from the cap.

Embodiment 55 is the method of embodiment 53 or 54, wherein the movable platform comprises a carousel that is rotatable about an axis of rotation and the output vial holder and the capper/decapper are radially spaced from the axis of rotation, and wherein moving the movable platform comprises rotating the carousel about its axis of rotation.

Embodiment 56 is the method of embodiment 55, wherein the output vial holder is rotatable about an axis of rotation, and the method further comprises rotating the output vial holder about its axis of rotation as the carousel is rotated about its axis of rotation such that the output vial holder is always in a predetermined orientation when the first or second output vial or the container vessel of the first or second output vial held by the output vial holder is in the capping/decapping position.

Embodiment 57 is the method of any one of embodiments 47-56, wherein the pipettor is movable with respect to the output vial holder, and (h) further comprises moving the pipettor to the pipetting position after the container vessel of the first output vial held in the input vial holder has been placed at the pipetting position.

Embodiment 58 is the method of embodiment 57, wherein the cap holder is carried on a movable platform, and the capper/decapper is in a fixed position, and wherein moving the cap holder with respect to the capper/decapper to place the cap holder at the transfer position with respect to the capper/decapper comprises moving the movable platform until the cap holder is disposed beneath the capper/decapper.

Embodiment 59 is the of embodiment 58, wherein the movable platform comprises a carousel that is rotatable about an axis of rotation, wherein the cap holder and the capper/decapper are radially spaced from the axis of rotation, and wherein moving the movable platform comprises rotating the carousel about its axis of rotation.

Embodiment 60 is the method of embodiment 59, wherein the cap holder is rotatable about an axis of rotation, and the method further comprises rotating the cap holder about its axis of rotation as the carousel is rotated about its axis of rotation, such that the cap holder is always in a predetermined orientation when the cap holder is in the transfer position.

Embodiment 61 is the method of embodiment 47, wherein the input vial holder, the output vial holder, and the cap holder are carried on a movable platform, and the capper/decapper is in a fixed position, and wherein: moving the input vial holder with respect to the capper/decapper to place the first or second input vial or the container vessel of the first or second input vial held in the input vial holder at the capping/decapping position with respect to the capper/decapper comprises moving the movable platform until the first or second input vial or the container vessel of the first or second input vial held in the input vial holder is disposed beneath the capper/decapper, moving the input vial holder to place the first input vial held in the input vial holder at the pipetting position comprises moving the movable platform until the container vessel of the first input vial held in the input vial holder is disposed at the pipetting position; moving the output vial holder with respect to the capper/decapper to place the first or second output vial or the container vessel of the first or second output vial held in the output vial holder at the capping/decapping position with respect to the capper/decapper comprises moving the movable platform until the first or second output vial or the container vessel of the first or second output vial held in the output vial holder is disposed beneath the capper/decapper, moving the output vial holder to place the container vessel of the first output vial held in the output vial holder at the pipetting position comprises moving the movable platform until the container vessel of the first output vial held in the output vial holder is disposed at the pipetting position; and moving the cap holder with respect to the capper/decapper to place the cap holder at the transfer position with respect to the capper/decapper comprises moving the movable platform until the cap holder is disposed beneath the capping/decapping.

Embodiment 62 is the method of embodiment 61, further comprising: after (c), moving a drip shield under the cap and the sample collection swab coupled thereto held in the capper/decapper, and, before (e), moving the drip shield away from the cap and the sample collection swab coupled thereto; and after (g), moving the drip shield under the cap held in the capper/decapper, and, before (i), moving the drip shield away from the cap.

Embodiment 63 is the method of embodiment 61 or 62, wherein the movable platform comprises a carousel that is rotatable about an axis of rotation, and the input vial holder, the output vial holder, the cap holder, and the capper/decapper are radially spaced from the axis of rotation, and wherein moving the movable platform comprises rotating the carousel about its axis of rotation.

Embodiment 64 is the method of embodiment 63, wherein the input vial holder is rotatable about an axis of rotation, the output vial holder is rotatable about an axis of rotation, and the cap holder is rotatable about an axis of rotation, and the method further comprises: rotating the input vial holder about its axis of rotation as the carousel is rotated about its axis of rotation such that the input vial holder is always in a predetermined orientation when the first or second input vial or the container vessel of the first or second input vial held by the input vial holder is in the capping/decapping position; rotating the output vial holder about its axis of rotation as the carousel is rotated about its axis of rotation such that the output vial holder is always in a predetermined orientation when the first or second output vial or the container vessel of the first or second output vial held by the output vial holder is in the capping/decapping position; and rotating the cap holder about its axis of rotation as the carousel is rotated about its axis of rotation such that the cap holder is always in a predetermined orientation when the cap holder is in the transfer position.

Embodiment 65 is the method of any one of embodiments 61-64, wherein the pipettor is movable with respect to the input vial holder and the output vial holder, and wherein: (d) comprises moving the pipettor to the pipetting position after the container vessel of the first input vial held in the input vial holder has been placed at the pipetting position, and (h) comprises moving the pipettor to the pipetting position after the container vessel of the first output vial held in the output vial holder has been placed at the pipetting position.

Embodiment 66 is a system for processing a first input vial and a second input vial, wherein each input vial contains a fluid sample and comprises a cap removably secured to a container vessel and a sample collection swab coupled to the cap, and wherein the system comprises: an input vial holder; an output vial holder; a cap holder; at least one pick and place robot; a capper/decapper; a pipettor; and a system controller in communication with the at least one pick and place robot, the capper/decapper, and the pipettor, and wherein the system controller is programmed to execute the following functions: (A) activate the at least one pick and place robot to transport the first input vial to the input vial holder; (B) activate the at least one pick and place robot to transport a first output vial to the output vial holder; (C) activate the capper/decapper to remove the cap and the sample collection swab coupled thereto from the container vessel of the first input vial held in the input vial holder; (D) after executing function (C), activate the pipettor to remove an amount of the fluid sample from the container vessel of the first input vial; (E) after executing function (D), activate the capper/decapper to secure the cap, with the sample collection swab still coupled thereto, to the container vessel of the first input vial held in the input vial holder; (F) after executing function (E), activate the at least one pick and place robot to remove the first input vial from the input vial holder; (G) after executing function (E), activate the capper/decapper to remove a cap from a container vessel of the first output vial held in the output vial holder; (H) after executing function (G), activate the pipettor to dispense an amount of the fluid sample removed from the container vessel of the first input vial into the container vessel of the first output vial; (I) after executing function (H), activate the capper/decapper to secure the cap to the container vessel of the first output vial; (J) after executing function (I), activate the at least one pick and place robot to remove the first output vial from the output vial holder; (K) after executing function (F), activate the at least one pick and place robot to transport the second input vial to the input vial holder; (L) after executing function (J), activate the at least one pick and place robot to transport a second output vial to the output vial holder; (M) activate the capper/decapper to remove a cap from a container vessel of the second output vial held in the output vial holder; (N) after executing function (M), activate the capper/decapper to place the cap removed from the container vessel of the second output vial onto the cap holder; (O) after executing function (N), activate the capper/decapper to remove the cap and the sample collection swab coupled thereto from the container vessel of the second input vial held in the input vial holder; (P) after executing function (O), activate the capper/decapper to secure the cap removed from the container vessel of the second input vial, with the sample collection swab still coupled thereto, to the container vessel of the second output vial; (Q) after executing function (P), activate the at least one pick and place robot to remove the second output vial from the output vial holder; (R) after executing function (P), activate the capper/decapper to grasp the cap held by the cap holder; (S) after executing function (R), activate the capper/decapper to secure the cap to the container vessel of the second input vial held in the input vial holder; and (T) after executing function (S), activate the at least one pick and place robot to remove the second input vial from the input vial holder.

Embodiment 67 is the system of embodiment 66, wherein the same pick and place robot is activated to perform each of functions (A), (B), (F), (J), (K), (L), (Q), and (T).

Embodiment 68 is the system of embodiment 66 or 67, further comprising an input rack and wherein function (A) comprises activating the at least one pick and place robot to transport the first input vial from the input rack to the input vial holder and function (F) comprises activating the at least one pick and place robot to transfer the first input vial to the input rack after removing the first input vial from the input vial holder.

Embodiment 69 is the system of embodiment 66 or 67, further comprising an input rack and wherein function (K) comprises activating the at least one pick and place robot to transport the second input vial from the input rack to the input vial holder and function (Q) comprises activating the at least one pick and place robot to transport the second output vial to the input rack after removing the second output vial from the output vial holder.

Embodiment 70 is the system of embodiment 68 or 69, wherein the input rack comprises a body having a handle at one end thereof and wherein the body includes a plurality of vial receptacles arranged in two rows, each vial receptacle of one row being associated with one vial receptacle of the other row; wherein each vial receptacle of one row is longitudinally offset from the associated vial receptacle of the other row and wherein adjacent vial receptacles of one row are laterally offset from one another.

Embodiment 71 is the system of any one of embodiments 66-70, further comprising at least one output rack and wherein function (J) comprises activating the at least one pick and place robot to transport the first output vial from the output vial holder to one of the at least one output rack and function (T) comprises activating the at least one pick and place robot to transport the second input vial from the input vial holder to one of the at least one output rack.

Embodiment 72 is the system of embodiment 71, further comprising an incubator, and wherein function (J) comprises activating the at least one pick and place robot to transport the first output vial from the output vial holder to the incubator to expose the first output vial to an elevated temperature for a prescribed period of time before transporting the first output vial to the one of the at least one output rack and/or function (T) comprises activating the at least one pick and place robot to transport the second input vial from the input vial holder to the incubator to expose the second input vial to an elevated temperature for a prescribed period of time before transporting the second output vial to the one of the at least one output rack.

Embodiment 73 is the system of any one of embodiments 66-72, wherein the input vial holder is movable relative to the capper/decapper, and wherein the system controller is programmed to: automatically move the input vial holder relative to the capper/decapper to place the first input vial held by the input vial holder at a capping/decapping position with respect to the capper/decapper before executing function (C) and to place the container vessel of the first input vial held by the input vial holder at the capping/decapping position with respect to the capper/decapper before executing function (E), and automatically move the input vial holder relative to the capper/decapper to place the second input vial held by the input vial holder at the capping/decapping position with respect to the capper/decapper before executing function (O) and to place the container vessel of the second input vial held by the input vial holder at the capping/decapping position with respect to the capper/decapper before executing function (S).

Embodiment 74 is the system of embodiment 73, further comprising a movable platform on which the input vial holder is positioned and wherein the capper/decapper is in a fixed position.

Embodiment 75 is the system of embodiment 74, wherein the movable platform comprises a carousel that is rotatable about a carousel axis of rotation, and wherein the input vial holder and the capper/decapper are radially spaced from the carousel axis of rotation.

Embodiment 76 is the system of embodiment 75, wherein the input vial holder is rotatable about an input vial holder axis of rotation and is configured to rotate about the input vial holder axis of rotation as the carousel rotates about the carousel axis of rotation such that the input vial holder is always in a predetermined orientation when the first or second input vial or the container vessel of the first or second input vial held by the input vial holder is in the capping/decapping position.

Embodiment 77 is the system of embodiment 76, further comprising a planetary gear arrangement configured to couple rotation of the input vial holder with rotation of the carousel.

Embodiment 78 is the system of any one of embodiments 66-73, wherein the input vial holder is movable with respect to the pipettor and the output vial holder is movable with respect to the pipettor, and wherein the system controller is programmed to: automatically move the input vial holder to place the container vessel of the first input vial held by the input vial holder at a pipetting position with respect to the pipettor before executing function (D), and automatically move the output vial holder to place the container vessel of the first output vial held by the output vial holder at the pipetting position with respect to the pipettor before executing function (H).

Embodiment 79 is the system of embodiment 78, further comprising a movable platform on which the input vial holder and the output vial holder are positioned.

Embodiment 80 is the system of embodiment 79, wherein the movable platform comprises a carousel that is rotatable about a carousel axis of rotation, and wherein the input vial holder and the output vial holder are radially spaced from the carousel axis of rotation.

Embodiment 81 is the system of any one of embodiments 66-73, wherein the output vial holder is movable relative to the capper/decapper, and wherein the system controller is programmed to: automatically move the output vial holder relative to the capper/decapper to place the first output vial held by the output vial holder at a capping/decapping position with respect to the capper/decapper before executing function (G) and to place the container vessel of the first output vial held by the output vial holder at a capping/decapping position with respect to the capper/decapper before executing function (I), and automatically move the output vial holder relative to the capper/decapper to place the second output vial held by the output vial holder at a capping/decapping position with respect to the capper/decapper before executing function (M) and to place the container vessel of the second output vial held by the output vial holder at a capping/decapping position with respect to the capper/decapper before executing function (P).

Embodiment 82 is the system of embodiment 81, further comprising a movable platform on which the output vial holder is positioned and wherein the capper/decapper is in a fixed position.

Embodiment 83 is the system of embodiment 82, wherein the movable platform comprises a carousel that is rotatable about a carousel axis of rotation, and wherein the output vial holder and the capper/decapper are radially spaced from the carousel axis of rotation.

Embodiment 84 is the system of embodiment 83, wherein the output vial holder is rotatable about an output vial holder axis of rotation and is configured to rotate about the output vial holder axis of rotation as the carousel rotates about carousel axis of rotation such that the output vial holder is always in a predetermined orientation when the first or second output vial or the container vessel of the first or second output vial held by the output vial holder is in the capping/decapping position.

Embodiment 85 is the system of embodiment 84, further comprising a planetary gear arrangement configured to couple rotation of the output vial holder with rotation of the carousel.

Embodiment 86 is the system of any one of embodiments 78-80, wherein the pipettor is movable with respect to input vial holder and the output vial holder, and wherein the system controller is programmed to: move the pipettor to the pipetting position after the container vessel of the first input vial held by the input vial holder has been moved to the pipetting position and before executing function (D), and move the pipettor to the pipetting position after the container vessel of the first output vial held by the output vial holder has been moved to the pipetting position and before executing function (H).

Embodiment 87 is the system of any one of embodiments 66 to 86, further comprising a drip shield that is movable with respect to the capper/decapper between a first position and a second position, and wherein the system controller is programmed to: after executing function (C), move the drip shield to the first position under the cap and the sample collection swab coupled thereto, and, before executing function (E), move the drip shield to the second position away from the cap and the sample collection swab coupled thereto; and after executing function (G), move the drip shield to the first position under the cap, and, before executing function (I), move the drip shield to the second position away from the cap.

Embodiment 88 is the system of any one of embodiments 66 to 87, wherein the cap holder is movable relative to the capper/decapper, and wherein the system controller is programmed to automatically move the cap holder to a transfer position relative to the capper/decapper before executing function (N) and before executing function (R).

Embodiment 89 is the system of embodiment 88, further comprising a movable platform on which the cap holder is positioned, wherein the capper/decapper is in a fixed position.

Embodiment 90 is the system of embodiment 89, wherein the movable platform comprises a carousel that is rotatable about a carousel axis of rotation, and wherein the cap holder and the capper/decapper are radially spaced from the carousel axis of rotation.

Embodiment 91 is the system of embodiment 90, wherein the cap holder is rotatable about a cap holder axis of rotation and is configured to rotate about the cap holder axis of rotation as the carousel rotates about the carousel axis of rotation such that the cap holder is always in a predetermined orientation when at the transfer position.

Embodiment 92 is the system of embodiment 91, further comprising a planetary gear arrangement configured to couple rotation of the cap holder with rotation of the carousel.

Embodiment 93 is the system of any one of embodiments 66 to 92, wherein each of the input vial holder and the output vial holder comprises: a middle structure defining an open chamber within which a vial is received; and a first clamp and a second clamp, each clamp pivotably coupled to the middle structure on opposed sides of the open chamber, wherein each clamp includes a clamping surface that extends into the open chamber to contact a side of a vial disposed within the open chamber, and wherein each clamp includes an outer cam surface; and wherein the system further comprises: a closure bracket including a yoke configured to engage the outer cam surface of each of the first and second clamps when the capper/decapper is removing or securing a cap of the vial disposed within the open chamber, wherein engagement of the outer cam surfaces by the yolk urges the first and second clamps to pivot inwardly to increase contact pressure between the clamping surfaces of the first and second clamps and the sides of the vial disposed within the open chamber.

Embodiment 94 is a system for processing a first input vial and a second input vial, wherein each input vial contains a fluid sample and comprises a cap removably secured to a container vessel and a sample collection swab coupled to the cap, and wherein the system comprises: a control system; an input vial holder; an output vial holder; a cap holder; a vial transport mechanism controlled by the control system to transport the first input vial to the input vial holder; a vial transport mechanism controlled by the control system to transport a first output vial to the output vial holder; a capper/decapper controlled by the control system to remove the cap and the sample collection swab coupled thereto from the container vessel of the first input vial held in the input vial holder; and a pipettor controlled by the control system to remove an amount of the fluid sample from the container vessel of the first input vial held in the input vial holder after the cap and sample collection swab are removed from the container vessel of the first input vial; wherein the capper/decapper is controlled by the control system to secure the cap, with the sample collection swab still coupled thereto, to the container vessel of the first input vial after the amount of fluid sample is removed from the container vessel of the first input vial; wherein the vial transport mechanism is controlled by the control system to remove the first input vial from the input vial holder after the cap is secured to the container vessel of the first input vial; wherein the capper/decapper is controlled by the control system to remove a cap from a container vessel of the first output vial held in the output vial holder; wherein the pipettor is controlled by the control system to dispense an amount of the fluid sample removed by the pipettor from the container vessel of the first input vial into the container vessel of the first output vial held in the output vial holder; wherein the capper/decapper is controlled by the control system to secure the cap to the container vessel of the first output vial after the pipettor dispenses an amount of the fluid sample into the container vessel of the first output vial; wherein the vial transport mechanism is controlled by the control system to remove the first output vial from the output vial holder after the capper/decapper secures the cap to the container vessel of the first output vial; wherein the vial transport mechanism is controlled by the control system to transport the second input vial to the input vial holder after removing the first input vial from the input vial holder; wherein the vial transport mechanism is controlled by the control system to transport a second output vial to the output vial holder after removing the first output vial from the output vial holder; wherein the capper/decapper is controlled by the control system to remove a cap from a container vessel of the second output vial held in the output vial holder; wherein the capper/decapper is controlled by the control system to place the cap removed from the container vessel of the second output vial onto the cap holder; wherein the capper/decapper is controlled by the control system to remove the cap and the sample collection swab coupled thereto from the container vessel of the second input vial held in the input vial holder; wherein the capper/decapper is controlled by the control system to secure the cap removed from the container vessel of the second input vial, with the sample collection swab still coupled thereto, to the container vessel of the second output vial; wherein the vial transport mechanism is controlled by the control system to remove the second output vial from the output vial holder after the capper/decapper secures the cap and the sample collection swab coupled thereto to the container vessel of the second output vial; wherein the capper/decapper is controlled by the control system to grasp the cap held by the cap holder; wherein the capper/decapper is controlled by the control system to secure the cap to the container vessel of the second input vial; and wherein the vial transport mechanism is controlled by the control system to remove the second input vial from the input vial holder after the capper/decapper secures the cap to the container vessel of the second input vial.

Embodiment 95 is a system for processing a first vial with a processing station, wherein the first vial contains a fluid sample and comprises a container vessel, a cap removably secured to the container vessel, and a sample collection swab coupled to the cap, and wherein the system comprises: a first vial holder; a second vial holder; a cap holder; at least one pick and place robot; a capper/decapper; and a controller in communication with the at least one pick and place robot and the capper/decapper, and wherein the controller is programmed to execute the following functions: (A) activate the at least one pick and place robot to transport the first vial to the first vial holder; (B) activate the at least one pick and place robot to transport a second vial to the second vial holder; (C) activate the capper/decapper to remove a cap from a container vessel of the second vial held in the second vial holder; (D) after executing function (C), activate the capper/decapper to place the cap removed from the container vessel of the second vial onto the cap holder; (E) after executing function (D), activate the capper/decapper to remove the cap and the sample collection swab coupled thereto from the container vessel of the first vial held in the first vial holder; (F) after executing function (E), activate the capper/decapper to secure the cap removed from the container vessel of the first vial, with the sample collection swab still coupled thereto, to the container vessel of the second vial; (G) after executing function (F), activate the at least one pick and place robot to remove the second vial from the second vial holder; (H) after executing function (F), activate the capper/decapper to grasp the cap held by the cap holder; (I) after executing function (H), activate the capper/decapper to secure the cap to the container vessel of the first vial held in the first vial holder; and (J) after executing function (I), activate the at least one pick and place robot to remove the first vial from the first vial holder.

Embodiment 96 is the system of embodiment 95, wherein the same pick and place robot is activated to perform each of functions (A), (B), (G), and (J).

Embodiment 97 is the system of embodiment 95 or 96, further comprising an input rack, wherein function (A) comprises activating the at least one pick and place robot to transport the first vial from the input rack to the first vial holder, and wherein function (G) comprises activating the at least one pick and place robot to transport the second vial to the input rack after removing the second vial from the second vial holder.

Embodiment 98 is the system of embodiment 97, wherein the input rack comprises a body having a handle at one end thereof, and wherein the body includes a plurality of vial receptacles arranged in two rows, each vial receptacle of one row being associated with one vial receptacle of the other row; wherein each vial receptacle of one row is longitudinally offset from the associated vial receptacle of the other row, and wherein adjacent vial receptacles of one row are laterally offset from one another.

Embodiment 99 is the system of any one of embodiments 95-98, further comprising an output rack, wherein function (J) comprises activating the at least one pick and place robot to transport the first vial from the first vial holder to the output rack.

Embodiment 100 is the system of embodiment 99, further comprising an incubator, and wherein function (J) comprises activating the at least one pick and place robot to transport the first vial from the first vial holder to the incubator to expose the first vial to an elevated temperature for a prescribed period of time before transporting the first vial to the output rack.

Embodiment 101 is the system of any one of embodiments 95-100, wherein the first vial holder is movable relative to the capper/decapper, and wherein the controller is programmed to: automatically move the first vial holder relative to the capper/decapper to place the first vial held by the first vial holder at a capping/decapping position with respect to the capper/decapper before executing function (E) and to place the container vessel of the first vial held by the first vial holder at the capping/decapping position with respect to the capper/decapper before executing function (I).

Embodiment 102 is the system of embodiment 101, further comprising a movable platform on which the first vial holder is positioned, wherein the capper/decapper is in a fixed position.

Embodiment 103 is the system of embodiment 102, wherein the movable platform comprises a carousel that is rotatable about a carousel axis of rotation, and wherein the first vial holder and the capper/decapper are radially spaced from the carousel axis of rotation.

Embodiment 104 is the system of embodiment 103, wherein the first vial holder is rotatable about a first vial holder axis of rotation and is configured to rotate about the first vial holder axis of rotation as the carousel rotates about the carousel axis of rotation, such that the first vial holder is always in a predetermined orientation when the first vial or the container vessel of the first vial held by the first vial holder is in the capping/decapping position.

Embodiment 105 is the system of embodiment 104, further comprising a planetary gear arrangement configured to couple rotation of the first vial holder with rotation of the carousel.

Embodiment 106 is the system of any one of embodiments 95-100, wherein the second vial holder is movable relative to the capper/decapper, and wherein the controller is programmed to: automatically move the second vial holder relative to the capper/decapper to place the second vial held by the second vial holder at a capping/decapping position with respect to the capper/decapper before executing function (C) and to place the container vessel of the second vial held by the second vial holder at the capping/decapping position with respect to the capper/decapper before executing function (F).

Embodiment 107 is the system of embodiment 106, further comprising a movable platform on which the second vial holder is positioned, wherein the capper/decapper is in a fixed position.

Embodiment 108 is the system of embodiment 107, wherein the movable platform comprises a carousel that is rotatable about a carousel axis of rotation, and wherein the second vial holder and the capper/decapper are radially spaced from the carousel axis of rotation.

Embodiment 109 is the system of embodiment 108, wherein the second vial holder is rotatable about a second vial holder axis of rotation and is configured to rotate about the second vial holder axis of rotation as the carousel rotates about the carousel axis of rotation, such that the second vial holder is always in a predetermined orientation when the second vial or the container vessel of the second vial held by the second vial holder is in the capping/decapping position.

Embodiment 110 is the system of embodiment 109, further comprising a planetary gear arrangement configured to couple rotation of the second vial holder with rotation of the carousel.

Embodiment 111 is the system of any one of embodiments 95 to 100, wherein the cap holder is movable relative to the capper/decapper, and wherein the controller is programmed to automatically move the cap holder to a transfer position relative to the capper/decapper before executing function (D) and before executing function (H).

Embodiment 112 is the system of embodiment 111, further comprising a movable platform on which the cap holder is positioned, wherein the capper/decapper is in a fixed position.

Embodiment 113 is the system of embodiment 112, wherein the movable platform comprises a carousel that is rotatable about a carousel axis of rotation, and wherein the cap holder and the capper/decapper are radially spaced from the carousel axis of rotation.

Embodiment 114 is the system of embodiment 113, wherein the cap holder is rotatable about a cap holder axis of rotation and is configured to rotate about the cap holder axis of rotation as the carousel rotates about the carousel axis of rotation, such that the cap holder is always in a predetermined orientation when at the transfer position.

Embodiment 115 is the system of embodiment 114, further comprising a planetary gear arrangement configured to couple rotation of the cap holder with rotation of the carousel.

Embodiment 116 is the system of any one of embodiments 95-100, wherein the first vial holder, the second vial holder, and the cap holder are movable relative to the capper/decapper, and wherein the controller is programmed to: move the first vial holder relative to the capper/decapper to place the first vial held by the first vial holder at a capping/decapping position with respect to the capper/decapper before executing function (E) and to place the container vessel of the first vial held by the first vial holder at the capping/decapping position with respect to the capper/decapper before executing function (I); move the second vial holder relative to the capper/decapper to place the second vial held by the second vial holder at a capping/decapping position with respect to the capper/decapper before executing function (C) and to place the container vessel of the second vial held by the second vial holder at the capping/decapping position with respect to the capper/decapper before executing function (F); and move the cap holder to a transfer position relative to the capper/decapper before executing function (D) and before executing function (H).

Embodiment 117 is the system of embodiment 116, further comprising a movable platform on which the first vial holder, the second vial holder, and the cap holder are positioned, wherein the capper/decapper is in a fixed position.

Embodiment 118 is the system of embodiment 117, wherein the movable platform comprises a carousel that is rotatable about a carousel axis of rotation, and wherein the first vial holder, the second vial holder, the cap holder, and the capper/decapper are radially spaced from the carousel axis of rotation.

Embodiment 119 is the system of embodiment 103, wherein the first vial holder is rotatable about a first vial holder axis of rotation and is configured to rotate about the first vial holder axis of rotation as the carousel rotates about the carousel axis of rotation, such that the first vial holder is always in a predetermined orientation when the first vial or the container vessel of the first vial held by the first vial holder is in the capping/decapping position, wherein the second vial holder is rotatable about a second vial holder axis of rotation and is configured to rotate about the second vial holder axis of rotation as the carousel rotates about the carousel axis of rotation, such that the second vial holder is always in a predetermined orientation when the second vial or the container vessel of the second vial held by the second vial holder is in the capping/decapping position; and wherein the cap holder is rotatable about a cap holder axis of rotation and is configured to rotate about the cap holder axis of rotation as the carousel rotates about the carousel axis of rotation, such that the cap holder is always in a predetermined orientation when at the transfer position.

Embodiment 120 is the system of embodiment 119, further comprising a planetary gear arrangement configured to couple rotation of the first vial holder, the second vial holder, and the cap holder with rotation of the carousel.

Embodiment 121 is the system of any one of embodiments 95 to 115, wherein each of the first vial holder and the second vial holder comprises: a middle structure defining an open chamber within which a vial is received; and a first clamp and a second clamp, each clamp pivotably coupled to the middle structure on opposed sides of the open chamber, wherein each clamp includes a clamping surface that extends into the open chamber to contact a side of a vial disposed within the open chamber, and wherein each clamp includes an outer cam surface; and wherein the system further comprises: a closure bracket including a yoke configured to engage the outer cam surface of each of the first and second clamps when the capper/decapper is removing or securing a cap of the vial disposed within the open chamber, and wherein engagement of the outer cam surfaces by the yolk urges the first and second clamps to pivot inwardly to increase contact pressure between the clamping surfaces of the first and second clamps and the sides of the vial disposed within the open chamber.

Embodiment 122 is a system for processing a first vial with a processing station, wherein the first vial contains a fluid sample and comprises a container vessel, a cap removably secured to the container vessel, and a sample collection swab coupled to the cap, and wherein the system comprises: a control system; a first vial holder; a second vial holder; a cap holder; a vial transport mechanism controlled by the control system to transport the first vial to the first vial holder; a vial transport mechanism controlled by the control system to transport a second vial to the second vial holder; and a capper/decapper controlled by the control system to remove a cap from a container vessel of the second vial held in the second vial holder; wherein the capper/decapper is controlled by the control system to place the cap removed from the container vessel of the second vial onto the cap holder; wherein the capper/decapper is controlled by the control system to remove the cap and the sample collection swab coupled thereto from the container vessel of the first vial held in the first vial holder; wherein the capper/decapper is controlled by the control system to secure the cap removed from the container vessel of the first vial, with the sample collection swab still coupled thereto, to the container vessel of the second vial; wherein the vial transport mechanism is controlled by the control system to remove the second vial from the second vial holder after the capper/decapper secures the cap and the sample collection swab coupled thereto to the container vessel of the second vial; wherein the capper/decapper is controlled by the control system to grasp the cap held by the cap holder; wherein the capper/decapper is controlled by the control system to secure the cap to the container vessel of the first vial; and wherein the vial transport mechanism is controlled by the control system to remove the first vial from the first vial holder after the capper/decapper secures the cap to the container vessel of the first vial.

Embodiment 123 is a system for processing an input vial, wherein the input vial contains a fluid sample and comprises a cap removably secured to a container vessel and a sample collection swab coupled to the cap, and wherein the system comprises: an input vial holder; an output vial holder; at least one pick and place robot; a capper/decapper; a pipettor; and a system controller in communication with the at least one pick and place robot, the capper/decapper, and the pipettor, wherein the system controller is programmed to execute the following functions: (A) activate the at least one pick and place robot to transport the input vial to the input vial holder; (B) activate the at least one pick and place robot to transport an output vial to the output vial holder; (C) activate the capper/decapper to remove the cap and the sample collection swab coupled thereto from the container vessel of the input vial held in the input vial holder; (D) after executing function (C), activate the pipettor to remove an amount of the fluid sample from the container vessel of the input vial; (E) after executing function (D), activate the capper/decapper to secure the cap, with the sample collection swab still coupled thereto, to the container vessel of the input vial held in the input vial holder; (F)after executing function (E), activate the at least one pick and place robot to remove the input vial from the input vial holder; (G) after executing function (E), activate the capper/decapper to remove a cap from a container vessel of the output vial held in the output vial holder; (H) after executing function (G), activate the pipettor to dispense an amount of the fluid sample removed from the container vessel of the input vial into the container vessel of the output vial; (I) after executing function (H), activate the capper/decapper to secure the cap to the container vessel of the output vial; and (J) after executing function (I), activate the at least one pick and place robot to remove the output vial from the output vial holder.

Embodiment 124 is the system of embodiment 123, wherein the same pick and place robot is activated to perform each of functions (A), (B), (F), and (J).

Embodiment 125 is the system of embodiment 123 or 124, further comprising an input rack, wherein function (A) comprises activating the at least one pick and place robot to transport the input vial from the input rack to the input vial holder, and wherein function (F) comprises activating the at least one pick and place robot to transfer the input vial to the input rack after removing the input vial from the input vial holder.

Embodiment 126 is the system of embodiment 125, wherein the input rack comprises a body having a handle at one end thereof, and wherein the body includes a plurality of vial receptacles arranged in two rows, each vial receptacle of one row being associated with one vial receptacle of the other row; wherein each vial receptacle of one row is longitudinally offset from the associated vial receptacle of the other row, and wherein adjacent vial receptacles of one row are laterally offset from one another.

Embodiment 127 is the system of any one of embodiments 123 to 126, further comprising an output rack and wherein function (J) comprises activating the at least one pick and place robot to transport the output vial from the output vial holder to the output rack.

Embodiment 128 is the system of embodiment 127, further comprising an incubator, and wherein function (J) comprises activating the at least one pick and place robot to transport the output vial from the output vial holder to the incubator to expose the output vial to an elevated temperature for a prescribed period of time before transporting the output vial to the output rack.

Embodiment 129 is the system of any one of embodiments 123 to 128, wherein the input vial holder is movable relative to the capper/decapper, and wherein the system controller is programmed to: automatically move the input vial holder relative to the capper/decapper to place the input vial held by the input vial holder at a capping/decapping position with respect to the capper/decapper before executing function (C) and to place the container vessel of the input vial held by the input vial holder at the capping/decapping position with respect to the capper/decapper before executing function (E).

Embodiment 130 is the system of embodiment 1129, further comprising a movable platform on which the input vial holder is carried and wherein the capper/decapper is in a fixed position.

Embodiment 131 is the system of embodiment 130, wherein the movable platform comprises a carousel that is rotatable about an axis of rotation, and wherein the input vial holder and the capper/decapper are radially spaced from the axis of rotation.

Embodiment 132 is the system of embodiment 131, wherein the input vial holder is rotatable about an axis of rotation and is configured to rotate about its axis of rotation as the carousel rotates about its axis of rotation, such that the input vial holder is always in a predetermined orientation when the input vial or the container vessel of the input vial held by the input vial holder is in the capping/decapping position.

Embodiment 133 is the system of embodiment 132, further comprising a planetary gear arrangement configured to couple rotation of the input vial holder with rotation of the carousel.

Embodiment 134 is the system of any one of embodiments 123 to 129, wherein the input vial holder is movable with respect to the pipettor and the output vial holder is movable with respect to the pipettor, and wherein the system controller is programmed to: automatically move the input vial holder to place the container vessel of the input vial held by the input vial holder at a pipetting position with respect to the pipettor before executing function (D), and automatically move the output vial holder to place the container vessel of the output vial held by the output vial holder at the pipetting position with respect to the pipettor before executing function (H).

Embodiment 135 is the system of embodiment 134, further comprising a movable platform on which the input vial holder and the output vial holder are carried.

Embodiment 136 is the system of embodiment 135, wherein the movable platform comprises a carousel that is rotatable about an axis of rotation, and wherein the input vial holder and the output vial holder are radially spaced from the axis of rotation.

Embodiment 137 is the system of any one of embodiments 123 to 129, wherein the output vial holder is movable relative to the capper/decapper, and wherein the system controller is programmed to: automatically move the output vial holder relative to the capper/decapper to place the output vial held by the output vial holder at a capping/decapping position with respect to the capper/decapper before executing function (G) and to place the container vessel of the output vial held by the output vial holder at a capping/decapping position with respect to the capper/decapper before executing function (I).

Embodiment 138 is the system of embodiment 137, further comprising a movable platform on which the output vial holder is carried, wherein the capper/decapper is in a fixed position.

Embodiment 139 is the system of embodiment 138, wherein the movable platform comprises a carousel that is rotatable about an axis of rotation, and wherein the output vial holder and the capper/decapper are radially spaced from the axis of rotation.

Embodiment 140 is the system of embodiment 139, wherein the output vial holder is rotatable about an axis of rotation and is configured to rotate about its axis of rotation as the carousel rotates about its axis of rotation, such that the output vial holder is always in a predetermined orientation when the output vial or the container vessel of the output vial held by the output vial holder is in the capping/decapping position.

Embodiment 141 is the system of embodiment 140, further comprising a planetary gear arrangement configured to couple rotation of the output vial holder with rotation of the carousel.

Embodiment 142 is the system of any one of embodiments 134 to 136, wherein the pipettor is movable with respect to input vial holder and the output vial holder, and wherein the system controller is programmed to: move the pipettor to the pipetting position after the container vessel of the input vial held by the input vial holder has been moved to the pipetting position and before executing function (D), and move the pipettor to the pipetting position after the container vessel of the output vial held by the output vial holder has been moved to the pipetting position and before executing function (H).

Embodiment 143 is the system of any one of embodiments 123 to 142, further comprising a drip shield that is movable with respect to the capper/decapper between a first position and a second position, wherein the system controller is programmed to: after executing function (C), move the drip shield to the first position under the cap and the sample collection swab coupled thereto, and, before executing function (E), move the drip shield to the second position away from the cap and the sample collection swab coupled thereto; and after executing function (G), move the drip shield to the first position under the cap, and, before executing function (I), move the drip shield to the second position away from the cap.

Embodiment 144 is the system of any one of embodiments 123 to 143, wherein each of the input vial holder and the output vial holder comprises: a middle structure defining an open chamber within which a vial is received; and a first clamp and a second clamp, each clamp pivotably coupled to the middle structure on opposed sides of the open chamber, wherein each clamp includes a clamping surface that extends into the open chamber to contact a side of a vial disposed within the open chamber, and wherein each clamp includes an outer cam surface; and wherein the system further comprises: a closure bracket including a yoke configured to engage the outer cam surface of each of the first and second clamps when the capper/decapper is removing or securing a cap of the vial disposed within the open chamber, wherein engagement of the outer cam surfaces by the yolk urges the first and second clamps to pivot inwardly to increase contact pressure between the clamping surfaces of the first and second clamps and the sides of the vial disposed within the open chamber.

Embodiment 145 is a system for processing an input vial, wherein the input vial contains a fluid sample and comprises a cap removably secured to a container vessel and a sample collection swab coupled to the cap, and wherein the system comprises: a control system; an input vial holder; an output vial holder; a vial transport mechanism controlled by the control system to transport the input vial to the input vial holder; a vial transport mechanism controlled by the control system to transport an output vial to the output vial holder; a capper/decapper controlled by the control system to remove the cap and the sample collection swab coupled thereto from the container vessel of the input vial held in the input vial holder; and a pipettor controlled by the control system to remove an amount of the fluid sample from the container vessel of the input vial held in the input vial holder after the cap and sample collection swab are removed from the container vessel of the input vial; wherein the capper/decapper is controlled by the control system to secure the cap, with the sample collection swab still coupled thereto, to the container vessel of the input vial after the amount of fluid sample is removed from the container vessel of the input vial; wherein the vial transport mechanism is controlled by the control system to remove the input vial from the input vial holder after the cap is secured to the container vessel of the input vial; wherein the capper/decapper is controlled by the control system to remove a cap from a container vessel of the output vial held in the output vial holder; wherein the pipettor is controlled by the control system to dispense an amount of the fluid sample removed by the pipettor from the container vessel of the input vial into the container vessel of the output vial held in the output vial holder; wherein the capper/decapper is controlled by the control system to secure the cap to the container vessel of the output vial after the pipettor dispenses an amount of sample into the container vessel of the output vial; and wherein the vial transport mechanism is controlled by the control system to remove the output vial from the output vial holder after the capper/decapper secures the cap to the container vessel of the output vial.

Embodiment 146 is a method for processing a sample collection vial with an automated processing station, wherein the sample collection vial contains a fluid sample and comprises a cap removably attached to a container vessel and a sample collection swab attached to the cap, wherein the processing station comprises a vial holder, a cap holder, a capper/decapper, a pick-and-place robot, and a waste receptacle, and wherein the method comprises: (a) with the pick-and-place robot, transporting the sample collection vial to the vial holder; (b) with the pick-and-place robot, transporting a replacement cap to the cap holder, wherein the replacement cap does not include a sample collection swab; (c) with the capper/decapper, altering an attachment between the cap and attached sample collection swab and the container vessel so that the cap may be separated from the container vessel; (d) with the pick-and-place robot, removing the cap and attached sample collection swab from the container vessel; (e) with the pick-and-place robot, transporting the cap and attached sample collection swab to the waste receptacle and depositing the cap and attached sample collection swab in the waste receptacle; (f) with the capper/decapper, removing the replacement cap from the cap holder; (g) with the capper/decapper, attaching the replacement cap to the container vessel of the sample collection vial; and (h) with the pick-and-place robot, removing the sample collection vial with the replacement cap attached thereto from the vial holder.

Embodiment 147 is the method of embodiment 146, wherein the replacement cap is a penetrable cap.

Embodiment 148 is the method of embodiment 146 or 147, wherein (a) comprises transporting the sample collection vial from an input rack to the vial holder, and wherein (h) comprises transporting the sample collection vial from the vial holder to an output rack with the pick-and-place robot.

Embodiment 149 is the method of embodiment 148, comprising, prior to (h), placing the sample collection vial with the replacement cap attached thereto in an incubator to expose the sample collection vial to an elevated temperature for a prescribed period of time.

Embodiment 150 is the method of any one of embodiments 146 to 149, wherein the vial holder is movable with respect to the capper/decapper, and wherein the method comprises, prior to (c) and prior to (g), moving the vial holder with respect to the capper/decapper to place the sample collection vial held by the vial holder in a capping/decapping position with respect to the capper/decapper; and wherein the cap holder is movable with respect to the capper/decapper, and wherein the method comprises, prior to (f) moving the cap holder with respect to the capper/decapper to place the cap holder in an operative position with respect to the capper/decapper.

Embodiment 151 is the method of embodiment 150, wherein the vial holder is positioned on a movable platform, and wherein moving the vial holder with respect to the capper/decapper to place the sample collection vial in the capping/decapping position with respect to the capper/decapper comprises moving the movable platform until the sample collection vial is disposed beneath the capper/decapper.

Embodiment 152 is the method of embodiment 151, wherein the movable platform comprises a carousel that is rotatable about an axis of rotation, and wherein the vial holder is radially spaced from the axis of rotation, and the capper/decapper is radially spaced from the axis of rotation by the same distance as the vial holder.

Embodiment 153 is the method of embodiment 152, wherein the cap holder is radially spaced from the axis of rotation by the same distance as the vial holder.

Embodiment 154 is the method of any one of embodiments 146 to 153, wherein the processing station includes a waste receptacle shutter having an opening therein, and wherein, during (a), (b), (c), and (d), the waste receptacle shutter is in a closed position in which a portion of the shutter covers an access opening to the waste receptacle, and wherein the method comprises, before (e), automatically moving the waste receptacle shutter from the closed position to an open position in which the opening in the waste receptacle shutter is aligned with the access opening to the waste receptacle, and wherein (e) comprises automatically moving the cap and attached sample collection swab through the opening in the shutter and the access opening to deposit the cap and attached sample collection swab into the waste receptacle.

Embodiment 155 is the method of embodiment 154, wherein, when the waste receptacle shutter is in the open position during (e), at least a portion of the waste receptacle shutter is disposed above the container vessel and below the cap and attached sample collection swab removed from the container vessel with the pick-and-place robot, and wherein (e) comprises the pick-and-place robot transporting the cap and attached sample collection swab along a path above the waste receptacle shutter.

Embodiment 156 is the method of embodiment 154 or 155, further comprising, after (e), automatically moving the waste receptacle shutter from the open position to the closed position.

Embodiment 157 is the method of any one of embodiments 146 to 156, comprising, prior to (b), (i) presenting the replacement cap at a position and orientation permitting the replacement cap to be picked up by the pick-and-place robot.

Embodiment 158 is the method of embodiment 157, wherein (i) is performed with a vibratory hopper.

Embodiment 159 is a system for processing a sample collection vial, wherein the sample collection vial contains a fluid sample and comprises a cap removably attached to a container vessel and a sample collection swab attached to the cap, wherein the system comprises: a vial holder; a cap holder; a capper/decapper configured to remove a cap from or attach a cap to a container vessel; a pick-and-place robot; a waste receptacle, and a system controller in communication with the capper/decapper and the pick-and-place robot, and wherein the system controller is programmed to execute the following functions: (a) activate the pick-and-place robot to transport the sample collection vial to the vial holder; (b) activate the pick-and-place robot to transport a replacement cap to the cap holder, wherein the replacement cap does not include a sample collection swab; (c) activate the capper/decapper to alter an attachment between the cap and attached sample collection swab and the container vessel so that the cap may be separated from the container vessel; (d) activate the pick-and-place robot to remove the cap and attached sample collection swab from the container vessel; (e) activate the pick-and-place robot to transport the cap and attached sample collection swab to the waste receptacle and deposit the cap and attached sample collection swab in the waste receptacle; (f) activate the capper/decapper to remove the replacement cap from the cap holder; (g) activate the capper/decapper to attach the replacement cap to the container vessel of the sample collection vial; and (h) activate the pick-and-place robot to remove the sample collection vial with the replacement cap attached thereto from the vial holder.

Embodiment 160 is the system of embodiment 143, wherein the replacement cap is a penetrable cap.

Embodiment 161 is the system of embodiment 159 or 160, further comprising an input rack for holding one or more sample collection vials and an output rack for holding one or more sample collection vials, and wherein function (a) comprises the system controller activating the pick-and-place robot to transport the sample collection vial from the input rack to the vial holder, and function (h) comprises the system controller activating the pick-and-place robot to transport the sample collection vial from the vial holder to the output rack.

Embodiment 162 is the system of embodiment 161, further comprising an incubator for holding one or more sample collection vials, wherein prior to function (h), the system controller activates the pick-and-place robot to transport the sample collection vial from the vial holder to the incubator to expose the sample collection vial to an elevated temperature for a prescribed period of time.

Embodiment 163 is the system of any one of embodiments 159 to 162, further comprising a movable platform on which the vial holder and the cap holder are supported, wherein the system controller is in communication with the movable platform and wherein the system controller is programmed to: prior to function (c) and prior to function (g), activate the movable platform to move the vial holder with respect to the capper/decapper to place the sample collection vial held in the vial holder in a capping/decapping position with respect to the capper/decapper; and prior to function (f), activate the movable platform to move the cap holder with respect to the capper/decapper to place the replacement cap held by the cap holder in an operative position with respect to the capper/decapper.

Embodiment 164 is the system of embodiment 163, wherein the movable platform comprises a carousel that is rotatable about an axis of rotation, and wherein the vial holder is radially spaced from the axis of rotation, and the capper/decapper is radially spaced from the axis of rotation by the same distance as the vial holder.

Embodiment 165 is the system of embodiment 164, wherein the cap holder is radially spaced from the axis of rotation by the same distance as the vial holder.

Embodiment 166 is the system of any one of embodiments 159 to 165, comprising a waste receptacle shutter having an opening therein and configured for powered movement between a closed position in which a portion of the shutter covers an access opening to the waste receptacle and an open position in which the opening of the shutter is aligned with the access opening to the waste receptacle, wherein the system controller is in communication with the waste receptacle shutter, and wherein the system controller is programmed to, before function (e), activate the waste receptacle shutter to move from the closed position to the open position, and wherein function (e) comprises the system controller activating the pick-and-place robot to move the cap and attached sample collection swab through the opening in the shutter and the access opening to deposit the cap and attached sample collection swab into the waste receptacle.

Embodiment 167 is the system of embodiment 166, wherein, when the waste receptacle shutter is in the open position during function (c), at least a portion of the waste receptacle shutter is disposed above the container vessel and below the cap and attached sample collection swab removed from the container vessel with the pick-and-place robot, and wherein function (e) comprises the pick-and-place robot transporting the cap and attached sample collection swab along a path above the waste receptacle shutter.

Embodiment 168 is the system of embodiment 166 or 167, further comprising, after function (e), the system controller activates the waste receptacle shutter to move from the open position to the closed position.

Embodiment 169 is the system of any one of embodiments 159 to 168, further comprising a vibratory hopper and a cap chute, wherein the vibratory hopper is configured to present the replacement cap at the cap chute in an orientation permitting the replacement cap to be picked up by the pick-and-place robot.

Other features and characteristics of the subject matter of this disclosure, as well as the methods of operation, functions of related elements of structure and the combination of parts, and economies of manufacture, will become more apparent upon consideration of the following description and the appended claims with reference to the accompanying drawings, all of which form a part of this specification, where like reference numerals designate corresponding parts in the various figures.

### BRIEF DESCRIPTION OF THE DRAWINGS

The accompanying drawings, which are incorporated herein and form part of the specification, illustrate various embodiments of the subject matter of this disclosure. In the drawings, like reference numbers indicate identical or functionally similar elements.
FIG. 1 is a perspective view of a sample processing instrument as described herein.
FIG. 2 is a top perspective view of the sample processing instrument of FIG. 1 with certain components of the instrument omitted from the drawing.
FIG. 3 is a top perspective view of a sample processing station of the sample processing instrument.
FIG. 4 is a bottom perspective view of the sample processing station.
FIG. 5 is a side view of the sample processing station.
FIG. 6 is a rear view of the sample processing station.
FIG. 7 is a bottom view of the sample processing station.
FIG. 8 is a perspective of view of a vial holder, or cradle, of the sample processing station.
FIG. 9 is a cap holder, or cradle, of the sample processing station.
FIG. 10 is a partial front view of the sample processing station with a capper/decapper positioned above a vial held in the vial holder.
FIG. 11 is a partial front view of the sample processing station with the capper/decapper lowered onto the vial held in the vial holder.
FIG. 12 is a transverse cross-section of a vial holder with a vial having a cap with a sample collection swab held in the vial holder.
FIG. 13 as a top perspective view of a sample collection vial.
FIG. 14 is an exploded front view of the sample collection vial with the cap and collection swab removed from the container vessel.
FIG. 15 is a top perspective view of an output vial.
FIG. 16 shows a flow diagram illustrating an exemplary embodiment of a method for transferring an amount of sample material from an input vial to an output vial using the sample processing station.
FIG. 17 shows a flow diagram illustrating an exemplary embodiment of a method for modifying an input vial by replacing the cap on the container vessel of the vial so that the vial can be processed in an automated analyzer.
FIG. 18 is a top perspective view of an exemplary rack for holding input vials and output vials, where the rack is configured to be inserted into the sample processing instrument, and where the rack is shown holding one input vial and one output vial.
FIG. 19 is a right side view of the rack.
FIG. 20 is a left side view of the rack.
FIG. 21 is a top view of the rack.
FIG. 22 is a bottom view of the rack.
FIG. 23 is an end view of the rack.
FIG. 24 is a broken, top view of the rack, where the rack is shown with an input vial in each input vial holder and an output vial in each output vial holder.
FIG. 25 is a block diagram illustrating elements of a control architecture of the sample processing instrument.
FIG. 26 is a perspective view of an alternative sample processing instrument as described herein with a waste receptacle shutter in an open position.
FIG. 27 is a top perspective view of the sample processing instrument of FIG. 26 with certain components of the instrument omitted from the drawing and with the waste receptacle shutter in a closed position.
FIG. 28 is a top perspective view of the sample processing instrument as shown in FIG. 27 with the waste receptacle shutter in an open position.
FIG. 29 shows a flow diagram illustrating an exemplary embodiment of a method for modifying an input vial by removing and discarding a cap and swab from the input vial and attaching a replacement cap onto the vessel of the input vial so that the vial can be processed in an automated analyzer.

### DETAILED DESCRIPTION

While aspects of the subject matter of the present disclosure may be embodied in a variety of forms, the following description and accompanying drawings are merely intended to disclose some of these forms as specific examples of the subject matter. Accordingly, the subject matter of this disclosure is not intended to be limited to the forms or embodiments so described and illustrated.

### Definitions

Unless defined otherwise, all terms of art, notations and other technical terms or terminology used herein have the same meaning as is commonly understood by one of ordinary skill in the art to which this disclosure belongs. All patents, applications, published applications and other publications referred to herein are incorporated by reference in their entirety. If a definition set forth in this section is contrary to or otherwise inconsistent with a definition set forth in the patents, applications, published applications, and other publications that are herein incorporated by reference, the definition set forth in this section prevails over the definition that is incorporated herein by reference.

Unless otherwise indicated or the context suggests otherwise, as used herein, "a" or "an" means "at least one" or "one or more."

References in the specification to "one embodiment," "an embodiment," a "further embodiment," "an exemplary embodiment," "some aspects," "a further aspect," "aspects," etc., indicate that the embodiment described may include a particular feature, structure, or characteristic, but every embodiment encompassed by this disclosure may not necessarily include the particular feature, structure, or characteristic. Moreover, such phrases are not necessarily referring to the same embodiment. Further, when a particular feature, structure, or characteristic is described in connection with an embodiment, such feature, structure, or characteristic is also a description in connection with other embodiments, whether or not explicitly described.

To the extent used herein, the term "sample" refers to any substance suspected of containing at least one analyte of interest. The analyte of interest may be, for example, a nucleic acid, a protein, a prion, a chemical, or the like. The substance may be derived from any source, including an animal, an industrial process, the environment, a water source, a food product, or a solid surface (e.g., surface in a medical facility). Substances obtained from animals may include, for example, blood or blood products, urine, mucus, sputum, saliva, semen, tears, pus, stool, nasopharyngeal or genitourinary specimen obtained with a swab or other collection device, and other bodily fluids or materials. The term "sample" will be understood to mean a specimen in its native form or any stage of processing.

To the extent used herein, the term "receptacle" or "fluid receptacle" refers to any type of fluid container, including, for example, a tube, a vial, a cuvette, a well or cartridge or other article having one or more wells formed therein or attached thereto, a microtiter plate, etc., that is configured to contain a sample or another fluid. Tubes may be cylindrical (i.e., circular in cross-section) or non-cylindrical and may have flat or rounded closed ends. Non-limiting examples of exemplary receptacles include, for example, the Aptima^{®} Urine Specimen Collection Kit, Aptima^{®} Specimen Transfer Kit, and Aptima^{®} Multitest Swab Specimen Collection Kit available from Hologic, Inc., Marlborough, MA (USA), and the ESwab^{®} Liquid Based Collection and Transport System, available from Thermo Fisher Scientific, Waltham, MA (USA).

This description may use various terms describing relative spatial arrangements and/or orientations or directions in describing the position and/or orientation of a component, apparatus, location, feature, or a portion thereof or direction of movement, force, or other dynamic action. Unless specifically stated, or otherwise dictated by the context of the description, such terms, including, without limitation, top, bottom, above, below, under, on top of, upper, lower, left, right, in front of, behind, beneath, next to, adjacent, between, horizontal, vertical, diagonal, longitudinal, transverse, radial, axial, clockwise, counter-clockwise, etc., are used for convenience in referring to such component, apparatus, location, feature, or a portion thereof or movement, force, or other dynamic action represented in the drawings and are not intended to be limiting.

Unless otherwise indicated, or the context suggests otherwise, terms used herein to describe a physical and/or spatial relationship between a first component, structure, or portion thereof and a second component, structure, or portion thereof, such as, attached, connected, fixed, joined, linked, coupled, or similar terms or variations of such terms, shall encompass both a direct relationship in which the first component, structure, or portion thereof is in direct contact with the second component, structure, or portion thereof or there are one or more intervening components, structures, or portions thereof between the first component, structure, or portion thereof and the second component, structure, or portion thereof.

Unless otherwise stated, any specific dimensions mentioned in this description are merely representative of an exemplary implementation of a device embodying aspects of the disclosure and are not intended to be limiting.

To the extent used herein, the terms "about" or "approximately" apply to all numeric values and terms indicating specific physical orientations or relationships such as horizontal, vertical, parallel, perpendicular, concentric, or similar terms, specified herein, whether or not explicitly indicated. This term generally refers to a range of numbers, orientations, and relationships that one of ordinary skill in the art would consider as a reasonable amount of deviation to the recited numeric values, orientations, and relationships (i.e., having the equivalent function or result) in the context of the present disclosure. For example, and not intended to be limiting, this term can be construed as including a deviation of ±10 percent of the given numeric value, orientation, or relationship, provided such a deviation does not alter the end function or result of the stated value, orientation, or relationship. Therefore, under some circumstances as would be appreciated by one of ordinary skill in the art a value of about or approximately 1% can be construed to be a range from 0.9% to 1.1%.

To the extent used herein, the term "adjacent" refers to being near (spatial proximity) or adjoining. Adjacent objects or portions thereof can be spaced apart from one another or can be in actual or direct contact with one another. In some instances, adjacent objects or portions thereof can be coupled to one another or can be formed integrally with one another.

To the extent used herein, the terms "substantially" and "substantial" refer to a considerable degree or extent. When used in conjunction with, for example, an event, circumstance, characteristic, or property, the terms can refer to instances in which the event, circumstance, characteristic, or property occurs precisely as stated as well as instances in which the event, circumstance, characteristic, or property occurs to a close approximation, such as accounting for typical tolerance levels or variability of the embodiments described herein.

To the extent used herein, the terms "optional" and "optionally" or the term "may" (e.g., as in the phrase "may include," "may comprise," "may produce," "may provide," or similar phrases) mean that the subsequently described, component, structure, element, event, circumstance, characteristic, property, etc. may or may not be included or occur and that the description includes instances where the component, structure, element, event, circumstance, characteristic, property, etc. is included or occurs and instances in which it is not or does not.

To the extent used herein, the term "analyte" refers to a molecule or substance that is detected or subjected to analysis in an assay. Exemplary analytes include nucleic acids, polypeptides, proteins, antigens, antibodies, and prions.

To the extent used herein, the term "assay" refers to a procedure for detecting and/or quantifying an analyte in a sample. A sample comprising or suspected of comprising the analyte is contacted with one or more reagents and subjected to conditions permissive for generating a detectable signal informative of whether the analyte is present or an amount (e.g., mass or concentration) of the analyte in the sample.

To the extent used herein, the term "analyzer" refers to an automated instrument that is capable of performing one or more steps of an assay, including the step of determining the presence or amount of one or more analytes suspected of being present in a fluid sample.

To the extent used herein, the term "molecular assay" refers to a procedure for specifically detecting and/or quantifying a target molecule, such as a particular nucleic acid. A sample comprising or suspected of comprising the target molecule is contacted with one or more reagents, including at least one reagent specific for the target molecule, and subjected to conditions permissive for generating a detectable signal informative of whether the target molecule is present. For example, where the molecular assay includes an amplification reaction, such as a polymerase chain reaction (PCR), the reagents include primers that may be specific for a target nucleic acid, and the generation of a detectable signal can be accomplished, at least in part, by providing a labeled probe that hybridizes to amplification products (i.e., amplicon) produced by the primers in the presence of the target. Alternatively, the reagents can include an intercalating dye for detecting the formation of double-stranded nucleic acids.

To the extent used herein, the term "reagent" refers to any substance or mixture that participates in an assay, other than sample material and products of the assay. Exemplary reagents for use in a molecular assay include nucleotides, enzymes, primers, probes, and salts.

To the extent used herein, the terms "first" and "second" preceding the name of an element (e.g., a component, apparatus, location, feature, or a portion thereof or a direction of movement, force, or other dynamic action) are used for identification purposes to distinguish between similar elements, and are not intended to necessarily imply order, nor are the terms "first" and "second" intended to preclude the inclusion of additional similar elements. Furthermore, use of the term "first" preceding the name of an element (e.g., a component, apparatus, location, feature, or a portion thereof or a direction of movement, force, or other dynamic action) does not necessarily imply or require that there be additional, e.g., "second," "third," etc., such element(s).

To the extent used herein, the terms or phrases "configured to," "adapted to," "operable to," "constructed and arranged to," and similar terms mean that the object of the term or phrase includes, constitutes, or otherwise encompasses the requisite structure(s), mechanism(s), arrangement(s), component(s), material(s), algorithm(s), circuit(s), programming, etc. to perform a specified task or tasks or achieve a specified output or characteristic, either automatically or perpetually or selectively when called upon to do so.

### Detailed Description of Drawings

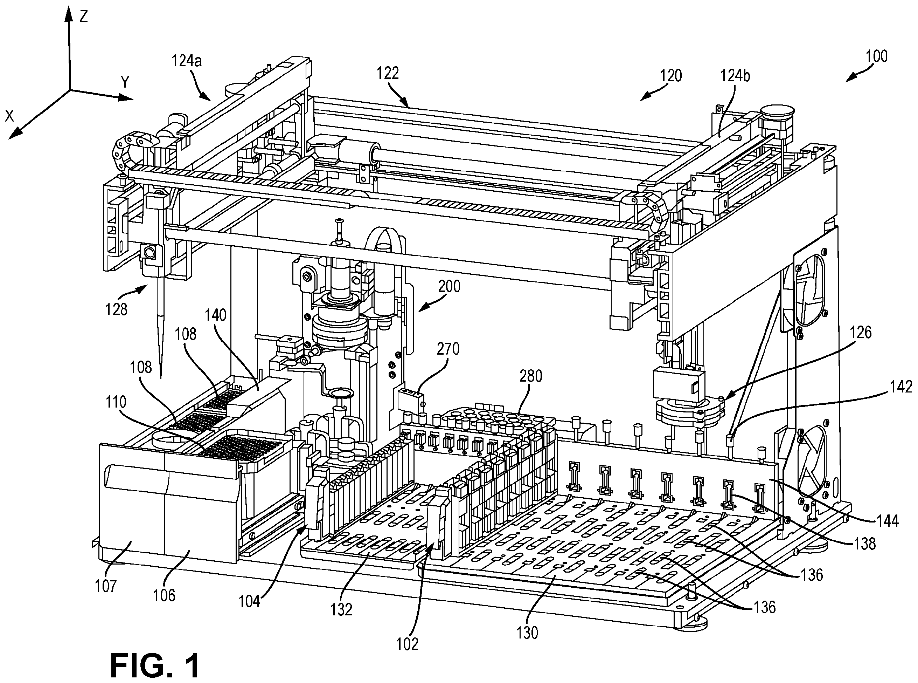

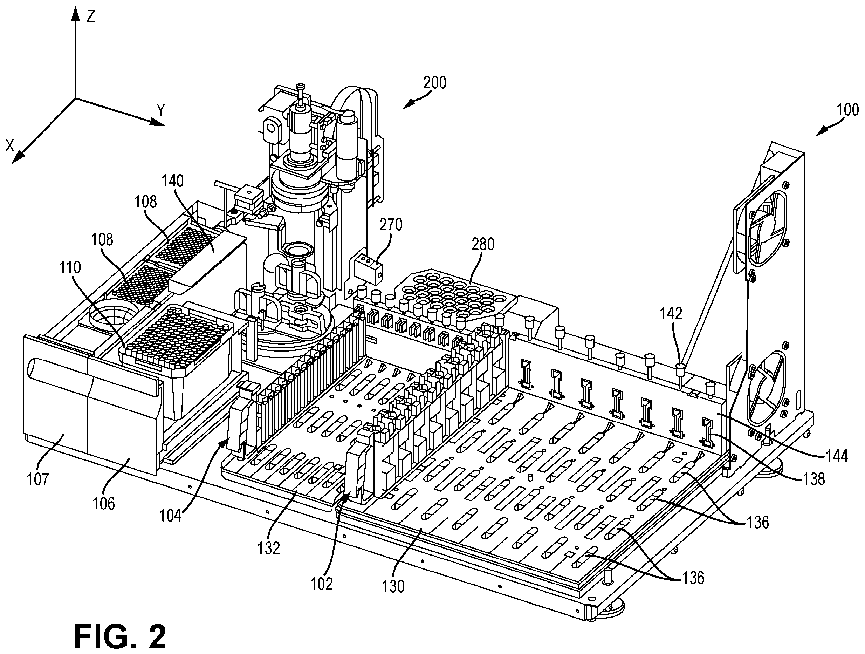

FIGS. 1 and 2 show perspective views of a sample processing instrument 100. One purpose of the sample processing instrument 100 is to receive input vials containing liquid sample material and having configurations preventing their being processed by an analyzer and transferring an amount of sample material from the input vial to an output vial having a configuration that is processable by an analyzer, or by reconfiguring the input vial - for example replacing a cap having a sample collection swab with a cap without a sample collection swab - so the input vial can be processed by the automated diagnostic analyzer.

Referring to FIGS. 1 and 2, a sample processing instrument 100 includes a sample processing station 200, a pipettor 128, and vial transport mechanism, such as a pick-and-place robot 126. In one example, instrument 100 may include an incubator 280 configured to receive one or more output vials 160 to apply prescribed thermal conditions for a prescribed period of time as configurable by the user to the contents of the output vial for workflows that require such incubation. For example, the prescribed conditions may be 90 - 120° C for 60-1800 seconds (1-30 minutes), for example, about 15 minutes. One reason for incubation is that cross-links are formed between nucleic acids in a formalin-containing media, such as the SurePath^{®} preservative fluid. Heating such a sample in the presence of a buffer reverses the effects of cross-linking and improves nucleic acid accessibility. In one example, pipettor 128 and pick-and-place robot 126 are supported on a gantry 120 for X-Y-Z movement (FIG. 2 is a view of the sample processing instrument 100 without the gantry 120, pipettor 128, or the pick-and-place robot 126). In one example, pipettor 128 is supported on a lateral arm 124a and is configured for powered movement in the X-direction along the length of the arm 124a (e.g., by motors, rack and pinion arrangements, linear actuators, belts, etc.), and the arm 124a is supported on a longitudinal arm 122 and is configured for powered movement in the Y-direction along longitudinal arm 122 (e.g., by motors, rack and pinion arrangements, linear actuators, belts, etc.). Pipettor 128 is also configured for powered movement in the Z-direction with respect to lateral arm 124a. Pipettor 128 may include a shaft configured to receive and hold in frictional engagement a disposable pipette tip, and pipettor 128 may be configured to selectively generate negative pressure (vacuum or suction) to aspirate liquid into the pipette tip and positive pressure to expel, or dispense, liquid from the pipette tip.

Similarly, the pick-and-place robot 126 is supported on a lateral arm 124b and is configured for powered movement in the X-direction along the length of the arm124b (e.g., by motors, rack and pinion arrangements, linear actuators, belts, etc.), and the arm 124b is supported on longitudinal arm 122 and is configured for powered movement in the Y-direction along longitudinal arm 122 (e.g., by motors, rack and pinion arrangements, linear actuators, belts, etc.). Pick-and-place robot 126 is also configured for powered movement in the Z-direction with respect to lateral arm 124b. Pick-and-place robot 126 includes a claw or gripper with two or more opposed jaws that are activated for selectively gripping an object, such as an input vial 150 or an output vial 160.

In an alternate embodiment, the pipettor and the pick-and-place robot are supported on a single lateral arm that is supported on longitudinal arm 122 and is configured for powered movement in the Y-direction along longitudinal arm 122.

Instrument 100 may be configured to receive and removably hold one or more input racks 102 in an input rack receiving area 130, one or more output racks 104 in an output rack receiving area 132, pipette tip trays 108, and a waste bin 110. The pipette tip trays 108 and the waste bins 110 may be supported on drawers 106 and 107, respectively.

Instrument 100 may include a printer (not shown) for printing labels - e.g., machine-readable labels, such as bar codes - onto vials processed by the instrument. An exemplary printer is described in U.S. Patent No. 9,724,948.

Each input rack 102 is configured to be slidably inserted into or out of the sample processing instrument 100, (e.g., a track or groove on the instrument 100 is slidably engaged by a cooperating groove or track on the bottom of the input rack 102) and is configured to hold a plurality of input vials 150 and, optionally, a plurality of output vials 160. Each output rack 104 is also configured to be slidably inserted into or out of the processing instrument 100 (e.g., on a cooperating groove or track on the instrument 100 and the bottom of the output rack 104).

The input rack receiving area 130 for receiving the input rack(s) 102 and the output rack receiving area 132 for receiving the output rack(s) 104 are shown in FIG. 2. Input rack receiving area 130 and output rack receiving area 132 may include lanes for receiving each of the racks 102, 104, respectively. Each lane may include guide features configured to slidably receive corresponding guide features on an opposing surface (e.g., the bottom surface) of the rack 102,104 and locking features for retaining the racks 102, 104 within the receiving areas 130, 132, respectively. Exemplary guide features include a track on one of the bottom of the racks 102, 104 and the receiving areas 130, 132 and a cooperating groove on the other of the bottom of the racks 102, 104 and the receiving areas 130, 132. In the illustrated embodiment input rack receiving area 130 and an output rack receiving area 132 includes a raised track or rail 136 (comprising a single, continuous track, or multiple, discontinuous and aligned tracks as shown) defining each lane, a wall 144 at an end of the receiving areas 130, 132, an opening 138 associated with each lane and formed in the wall 144, and a pin 142 associated with each lane extending through a top edge of the wall 144 and passing through or into the corresponding opening 138. Sesnors (not shown) may be provided to detect whether an input rack 102 is installed in each lane of input rack receiving area 130 and to detect whether an output rack 104 is installed in each lane of output rack receiving area 132. Sensors (not shown) may also be provided for detecting that the lock pin 142 is inserted into each opening 138 to lock the associated rack in place.

Details of exemplary input and output rack receiving areas and corresponding locking features are described in U.S. Patent No. 10,094,847.

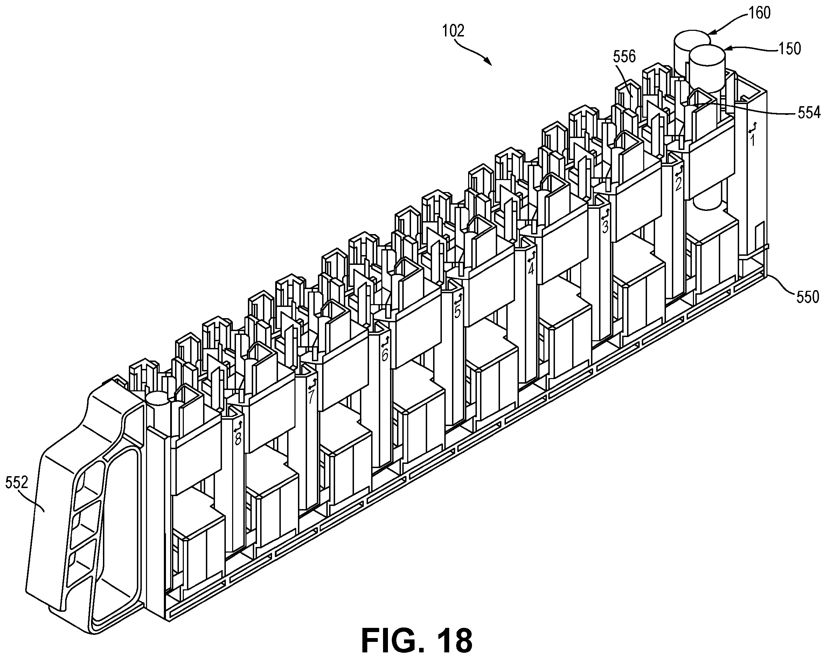

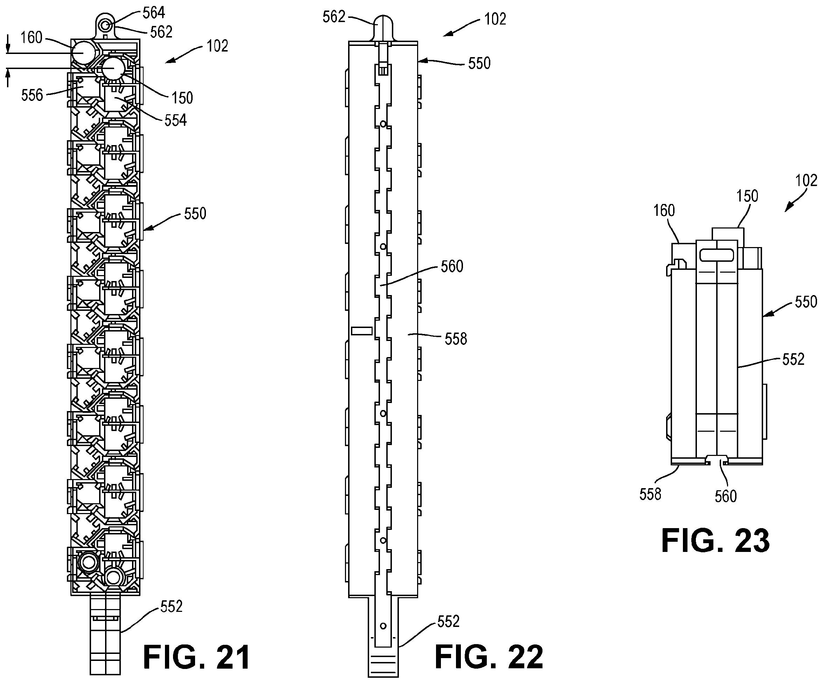

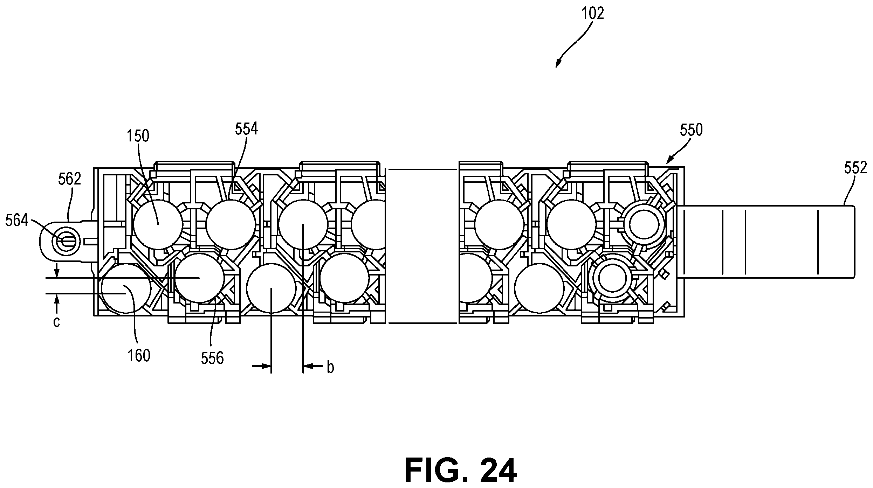

An example of input rack 102 is shown in FIGS. 18-24. Rack 102 includes a body 550 with a handle 552 at one end of the body. As shown in FIGS. 18 and 21, the body includes a plurality of input vial receptacles 554 arranged in a row along a side of the body 550 and a plurality of output vial receptacles 556 arranged in a second row parallel to the row of input vial receptacles 554. In the rack illustrated in FIGS. 18-23, one input vial 150 is held in one of the input vial receptacles 554 and an associated output vial 160 is held in one of the output vial receptacles 556 to present associated pairs of input vials and output vials to the instrument. In FIG. 24, an input vial 150 is held in each of the input vial receptacles 554 and an associated output vial 160 is held in each of the output vial receptacles 556.

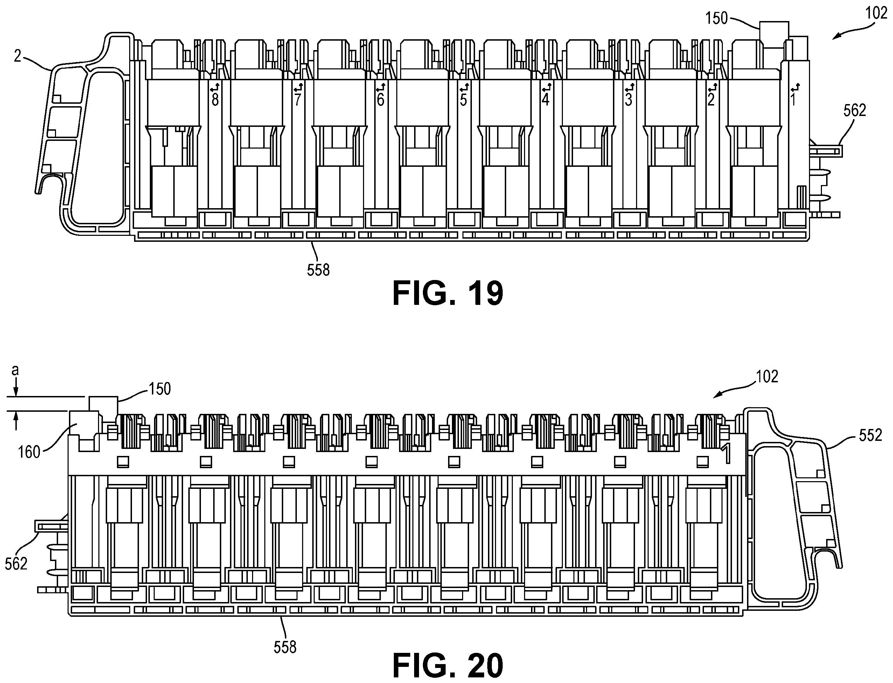

In an example, as shown in FIG. 21, each input vial receptacle 554 and associated output vial receptacle 556 are longitudinally offset by a distance "b." In an example, as shown in FIG. 20, the input vials 150 held by the input vial receptacles 554 are vertically offset from the output vials 160 held by the output via receptacles 556 by a distance "a." In an example, as shown in FIG. 24, the input vial receptacles 554 are generally aligned with each other, and the output vial receptacles 556 are laterally offset (staggered) by a distance "c" from vial receptacle to vial receptacle. In some examples, one or more of the offsets "a," "b," and/or "c" are provided so that the vials 150, 160 carried by the rack 102 can be more easily grasped by a pick-and-place robot from the respective vial receptacles 554, 556.

As shown in FIGS. 22 and 23, a guide groove 560 extends longitudinally along the bottom 558 of the body 550. As shown in FIGS. 19-22, a projection 562 extends from an end of the body 550 opposite the end of the handle 552. As shown in FIG. 21, a lock recess 564 is formed in a top surface of the projection 562.

When the input rack 102 is placed in the rack receiving area 130, tracks 136 defining each lane in the rack receiving area 130 are received in the groove 560 formed in the bottom 558 of the body 550. In an alternate embodiment, a raised track is provided on the bottom 558 of the body 550, and that track is received in a groove formed in the rack receiving area 132.

The rack 102 is inserted along a lane of the rack receiving area 130 until an end of the body 550 of the rack opposite the handle 552 contacts the end wall 144 of the rack receiving area. The projection 562 extends into the opening 138 associated with the lane in which the rack 102 is inserted, and the corresponding lock pin 142 can be dropped into the lock recess 564 formed in the projection 562, thereby locking the input rack 102 in the input rack receiving area 130.

Output rack 104 may be identical to input rack 102, or output rack 104 may have only a single row of output vial holders.

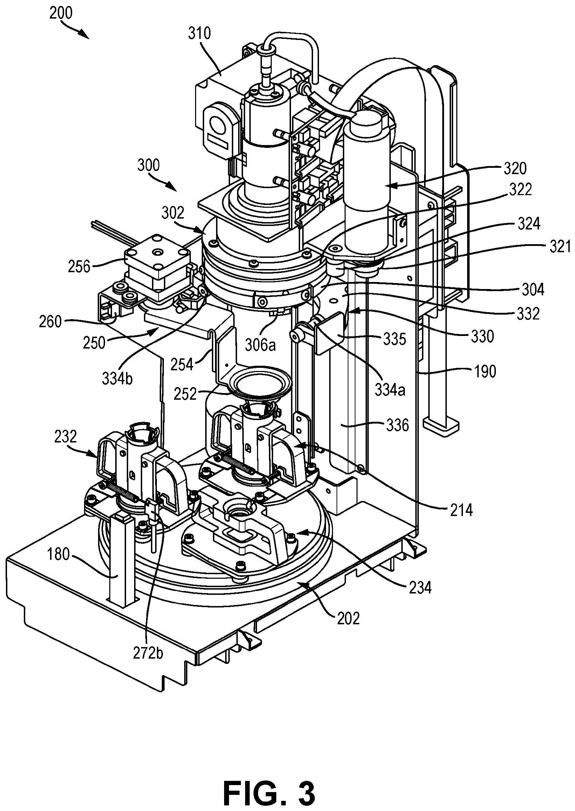

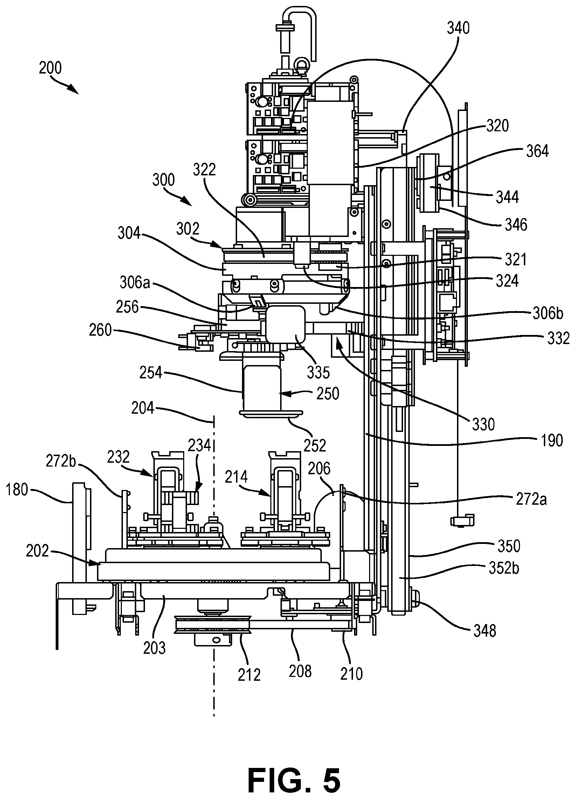

Referring to FIGS. 3, 4, and 5, the sample processing station 200 may include a movable platform 202, which may comprise a carousel that is rotatable about an axis of rotation 204 (see FIG. 5). Movable platform 202 may support one or more vial holders, or cradles, such as an input, or first, vial holder 214, and an output, or second, vial holder 232. Movable platform 202 may also support a cap holder, or cradle, 234.

Sample processing station 200 may include a "teaching post" 180 located at a known position with respect to the movable platform 202. To synchronize the position of the movable platform 202, and the first and second vial holders 214, 232 and the cap holder 234 supported on the platform 202, with the pipettor 128 and the pick-and-place robot 126, the pipettor 128 and pick-and-place robot 126 are each moved in X, Y, and Z directions until they contact the teaching post 180. As the platform 202 and holders 214, 232, 234 are at known positions with respect to the position of the teaching post 180, the specific X, Y, and Z coordinates at which the pipettor 128 and pick-and-place robot 126 contact the teaching post 180 can be correlated to the positions of the holders 214, 232, 234.

Sample processing station 200 may further include a capper/decapper 300 (which may also be referred to simply as a "capper") configured for grasping and rotating a cap threaded onto a container and raising or lowering the cap with respect to the container to remove the threaded cap from the container having mating threads or to secure the cap onto the container.

Sample processing station 200 may also include a movable drip shield 250, as will be described in further detail below.

Sample processing station 200 may include a barcode reader 270 or other device for reading machine-readable labels or tags (e.g., an RFID reader) for reading barcodes or other machine-readable tags on the input vial 150 and/or output vial 160. Barcodes or other machine-readable tags may be used to correlate the vial 150 and/or 160 with identifying information or other information pertaining to the contents of the vial 150 and/or 160.

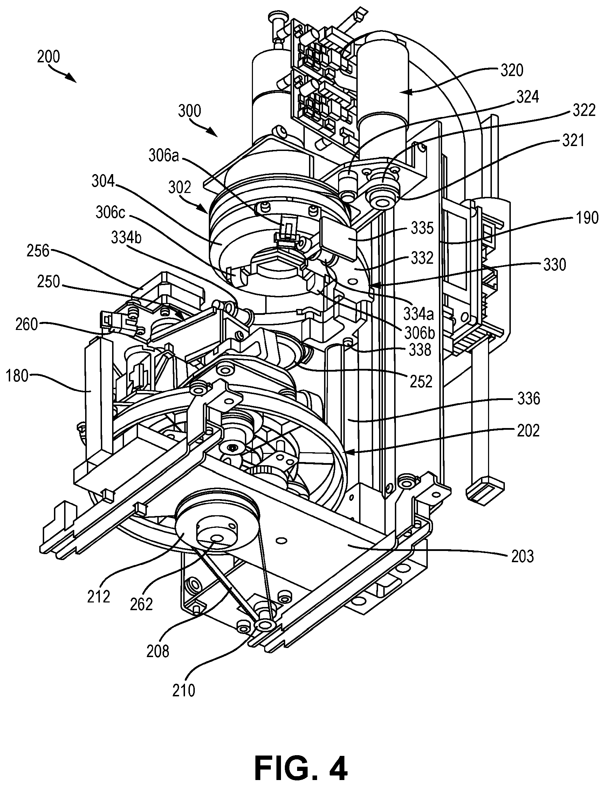

As shown in FIG. 4, for a movable platform, or carousel, 202 that is rotatable about axis of rotation 204, a carousel motor 206 (e.g., a servo motor with an encoder and a hall effect homing sensor) is coupled to the carousel 202 by means of a belt 208 trained on a drive wheel 210 attached to an output shaft of the carousel motor 206 and a driven wheel 212 attached to a rotatable shaft 262, or a spindle, attached to the carousel 202. Driven wheel 212 and shaft 262 are rotatably supported, e.g., by a mounting bracket 203 disposed beneath the carousel 202. Sample processing station 200 may include one or more sensors (not shown) for detecting/indicating a rotational position of the carousel 202.

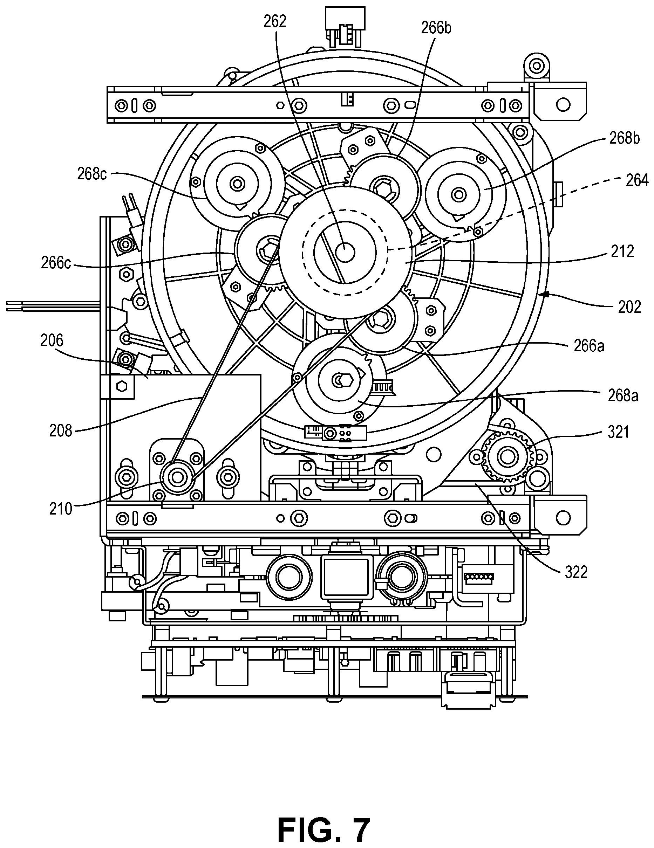

Each of the first vial holder 214, the second vial holder 232, and the cap holder 234 is rotatable about a central axis of rotation and is rotated in response to rotation of the carousel 202 by means of a planetary gear arrangement as shown in FIG. 7, which is a bottom view of the sample processing station in which the mounting bracket 203 is omitted. The planetary gear arrangement is configured to rotate each vial holder 214, 232 and the cap holder 234 about its respective axis of rotation (axis of symmetry) as the carousel 202 is rotated about the axis of rotation 204 so as to maintain the vial holders 214, 232 and cap holder 234 in the same rotational orientation with respect to the sample processing station 200. The planetary gear arrangement is disposed on the bottom of the carousel 202 and includes a rotationally-fixed sun gear 264 (shown in dashed line) through which shaft 262 extends, three inner planetary gears 266a, 266b, 266c rotatably attached to the carousel 202 and each having peripheral gear teeth engaged with peripheral gear teeth of the sun gear 264, and three outer planetary gears 268a, 268b, 268c rotatably attached to the carousel 202 and each having peripheral gear teeth engaged with peripheral gear teeth of inner planetary gears 266a, 266b, 266c, respectively. Sun gear 264 may be fixed to mounting bracket 203 (see FIG. 4, mounting bracket 203 is not shown in FIG. 7), and shaft 262 extends through sun gear 264 to carousel 202 so that when the shaft 262 rotates, carousel 202 rotates with it, but the sun gear 264 does not rotate. Each of the outer planetary gears 268a, 268b, 268c is fixed to a rotatable shaft attached to one of the first vial holder 214, the second vial holder 232, and the cap holder 234. As the driven wheel 212 and shaft 262 are rotated via the carousel motor 206 and belt 208, carousel 202 rotates about axis of rotation 204 (see FIG. 5), and each of the inner planetary gears 266a, 266b, 266c and outer planetary gears 268a, 268b, 268c revolves around the axis of rotation 204 with the carousel 202. The inner planetary gears 266a, 266b, 266c, being engaged with the fixed sun gear 264, will be caused to rotate about their respective axes of rotation as the carousel 202 rotates, and the outer planetary gears 268a, 268b, 268c, each being engaged with an associated an inner planetary gear 266a, 266b, 266c, will be caused to rotate about their respective axes of rotation, thereby rotating the first vial holder 214, the second vial holder 232, and the cap holder 234 in coordination with the rotation of the carousel 202.

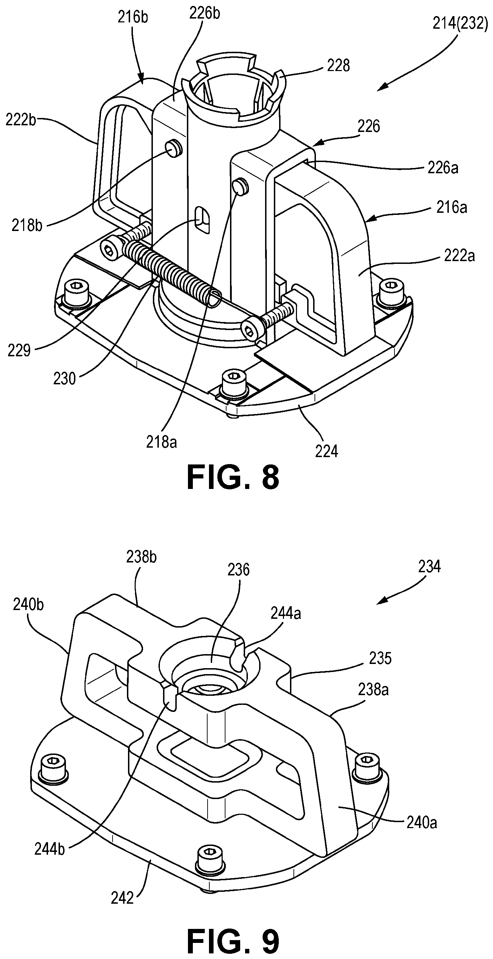

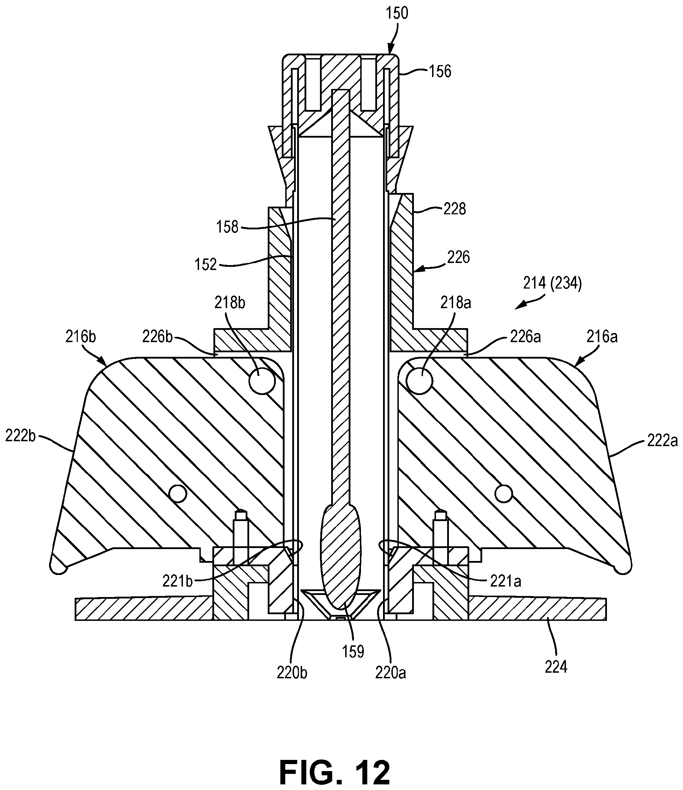

As shown in FIGS. 8 and 12, input vial holder 214 includes a base 224 that may be secured to the carousel 202 by mechanical fasteners or the like. The configuration of output vial holder 232 is identical to the configuration of input vial holder 214, and thus a separate description of output vial holder 232 will be omitted. A middle structure 226 extends above the base 224 and defines an open chamber in which a vial is received. Middle structure 226 is rotatable with respect to base 224 and is fixedly coupled to one of the outer planetary gears 268a, 268b, 268c so as to be rotatable with the respective outer planetary gear about its axis of symmetry. Opposed clamps 216a and 216b extend partially into open sides 226a, 226b, respectively, of the middle structure 226 and are pivotably attached within the open sides 226a, 226b by pivot pins 218a, 218b, respectively. As shown in FIG. 12, each clamp 216a, 216b includes a clamping surface 220a, 220b, respectively, that may be attached to the respective clamp 216a, 216b or may be integrally formed therewith and which extends into the inner chamber of the middle structure 226 within which the vial is received. A spring 230 extends between the clamps 216a, 216b to bias the clamps 216a, 216b and the respective clamping surfaces 220a, 220b toward each other. Only one spring 230 on one side of the vial holder 214, 232 is shown in the drawings, but each vial holder may include another spring extending between the clamps 216a, 216b on the opposite side of the vial holder.

Middle structure 226 may include a center receptacle, such as a tube, 228 that receives an input vial 150 (or output vial 160). Operation of input vial holder 214 with respect to input vial 150 will be described. Operation of the output vial holder 232 with respect to output vial 160 is identical and is not separately described. When the vial 150 is inserted into the receptacle 228, a lower end of the container vessel 152 extends between the clamping surfaces 220a, 220b. Clamping surface 220a includes a beveled surface 221a, and clamping surface 220b includes a beveled surface 221b. As the vial 150 is inserted into the receptacle 228, the lower end of the container vessel 152 contacts the beveled surfaces 221a, 221b to push the clamping surfaces 220a, 220b apart against the force of the spring 230 to permit the lower end of the container vessel to be inserted between the clamping surface 220a, 220b. The force of the spring 230 biasing the clamps 216a, 216b toward each other ensures contact between clamping surfaces 220a, 220b and the lower end of the container vessel 152.

A sensor opening 229 is formed in the receptacle 228 (only one opening 229 is shown in FIG. 8; another opening (not shown) is provided in a diametrically opposed wall of the receptacle 228 and is aligned with opening 229 shown in FIG. 8. Both openings will be referred to by reference number 229). Openings 229 on opposite sides of the receptacle 228 are for detecting the presence of a vial 150 or 160 in the receptacle 228 by a sensor. The sensor may comprise an optical sensor including an optical emitter 272a and optical receiver 272b (see FIG. 5) to be aligned with the openings 229 when the vial holder 214 or 232 is positioned beneath the capper/decapper 300. If no vial 150 or 160 is held in the receptacle 228 when the openings 229 are aligned with the sensor 272a/b, an optical signal emitted by the sensor emitter 272a will pass through the openings 229 and be received by the sensor receiver 272b. If a vial 150 or 160 is held in the receptacle 228 when the openings 229 are aligned with the sensor 272a/b, an optical signal emitted by the sensor emitter 272a will be blocked by the vial 150 or 160 and will not be received by the sensor receiver 272b, thereby causing the sensor to trigger a signal indicating that the vial 150 or 160 is present in the vial holder 214, 232.

As shown in FIGS. 8 and 12, clamp 216a includes an angled cam surface 222a, and clamp 216b includes a cam surface 222b. The function an operation of the cam surfaces 222a, 222b will be described below.

As shown in FIG. 9, cap holder 234 includes a base 242 that may be secured to the carousel 202 by mechanical fasteners or the like. A middle structure 235 extends above the base 242, is rotatable with respect to the base 242, and is fixedly coupled to one of the outer planetary gears 268a, 268b, 268c so as to be rotatable with the respective outer planetary gear about its axis of symmetry. Middle structure 235 includes a cup 236 for holding a cap. Slots 244a, 244b on opposite sides of the cup 236 are for detecting the presence of a cap in the cup 236 by the sensor 272a/b. If no cap is held in the cup 236 when the slots 244a, 244b are aligned with the sensor, an optical signal emitted by the sensor emitter 272a will pass through the slots 244a, 244b and be received by the sensor receiver 272b. If a cap is held in the cup 236 when the slots 244a, 244b are aligned with the sensor 272a/b, an optical signal emitted by the sensor emitter 272a will be blocked by the cap and will not be received by the sensor receiver 272b, thereby causing the sensor to trigger a signal indicating that a cap is present in the cap holder 234.

Opposed extensions 238a, 238b extend outwardly from the cup 236, and each extension 238a, 238b includes a cam surface 240a, 240b. The function and operation of the cam surfaces 240a, 240b will be described below.

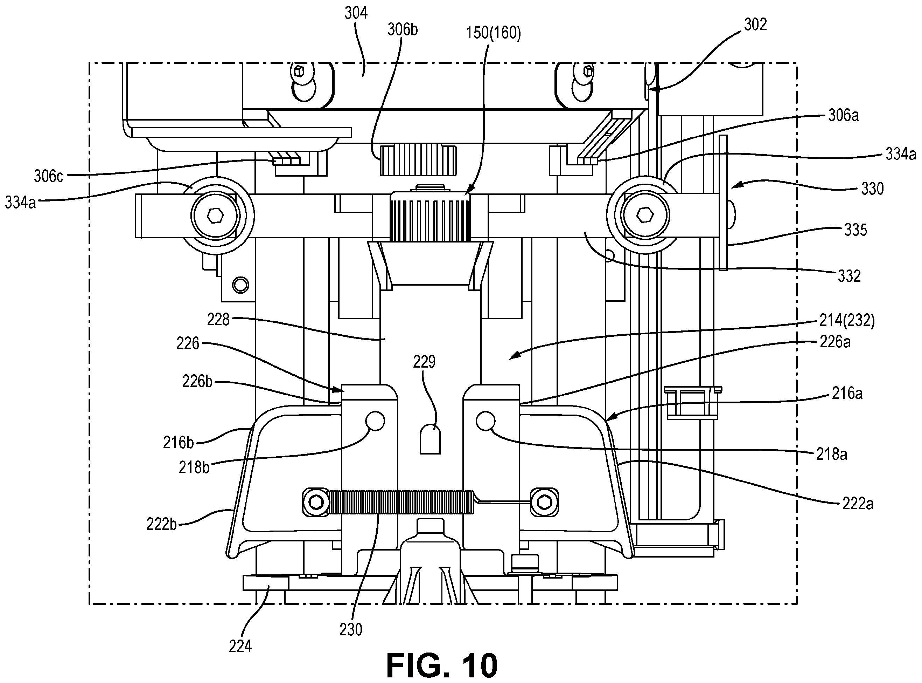

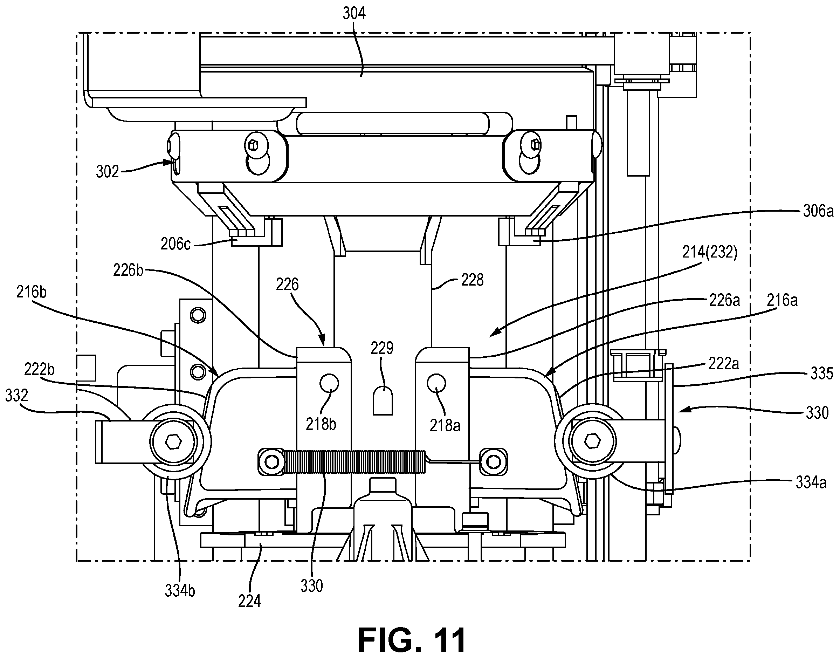

As shown in FIGS. 3, 4, and 5 (see also, FIGS. 10 and 11) capper 300 includes a capper chuck 302 comprising a chuck body 304 that is generally cylindrical in shape and jaws 306a, 306b, 306c mounted within the chuck body 304 for radial movement with respect to an axis of rotation of the chuck body 304. Capper chuck 302 may have two or more jaws actuated by a jaw actuator for automated (motorized and controlled) inward and outward radial movement to grasp or release a cap. In an embodiment, the jaw actuator comprises an actuator motor 308 coupled to a rotatable body (not shown) disposed within the chuck body 304 and independently rotatable with respect to the chuck body. The rotatable body may include helical tracks (not shown) to which the jaws 306a, 306b, 306c are coupled so that rotation of the rotatable body by the actuator motor 308 causes the jaws 306a, 306b, 306c to move radially inwardly or outwardly.

The capper 300 is configured to effect powered rotation of the capper chuck 302 about the axis of rotation of the chuck body 304. In the non-limiting example shown in the drawings (see FIGS. 3-5), powered rotation of the chuck body 304 is effected by means of a chuck rotation motor 320 coupled to the chuck body 304 by a belt 322 trained around output drive wheel 321 on an output shaft of the chuck rotation motor 320 and the outer periphery of the chuck body 304. A tension wheel 324 may be provided for maintaining and adjusting tension in the belt 322.

The capper chuck 302 and motor 320 are mounted on a guide track 336 carried by a vertical wall 190 for vertical movement up or down with respect to movable platform 202.

The capper chuck 302, and, more specifically, the axis of rotation of the chuck body 304, is located at a fixed radial position with respect to the axis of rotation 204 of the carousel 202. As the carousel 202 is rotated, the input (or first) vial holder 214 or the output (or second) vial holder 232, which are at the same radial distance from axis of rotation 204, is placed into a capping/decapping position with respect to the capper 300 when the axis of rotation of the respective vial holder 214, 232 is generally aligned with the axis of rotation of the chuck body 304, and a vial 150, 160 held in the vial holder 214, 232 is in a position such that the capper 300 can remove a cap from or secure a cap onto a container vessel 152, 162 held in the respective vial holder 214, 232.

The cap holder 234, also at the same radial distance from axis of rotation 204 as vial holders 214, 232, is at a transfer position with respect to the capper 300 when an axis of rotation of the cap holder 234 is generally aligned with the axis of rotation of the chuck body 304, and the cap holder 234 is in a position such that the capper 300 can place a cap onto the cup 236 or remove a cap from the cup 236.

As shown in FIGS. 3-5, 10, and 11, sample processing station 200 further includes a closure bracket 330 that moves vertically up and down with respect to rotatable platform 202 as will be described below. Closure bracket 330 includes a yoke 332 with spindle wheels 334a, 334b located at opposite ends of the yoke 332. A plate 335 is secure to an end of yoke 332 adjacent spindle wheel 334a. Plate 335 presents a relatively non-reflective surface to cover reflective surfaces of the yoke 332 and spindle wheel 334a that can interfere with bar code scanning by the scanner 270.

Closure bracket 330 is coupled to guide track 336 by a guide track interface 338 (see FIG. 4) for vertical movement with respect to the movable platform 202. Capper chuck 302, including motor 320, are supported on the closure bracket 330 and move up and down with the closure bracket 330. In one example, the capper chuck 302 is not configured for independent powered vertical movement.

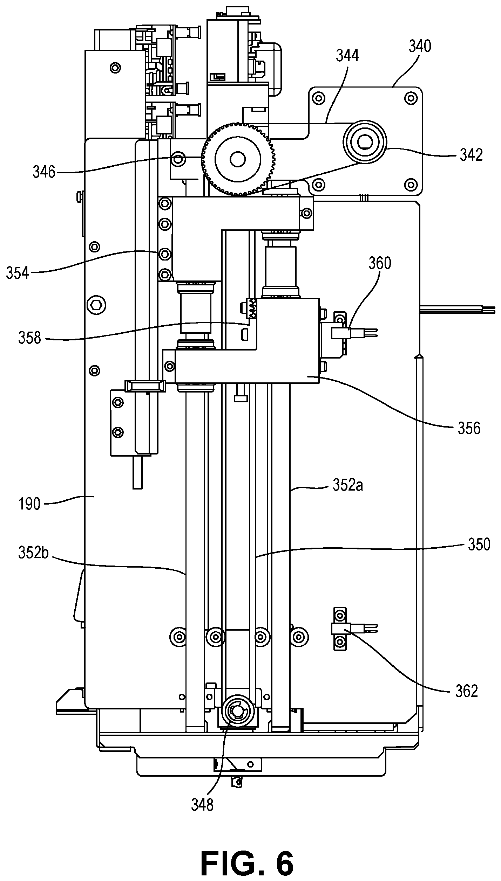

As shown in FIG. 6, a pair of parallel, vertically oriented guide rods 352a, 352b are located behind a vertical wall 190. The capper chuck 302 is attached through an opening in the vertical wall 190 to an upper guide bracket 354, and the closure bracket 330 is attached through an opening in the vertical wall 190 to a lower guide bracket 356. Upper guide bracket 354 and lower guide bracket 356 include linear bearings through which the guide rods 352a, 352b extend.

An elevator mechanism is configured to effect powered and controlled vertical movement of the closure bracket 330 along the guide track 336. Referring to FIGS. 5 and 6, the elevator mechanism includes an elevator motor 340 with a drive wheel 342 that drives a pulley wheel 346 via a drive belt 344. Pulley wheel 346 is mounted on a shaft on which an upper pulley wheel 364 (see FIG. 5) is also mounted. An elevator belt 350 is trained on the upper pulley wheel 364 and a lower pulley wheel 348. Elevator belt 350 is secured to the lower guide bracket 356 at a belt attachment 358.

As pulley wheel 346 is rotated by the elevator motor 340 via the drive belt 344, upper pulley wheel 364 rotates, thereby driving the elevator belt 350 over the lower pulley wheel 348. Driving the elevator belt 350 in one direction or the other will cause the lower guide bracket 356 to which the elevator belt 350 is attached - along with the closure bracket 330 attached to the lower guide bracket 356 - to move up and down along the guide rods 352a, 352b. As can be appreciated from the configuration shown in FIG. 6, in the illustrated, non-limiting embodiment, driving the elevator belt 354 in a clockwise rotation will cause the lower guide bracket 356 and closure bracket 330 to move down, and driving the elevator belt 354 in a counterclockwise rotation will raise the lower guide bracket 356 and the closure bracket 330.

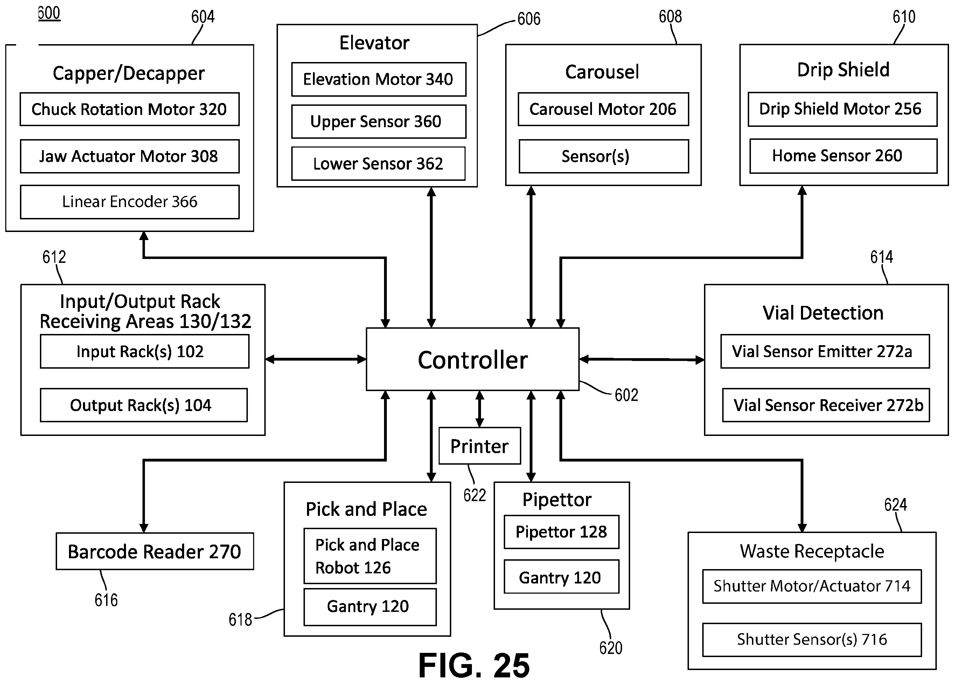

Processing station 200 may include an upper sensor 360 (e.g., a slotted optical sensor) for detecting when the upper guide bracket 354 (and capper chuck 302) or lower guide bracket 356 (and closure bracket 330) are at a predefined, raised position and a lower sensor 362 (e.g., a slotted optical sensor) for detecting when the upper guide bracket 354 (and capper chuck 302) or lower guide bracket 356 (and closure bracket 330) are at a predefined lowered position. A vertically mounted linear encoder may be provided for detecting a vertical position of the capper chuck 302. A linear encoder is not shown in FIGS. 4, 5, or 6, but the linear encoder 366 is identified in FIG. 25 as part of a capper/decapper module 604 of a control architecture 600 described below. The linear encoder may be operatively coupled to upper guide bracket 354 and/or lower guide bracket 356 for detecting a vertical position of the capper chuck 302. For example, the linear encoder may be operatively configured for detecting the position of the closure bracket 330 along the guide track 336, and/or the linear encoder - or a different, additional linear encoder - may be operatively configured for detecting a position of the upper guide bracket 354 and/or lower guide bracket 356 with respect to guide rods 352a, 352b.

As shown in FIG. 10, when the capper chuck 302 is at a raised position, unengaged with a vial 150 (160) held in the vial holder 214 (232), the closure bracket 330 is at a raised position between the clamps 216a, 216b of the vial holder 214 (232) and the capper chuck 302. When the capper chuck 302 is lowered to engage a vial 150 (160) held in the vial holder 214 (232) at a capping/decapping position with respect to the capper/decapper 300, as shown in FIG. 11, the closure bracket 330 is then lowered relative to the vial holder 214 (232) so that the spindle wheels 334a, 334b roll over the cam surfaces 222a, 222b of the clamps 216a, 216b. The planetary gear system described above rotates the holders 214, 232, 234 about their respective axes of rotation as the rotatable platform 202 rotates so the holders 214, 232, 234 are always in the same orientation when at the capping/decapping position or the transfer position below the capper 300. As the spindle wheels 334a, 334b roll over the respective cam surfaces 222a, 222b, which are angled outwardly in a downward direction, the respective clamps 216a, 216b, which pivot about pins 218a, 218b, are pushed inwardly by the wheels 334a, 334b and yoke 332 to increase the pressure between the clamping surfaces 220a, 220b (see FIG. 12) and the lower end of the container vessel 152 (162) of the vial 150 (160). In addition, as the spindle wheels 334a, 334b roll over the respective cam surfaces 222a, 222b, the yoke 332 helps ensure the capper chuck 302 is aligned with the vial 150 (160) held in the vial holder 214 (232).

The capper chuck 302, which is supported by, but is not attached to, the closure bracket 330, descends vertically with the closure bracket 330 until the chuck body 304 contacts the top of the vial 150 (160). As the closure bracket 330 continues to descend over the clamps 216a, 216b of the vial holder 214 (232), the capper chuck 302 remains at a fixed, vertical position supported by the vial 150 (160), and the closure bracket 330 moves independently of the capper chuck 302. When the closure bracket 330 rises, the capper chuck 302 remains at a fixed vertical position supported by the vial 150 (160) until the closure bracket 330 contacts the capper chuck 302, and thereafter the closure bracket 330 and capper chuck 302 rise together.

Similarly, when the capper chuck 302 is at a raised position, unengaged with a cap held in the cap holder 234, the closure bracket 330 is at a raised position between the extensions 238a, 238b of the cap holder 234 and the capper chuck 302. When the closure bracket 330 is lowered relative to the cap holder 234, the spindle wheels 334a, 334b roll over the cam surfaces 240a, 240b of the extensions 238a, 238b, and the yoke 332 helps to ensure the cap held in the cap holder 234 is aligned the capper chuck 302.

Referring to FIGS. 3, 4, 5, sample processing station 200 further includes a drip shield 250 including a drip shield motor 256, a drip shield arm 254 attached to an output shaft of the drip shield motor 256, and a drip shield platter 252 mounted to a distal end of the drip shield arm 254. The drip shield motor 256 is configured to rotate the drip shield arm 254 and drip shield platter 252 about an axis of rotation of its output shaft between a first (or standby) position at which the drip shield platter 252 is rotated away from the capper 300 and will not interfere with vertical movement of the closure bracket 330 and capper chuck 302 and a second (or deployed) position, shown in FIGS. 3, 4, 5, at which the drip shield platter 252 is positioned between the receptacle 228 of the vial holder 214 (232) and the capper chuck 302. One or more sensors may be provided for detecting and indicating when the drip shield 250 is in a specific position. In an embodiment, drip shield motor 256 is a stepper motor with two end of travel sensors and without encoder. For example, sample processing station 200 may include a home sensor comprising an optical switch 260 that is tripped by a home flag (not shown) attached to the drip shield arm 254 when the drip shield is in the standby position. Similarly, sample processing station 200 may include a sensor comprising an optical switch (which may comprise optical switch 260 or a different optical switch (not shown)) that is tripped by a flag (not shown) attached to the drip shield arm 254 when the drip shield is in the deployed position at which the drip shield platter 252 is positioned between the receptacle 228 of the vial holder 214 (232) and the capper chuck 302.

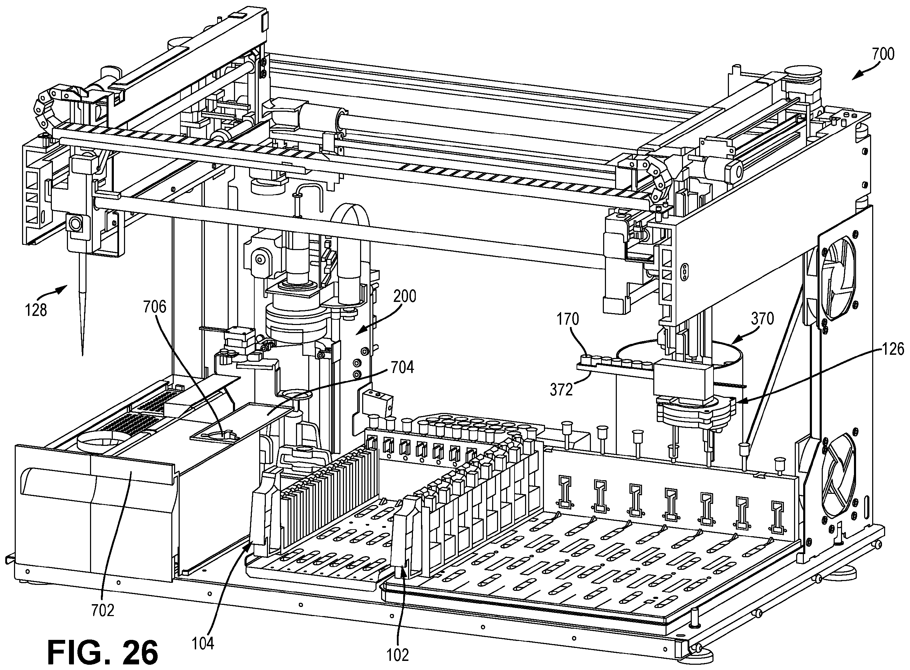

In an alternate embodiment and workflow, a sample collection vial 150 (e.g., of the type shown in FIGS. 13 and 14 and described above) is transferred from an input rack 102 to the carousel 202 of the sample processing station 200, the cap 156 and collection swab 158 are removed from vessel 152 of sample collection vial 150 and are discarded into a waste receptacle, and a replacement cap without a swab (e.g. of the type of cap 164 shown in FIG. 15 and described above) is then placed on the vessel 152 of sample collection vial 150, and the re-capped sample collection vial is transferred from the carousel 202 to an output rack 104. A modified sample processing instrument to facilitate this alternate workflow is shown FIGS. 26, 27, and 28. Sample processing instrument 700 includes many of the components included in sample processing instrument 100 shown in FIGS. 1 and 2 and described above (which common components have like reference numbers in FIGS. 26-28), and instrument 700 is identical to sample processing instrument 100, except for the modifications described below.

Sample processing instrument 700 may include a mechanism for presenting replacement caps 170 at a position and orientation permitting the replacement caps 170 to be picked up by the pick-and-place robot 126 and transferred to the cap holder 234 of the carousel 202 of the sample processing station 200. Replacement caps 170 do not include a connected collection swab and may be penetrable by a pipette tip. Each replacement cap 170 may be the same as cap 164 shown in FIG. 15 and described above.

In one example, the mechanism for presenting replacement caps 170 is a vibratory hopper 370 with a cap chute 372 for singulating and presenting in an upright orientation individual caps 170 provided to the hopper 370 in bulk and at random orientations. Hopper 370 is a vibrating feeder/sorter configured to sort a plurality of randomly arranged and oriented caps 170 and caused them to move in a desired orientation to a location at the end of the cap chute 372, where each cap 170 may be grasped one-at-a-time by the pick-and-place robot 126 and transported to the cap holder 234 of the carousel 202.

Instrument 700 includes a waste receptacle 702 of sufficient dimensions (e.g., height) to receive and hold a cap 156 with a collection swab 158 attached to it and with an access opening configured to permit a cap with a collection swab attached to it to be placed into the waste receptacle. As shown in FIGS. 26-28, waste receptacle 702 may be supported on a deck or surface on which other components, such as the input rack(s) 102, output rack(s) 104, sample processing station 200, etc. are supported, or the waste receptacle may be located below the deck with a chute provided to direct caps 156 and swabs 158 into the receptacle.

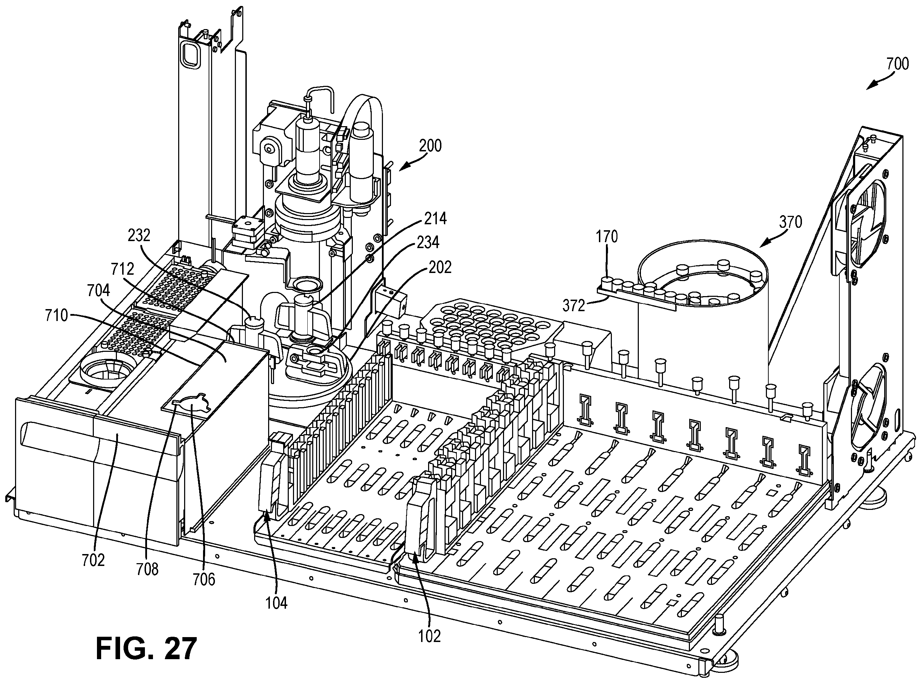

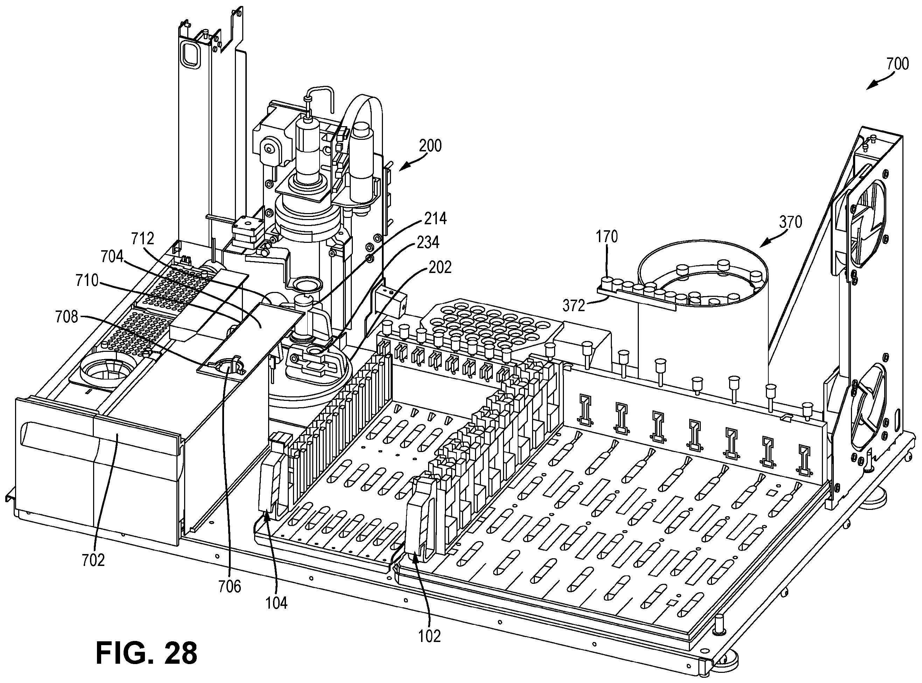

A waste receptacle shutter 704 having an opening 706 is coupled to the waste receptacle 702 and is configured to be movable between a closed position, shown in FIG. 27, at which opening 706 is not aligned with the access opening to the waste container 702 (or an opening to a chute (not shown) to a waste receptacle located below the deck) to an open position, shown in FIGS. 26 and 28, at which opening 206 is aligned with an access opening to the waste receptacle 702 or a waste receptacle chute. When the shutter 704 is in the closed position (FIG. 27) an end 712 of the shutter 704 is retracted from carousel 202, and when the shutter 704 is in the open position (FIGS. 26, 28), end 712 of the shutter 704 extends over the carousel 202.

Instrument 700 may include a motor and/or linear actuator coupled to shutter 704 for effecting powered movement of the shutter 704 between the open and closed positions. A motor and/or linear actuator is not shown in FIGS. 26 - 28, but a shutter motor/actuator 714 is identified in FIG. 25 as part of a waste receptacle module 624 of the control architecture 600 described herein. Instrument 700 may include one or more sensors - e.g., optical detector(s), linear encoder(s), etc. - for detecting a position of the shutter 704 and/or when the shutter 704 is in the closed position or open position. Shutter position sensors are not shown in FIGS. 26 - 28, but shutter sensors 716 are identified in FIG. 25 as part of the waste receptacle module 624 of the control architecture 600 described herein.

As will be described below, shutter 704 may function as a drip shield, for which purpose, shutter 704 may have a raised peripheral edge 710 to retain drops of liquid that fall onto the shutter 704.

FIG. 25 is a block diagram of the control architecture 600 for the sample processing instrument 100 or instrument 700. Conceptually, the control architecture 600 can be described as modules, including structurally and/or functionally related elements, each corresponding to a different operation and/or component (or group of components) of the instrument 100 or instrument 700. Such elements may include a capper/decapper module 604, an elevator module 606, a carousel module 608, a drip shield module 610, an input rack receiving area and output rack receiving area module 612, a vial detection module 614, a barcode reader module 616, a pick-and-place module 618, a pipettor module 620, a printer module 622, and a waste receptacle module 624. All the modules are in communication with a controller 602, which may include processing circuitry configured to effect computational and/or control steps by receiving one or more input values or signals, executing one or more algorithms stored on non-transitory machine-readable media (e.g., software) that provide instructions for manipulating or otherwise acting on or in response to the input values or signals, and output one or more output values or signals. Such processing circuitry may include one or more processors (e.g., one or more general purpose microprocessors and/or one or more other processors, such as one or more computer(s), an application specific integrated circuit (ASIC), field-programmable gate arrays (FPGAs), and the like), which processors may be co-located in a single housing or in a single data center or may be geographically distributed (i.e., the processing circuitry may be encompassed by a distributed computing apparatus). The controller 602 executes a control algorithm - examples of which are described below - that governs operation of each element. Each module may include a combination of electromechanical components (e.g., electric motors, actuators), for effecting certain operations of the components/devices of the module, as well as sensors for monitoring components and devices of the module. Controller 602 may transmit command signals to each module to activate the electromechanical devices of the module to effect a desired operation and receives signals from the sensors of each module for monitoring such operations.

The carousel module 608 of the control architecture 600 includes carousel motor 206 and effects and controls operation of the carousel 202 of the sample processing station 200. Carousel module 608 receives command signals from the controller 602 to activate the motor 206 or deactivate the motor 206 to start and stop rotation of the carousel 202. Such command signals may comprise on/off signals or may comprise commands to operate the motor 206 for a specified period, for example, by commanding a specified number of steps of a stepper motor. Carousel module 608 may further include one or more sensors (not shown) for detecting a rotational position of the carousel 202 and/or an amount of movement (e.g., numbers of rotations) of the carousel 202. Such sensors may include any suitable sensor, such as, magnetic sensors, optical centers, mechanical sensors, or rotary encoders coupled to the rotation of the carousel 202 and/or to rotation of the motor 206.

Module 612 of the control architecture 600 for the input rack receiving area 130 and the output rack receiving area 132 may include one or more sensors for detecting when an input rack 102 has been inserted into a lane of the input rack receiving area 130 and one or more sensors for detecting when an output rack 104 has been inserted into a lane of the output rack receiving area 132. One or more sensors (not shown) may also be provided for detecting if the locking features (e.g., pins 142 inserted into racks 102/104 extending into openings 138 (see FIGS. 1, 2)) for retaining the racks 102, 104 within the receiving areas 130, 132, respectively, have been activated.

Vial detection module 614 of the control architecture 600 includes the vial sensor emitter 272a and the vial sensor receiver 272b for detecting the presence of a vial 150 or 160 in the receptacle 228 of the input vial holder 214 or the output vial holder 232. A light beam emitted by the sensor emitter 272a may be activated by a command from the controller 602, and the signal received at the receiver 272b is communicated to the controller 602.

Printer module 622 controls and monitors a printer, which may include a print head (e.g., a thermal print head), one or more motors, and sensors capable of, for example, detecting the presence of a vial within the printer and for detecting characteristics of a label on the vial.

Pick-and-place robot module 618 of the control architecture 600 controls and monitors operation of the pick-and-place robot 126 and gantry 120 (to the extent that movement of the pick-and-place robot 126 is effected by components of the gantry 120), including the on-demand activation of one or more motors or actuators for effecting X, Y, and Z movement of the robot 126, as well as the on-demand activation of motors or actuators for controlling manipulable grasping jaws of the robot 126. Pick-and-place robot module 618 may also monitor one or more sensors for detecting X, Y, and Z positions of the pick-and-place robot 126 as well as the status of the grasping jaws (e.g., opened or closed) and whether a vial has been grasped by the jaws.

Pick-and-place robot module 618 may include sensors (not shown) for detecting when the pick-and-place robot 126 has contacted another structure. Such sensors may include accelerometers for detecting the cessation of movement of the robot 126 in an X, Y, or Z direction and/or motor load detectors for detecting motor loads exceeding a specified threshold, thereby indicating the robot has contacted an immovable object. Thus, contact with the teaching post 180 can be detected as the pick-and-place robot 126 is moved in the X, Y, and Z directions, and pick-and-place robot module 618 will ascertain the coordinates, e.g., via sensors, at which movement in the X, Y, and Z directions was stopped by the teaching post 180 and communicate those coordinates to the controller 602 for recording to memory.

Pipettor module 620 of the control architecture 600 controls and monitors operation of the pipettor 128 and gantry 120 (to the extent that movement of the pipettor 128 is effected by components of the gantry 120), including the on-demand activation one or more motors or actuators for effecting X, Y, and Z movements of the pipettor 128, activation of valves and/or pumps for controlling pipettor pressures for aspirating or dispensing fluids, capacitive fluid level detection functionality, mucoid detection functionality, etc.

Pipettor module 620 may include sensors (not shown) for detecting when the pipettor 128 has contacted another structure. Such sensors may include accelerometers for detecting the cessation of movement of the pipettor 128 in an X, Y, or Z direction and/or motor load detectors for detecting motor loads exceeding a specified threshold, thereby indicating the robot has contacted an immovable object. Thus, contact with the teaching post 180 can be detected as the pipettor 128 is moved in the X, Y, and Z directions, and pipettor module 620 will ascertain the coordinates, e.g., via sensors, at which movement in the X, Y, and Z directions was stopped by the teaching post 180 and communicate those coordinates to the controller 602 for recording to memory.

Barcode reader module 616 of the control architecture 600 controls the barcode reader 270, activating the reader to read a machine readable label on a vial and transmitting the information read to the controller 602.

The capper/decapper module 604 of the control architecture 600 includes chuck rotation motor 320, jaw actuator motor 308, and linear encoder 366 and effects and controls operation of the capper chuck 302 of the capper 300 for grasping and rotating a cap to remove the cap from a container vessel of a vial 150 or 160 or to secure the cap to the container vessel of the vial 150 or 160. Capper/decapper module 604 receives command signals from the controller 602 to activate jaw actuator motor 308 in a first or second direction to selectively close or open jaws 306a, 306b, 306c with respect to a cap and to selectively deactivate the motor 308. When jaws 306a, 306b, 306c are closed onto a cap, capper/decapper module 604 receives command signals from the controller 602 to activate chuck rotation motor 320 in a cap-removing direction or a cap-securing direction and to deactivate motor 320. While the chuck rotation motor 320 is rotating in a cap-removing direction, a signal received from the linear encoder 366 indicates that the thread of the cap 156 is completely disengaged from the threaded neck 153 of the vessel 152, as described below, to thereby signal the controller 602 to terminate rotation motor 320.

The elevator module 606 of the control architecture 600 includes elevation motor 340, upper sensor 360, and lower sensor 362. Elevator module 606 receives command signals from the controller 602 to activate the motor 340 in ascending or descending directions or deactivate the motor 340 to start and stop vertical movement of the closure bracket 330 (and the capper chuck 302 supported thereby). Such command signals may comprise on/off signals or may comprise commands to operate the motor 340 for a specified period of time, for example, by commanding a specified number of steps of a stepper motor. Motor 340 activation and deactivation commands may be based on signals received by the controller 602 from the upper sensor 360 or the lower sensor 362, for example, by maintaining a motor activation command in a first motor direction for ascending movement until the upper sensor 360 is triggered to indicate maximum, or highest, vertical travel of the closure bracket 330 or by maintaining a motor activation command in a second motor direction for descending movement until the lower sensor 362 is triggered to indicate minimum, or lowest, vertical travel of the closure bracket 330. Motor 340 activation commands may be based on signals received by the controller 602 from the linear encoder 366 of capper/decapper module 604, as described below.

The drip shield module 610 of the control architecture 600 includes drip shield motor 256 and one or more sensors, such as home sensor 260, and effects and controls operation of the movable drip shield 250 between the standby position and the deployed position. Drip shield module 610 receives command signals from the controller 602 to activate the motor 256 in first or second directions or deactivate the motor 256 to start and stop movement of the drip shield 250. Such command signals may comprise on/off signals or may comprise commands to operate the motor 256 for a specified period of time, for example, by commanding a specified number of steps of a stepper motor. Motor 256 activation and deactivation commands may be based on signals received by the controller 602 from the sensor 260 (and possibly one or more other sensors), for example, by maintaining a motor activation command in a first motor direction for moving the drip shield 250 from the standby position to the deployed position until sensor 260 or other sensor indicates the drip shield 250 is in the deployed position or by maintaining a motor activation command in a second motor direction for moving the drip shield 250 from the deployed position to the standby position until sensor 260 or other sensor indicates the drip shield 250 is in the standby position.

The waste receptacle module 624 of the control architecture 600 includes shutter motor/actuator 714, and one or more shutter position sensors 716, and effects and controls operation of the waste receptacle shutter 704 between the closed position and the open position. Waste receptacle module 624 receives command signals from the controller 602 to activate the motor/actuator 714 in first or second directions or deactivate the motor/actuator 714 to start and stop movement of the shutter 704. Such command signals may comprise on/off signals or may comprise commands to operate the motor/actuator 714 for a specified period of time, for example, by commanding a specified number of steps of a stepper motor. Motor/actuator 714 activation and deactivation commands may be based on signals received by the controller 602 from the shutter sensor(s) 716 (and possibly one or more other sensors), for example, by maintaining a motor activation command in a first motor direction for moving the shutter 704 from the closed position to the open position until sensor(s) 716 indicate the shutter 704 is in the open position or by maintaining a motor activation command in a second motor direction for moving the shutter 704 from the open position to the closed position until sensor(s) 716 indicate the shutter 704 is in the closed position.

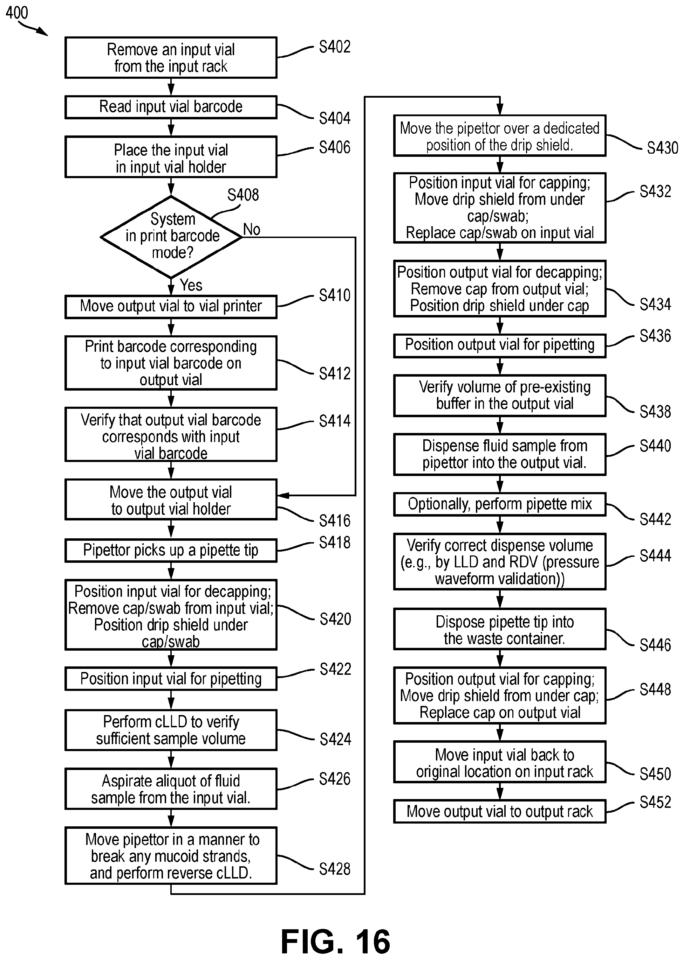

FIG. 16 shows a flow diagram illustrating one exemplary embodiment of a method 400 for transferring an amount of sample material from an input vial 150 to an output vial 160 using sample processing instrument 100. Method 400 may be performed with or used in conjunction with any of the computer systems, devices, mechanisms, elements, sensors, or components disclosed herein, among other devices, including control architecture 600 illustrated in FIG. 25 and described above. Method 400 may be coded and stored as a computer-executable control algorithm for controlling the operation(s) of one or more of the computer systems, devices, mechanisms, elements, or components disclosed herein, among other devices via control architecture 600. In various embodiments, some of the method steps shown may be performed concurrently, in a different order than shown, or may be omitted. Additional method steps may also be performed as desired.

Before commencing method 400, at least one sample collection vial (input vial) 150 and at least one output vial 160 are placed in the input rack receiving area 130 of the instrument 100. In one example, an input rack 102 holding one or more sample collection vials (or input vials) is placed in the input rack receiving area 130 of the instrument 100, and an output rack 104, which may be initially empty, is placed in the output rack receiving area 132 of the instrument 100. Input rack 102 may hold associated pairs of input vials 150 containing liquid sample material and output vials 160 that have caps, such as caps that do not include a connected collection swab and which may be penetrable by a pipette tip, that permit the vial to be processed in an automated instrument. The presence of at least one input rack 102 in the input rack receiving area 130 and at least one output rack 104 in the output rack receiving area 132, and whether the racks are locked in place, may be verified via sensors of the input rack receiving area and output rack receiving area module 612.

### Flow of method 400 begins at step S402

In step S402, pick-and-place module 618 and controller 602 remove an input vial 150 containing sample material from an input rack 102 using the pick-and-place robot 126 and gantry 120.

In step S404, a barcode (or other machine-readable label or tag) on the input vial 150 is read by the barcode reader 270 (or other reader of the machine-readable label or tag), and information read by the reader 270 is communicated to the controller 602. In one embodiment, the pick-and-place robot 126 positions the input vial 150 in front of the barcode reader 270 and rotates the input vial 150 while the barcode reader 270 reads the barcode.

In step S406, the input vial 150 is placed in the input vial holder 214. In an embodiment, step S406 comprises moving (e.g., rotating) the movable platform 202 of the sample processing station 200 to place the input vial holder 214 at a predetermined position, as controlled by the carousel module 608 of control architecture 600, that is accessible by the pick-and-place robot 126 and placing the input vial 150 in the input vial holder 214 with the pick-and-place robot 126 and gantry 120. The movable platform may then be moved (e.g., by rotating), if necessary, to place the input vial holder 214 in a predetermined position (as determined and controlled by the carousel module 608 of control architecture 600) at which openings 229 in the receptacle 228 of the input vial holder 214 are aligned with optical emitter 272a and optical receiver 272b for confirming the presence of an input vial 150 in the input vial holder 214 via vial detection module 614 of control architecture 600.

Step S408 is a determination of whether the system is in print barcode mode - i.e., whether a barcode or other machine-readable label is to be printed onto an output vial. If the system is not in pint barcode mode, flow continues to step S416, and if the system is in print barcode mode, flow continues to step S410.

In step S410, if the system is in print barcode mode, pick-and-place module 618 and controller 602 transport an output vial 160 to the printer (not shown). In an embodiment, step S410 comprises transferring an output vial 160 by the pick-and-place robot 126 and gantry 120 from input rack 102 to the printer.

In step S412, a barcode, or other machine readable label, corresponding to the barcode, label, or tag read on the input vial 150 is printed on the output vial 160 by the printer. In an embodiment, the barcode, label, or tag printed on the output vial 160 is at least partially identical to the barcode, label, or tag read on the input vial 150 as communicated to the printer from controller 602 via printer module 622 of the control architecture 600. Exemplary processes for reading a label, such as a barcode, on an input vial and printing a corresponding label on an output vial are described in U.S. Patent No. 9,335,336 and U.S. Patent No. 9,724,948.

In step S414, the barcode or other machine readable label printed on the output vial 160 is verified to correspond to the barcode or label read on the input vial 150. In one embodiment, the pick-and-place robot 126 positions the output vial 160 in front of the barcode reader 270 and rotates the output vial 160 while the barcode reader 270 reads the barcode. The image read by reader 270 is communicated to the controller via barcode reader module 616 of the control architecture 600, and controller 600 compares the image read by the reader 270 with an intended image.

In step S416 the output vial 160 is placed in the output vial holder 232. In an embodiment, step S416 comprises moving (e.g., rotating) the movable platform 202 to place the output vial holder 232 at a predetermined position, as controlled by the carousel module 608 of control architecture 600, at which the output vial holder 232 is accessible by the pick-and-place robot 126 and placing the output vial 160 into the output vial holder 232 with the pick-and-place robot 126 and gantry 120. The movable platform may then be moved (e.g., by rotating) to place the output vial holder 232 in a predetermined position, as determined and controlled by the carousel module 608 of control architecture 600, at which openings 229 in the receptacle 228 of the output vial holder 232 are aligned with optical emitter 272a and optical receiver 272b for confirming the presence of an output vial 160 in the output vial holder 232 by vial detection module 614 of control architecture 600.

In step S418, pipettor 128 is moved by pick-and-place module 618 and controller 602 to pipette tip tray 108 to pick up a disposable pipette tip.

In step S420, the cap 156 and collection swab 158 are removed from vessel 152 of input vial 150. In an embodiment, step S420 comprises moving (e.g., rotating) movable platform 202 to place the input vial holder 214 and the input vial 150 held thereby in a capping/decapping position beneath the capper 300 at which the input vial is operatively accessible by the capper 300, as controlled by the carousel module 608 of control architecture 600. Upon receiving a signal via the carrousel module 608 that the input vial holder 214 is in the capping/decapping position, controller 602 activates elevation motor 340 via the elevator module 606 to lower the capper chuck 302 onto the cap 156 of the input vial 150. When the lower sensor 362 of the elevator module 606 is triggered, indicating that the closure bracket 330 is at its lowest position and engaged with the cam surfaces 222a, 222b of the clamps 216a, 216b, and the capper chuck 302 is supported on top of the input vial 150, the jaws 306a, 306b, 306c are actuated by actuator motor 308 as commanded by controller 602 and capper/decapper module 604 to grasp the cap 156, and the chuck body 304 is rotated by rotation motor 320 as commanded by controller 602 and capper/decapper module 604 while the container vessel 152 is held by clamping surfaces 220a, 220b of clamps 216a, 216b, respectively, to remove the cap 156 from the vessel 152 of the input vial 150. As the chuck body 304 rotates the cap 156, the threads of the cap 156 disengaging from the threaded neck 153 of the vessel 152 raise the chuck body 304 as detected by linear encoder 366 of the capper/decapper module 604. When the threads of the cap 156 completely disengage from the threaded neck 153 of the vessel 152, there is a drop of the unsupported chuck body 304 (one thread pitch) that can be detected by linear encoder 366, which, in one example, is accurate to 1/40 mm. Upon detection of the drop, rotation motor 320 is terminated by capper/decapper module 604 and controller 602, and the chuck body 304 stops rotating. Controller 602 then activates elevation motor 340 via the elevator module 606 to raise the closure bracket 330 and the capper chuck 302 supported on the closure bracket 330 until the upper sensor 360 of the elevator module 606 is triggered, indicating that the closure bracket 330 is at its highest position, which corresponds to a position of the capper chuck 302 at which the head 159 of the swab 158 attached to cap 156 has cleared the top of the vessel 152. While the capper chuck 302 is being raised, the openings 229 in the receptacle 228 of the input vial holder 214 are aligned with optical emitter 272a and optical receiver 272b for confirming that the input vial 150 remains in the input vial holder 214, via vial detection module 614 of control architecture 600, to ensure input vial 150 is not inadvertently removed from the input vial holder 214 by the rising capper chuck 302. Upon controller 602 receiving a signal via the elevator module 608 that the capper chuck 302 is in the raised position, controller 602 activates drip shield motor 256 via the drip shield module 610 to rotate from the standby position to the deployed position shown in FIG. 3 at which the drip shield platter 252 is beneath the cap 156 and swab 158 held in the capper chuck 302 (as detected by sensor 260 of the drip shield module 610). As noted above, the range of vertical travel of the capper chuck 302 must be sufficient to completely remove the swab 158 from the vessel 152, and the distance between the capper chuck 302 and the drip shield platter 252 must accommodate the length of the swab 158 extending below the cap 156 held in the capper chuck 302.

In step S422, the vessel 152 of input vial 150 is positioned for pipetting. In an embodiment, step S422 comprises moving (e.g., rotating) movable platform 202 to place the input vial holder 214 and the vessel 152 of input vial 150 held thereby at a predetermined position that is accessible by the pipettor 128 (a pipetting position), as controlled by the carousel module 608 of control architecture 600. Upon receiving a signal via the carrousel module 608 that the input vial holder 214 is in the pipetting position, controller 602 activates pipettor 128, via the pipettor module 620, to move to a position above the input vial holder 214 and lower the disposable tip held on the pipettor 128 into the input vial 150 held in the input vial holder 214.

In step S424, sufficient sample volume within the vessel 152 of input vial 150 is verified, for example, by conducting a capacitive liquid level detection ("cLLD") of the fluid within the input vial 150 using the pipettor 128 and the pipette tip attached thereto as is known in the art.

Assuming there is sufficient fluid within the vessel 152 of input vial 150, in step S426, the disposable tip attached to the pipettor 128 is lowered under control of the controller 602 and pipettor module 620 to insert the pipette tip into the vessel 152 of input vial 150, and an amount of sample material 154 is aspirated by the pipettor 128.

In optional step S428, the pipettor is moved in a manner to break any mucoid stand attached to the pipette tip, and reverse capacitive liquid level detection is performed to confirm there is no mucoid strand attached to the pipette tip. Exemplary methods of moving the pipettor to break mucoid strands and using reverse capacitive liquid level detection to confirm there is no mucoid strand attached to the pipette tip, as implemented by controller 602 and pipettor module 620, are described in U.S. Patent No. 9,335,336.

In step S430, controller 602 and pipettor module 620 move the pipettor 128 to a standby position above a fixed drip shield 140 (see FIGS. 1 and 2) adjacent the sample processing station 200.

In step S432, cap 156 and collection swab 158 are re-secured on vessel 152 of input vial 150. In an embodiment, step S432 comprises the carousel module 608 and controller 602 positioning vessel 152 of input vial 150 in a capping position by moving (e.g., rotating) movable platform 202 to place the input vial holder 214 and the vessel 152 of the input vial 150 held thereby in the capping/decapping position beneath the capper 300. The drip shield module 610 and controller 602 rotates the movable drip shield 250 from the deployed position shown in FIG. 3, at which the drip shield platter 252 is beneath the cap 156 and swab 158 held in the capper chuck 302, to the standby position at which no portion of the drip shield 250 will interfere with movement of the capper chuck 302. Elevator module 606 and controller 602 lowers the capper chuck 302 onto the vessel 152 of input vial 150 to place the cap 156 onto the vessel 152 of the input vial 150 while inserting the swab 158 into the vessel 152. Capper/decapper module 604 and controller 602 rotate the chuck body 304 while the container vessel 152 is held by clamping surfaces 220a, 220b of clamps 216a, 216b, respectively, to screw the cap 156 onto the vessel 152, after which the capper/decapper module 604 and controller 602 retract the jaws 306a, 306b, 306c to release the cap 156. Elevator module 606 and controller 602 then raise the capper chuck 302 above the input vial holder 214 to a position at which the capper chuck 302 will not interfere with rotation of the movable platform 202. Although no cap is held in the capper chuck 302 at the end of step S432, the movable drip shield 250 may optionally be moved by the drip shield module 610 and controller 602 from the standby position to the deployed position shown in FIG. 3 beneath the capper chuck 302.

In step S434 cap 164 is removed from vessel 162 of output vial 160. In an embodiment, step S434 comprises the carousel module 608 and controller 602 positioning the output vial 160 for decapping by moving (e.g., rotating) movable platform 202 to place the output vial holder 232 and the output vial 160 held thereby in the capping/decapping position beneath the capper 300. Elevator module 606 and controller 602 lower the capper chuck 302 of the capper 300, capper/decapper module 604 and controller 602 actuate the jaws 306a, 306b, 306c to grasp the cap 164, and capper/decapper module 604 and controller 602 rotate the chuck body 304 while the container vessel 162 is held by clamping surfaces 220a, 220b of clamps 216a, 216b, respectively, to remove the cap 164 from the vessel 162 of the output vial 160. Elevator module 606 and controller 602 raise the capper chuck 302 in which the removed cap 164 is grasped above the output vial holder 232, and the drip shield module 610 and controller 602 optionally move the movable drip shield 250 from the standby position to the deployed position shown in FIG. 3 at which the drip shield platter 252 is beneath the capper chuck 302 and the cap 164 held thereby.

In step S436, vessel 162 of output vial 160 is positioned for pipetting. In an embodiment, step S436 comprises the carousel module 608 and controller 602 moving movable platform 202 (e.g., by rotating) to place the output vial holder 232 and vessel 162 of the output vial 160 held thereby at a position that is accessible by the pipettor 128 (a pipetting position). Pipettor module 620 and controller 602 move the pipettor 128 to a position above the vessel 162 held by the output vial holder 232.

In some embodiments, vessel 162 of output vial 160 is pre-filled with an amount of buffer solution, and, in such embodiments, method 400 may include optional step S438 which comprises verifying the volume of buffer in the vessel 162 of output vial 160, e.g., by cLLD.

In step S440, pipettor module 620 and controller 602 lower the pipettor 128 to insert the pipette tip into the vessel 162 of output vial 160, and an amount of sample material is dispensed from the pipettor 128 into the vessel 162.

In optional step S442, a pipette mix is optionally performed by alternately aspirating and dispensing the contents of the vessel 162 of output vial 160 one or more times with pipettor 128.

In step S444, the system verifies that the correct volume of sample material has been dispensed into the vessel 162 of output vial 160, e.g., by liquid level detection ("LLD") and RDV (pressure waveform validation)). For pressure waveform validation, pipettor 128 has a pressure sensor, e.g., inside a plunger of the pipettor, which outputs a pressure waveform during fluid aspiration or fluid dispense. The waveform is analyzed by the controller 5602 for clot or air detection.

In step S446, pipettor module 620 and controller 602 move the pipettor 128 to a position above the waste bin 110 and eject the used pipette tip from the pipettor 128 into the waste bin 110.

In step S448, cap 164 is secured onto vessel 162 of output vial 160. In an embodiment, step S448 comprises the carousel module 608 and controller 602 moving movable platform 202 (e.g., rotating) to place the output vial holder 232 and the vessel 162 of output vial 160 held thereby in the capping/decapping position beneath the capper 300. Drip shield module 610 and controller 602 rotate drip shield 250 from the deployed position shown in FIG. 3 at which the drip shield platter 252 is beneath the capper chuck 302 and cap 164 to the standby position at which no portion of the drip shield 250 will interfere with movement of the capper chuck 302. Elevator module 606 and controller 602 lower the capper chuck 302 to place the cap 164 onto the vessel 162 of the output vial 160. Capper/decapper module 604 and controller 602 rotate the chuck body 304 while the container vessel 162 is held by clamping surfaces 220a, 220b of clamps 216a, 216b, respectively, to screw the cap 164 onto the vessel 162, after which capper/decapper module 604 and controller 602 retract the jaws 306a, 306b, 306c to release the cap 164. Elevator module 606 and controller 602 then raise the capper chuck 302 above the output vial holder 232 to a position at which the capper chuck 302 will not interfere with rotation of the movable platform 202.

In step S450, input vial 150 is returned to input rack 102. In an embodiment, step S450 comprises carousel module 608 and controller 602 moving movable platform 202 (e.g., rotating) to place the input vial holder 214 and the input vial 150 held thereby at a position that is accessible by the pick-and-place robot 126. Input vial 150 is then removed from the input vial holder 214 by the pick-and-place robot 126 and moved by the pick-and-place robot 126 and gantry 120 back to the input rack 102.

In step S452, output vial 160 is moved to an output rack 104. In an embodiment, step S452 comprises carousel module 608 and controller 602 moving movable platform 202 (e.g., rotating) to place the output vial holder 232 and the output vial 160 held thereby at a position that is accessible by the pick-and-place robot 126. Output vial 160 is then removed from the output vial holder 232 by the pick-and-place robot 126 and moved by the pick-and-place robot 126 and gantry 120 to the output rack 104. In one example, prior to step S452, the output vial 160 is first moved to the incubator 280 by the pick-and-place robot 126 (e.g., 90 - 120° C for 1-30 minutes).

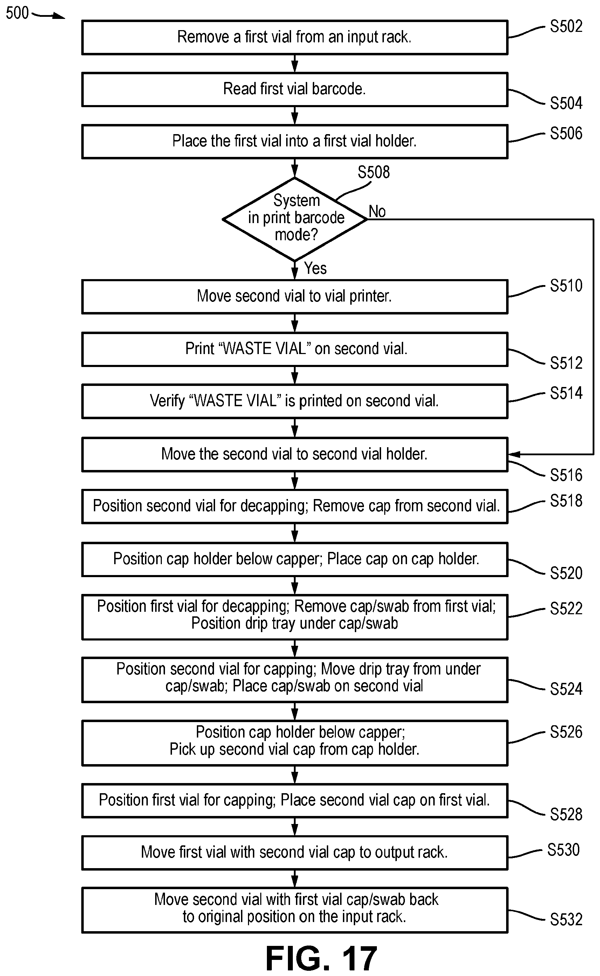

FIG. 17 shows a flow diagram illustrating one exemplary embodiment of a method 500 for modifying an input vial 150 so that it can be processed in an automated analyzer using sample processing instrument 100. Method 500 may be performed with or used in conjunction with any of the computer systems, devices, mechanisms, elements, or components disclosed herein, among other devices, including control architecture 600 illustrated in FIG. 25 and described above. Method 500 may be coded and stored as a computer-executable control algorithm for controlling the operation(s) of one or more of the computer systems, devices, mechanisms, elements, or components disclosed herein, among other devices via control architecture 600. In various embodiments, some of the method steps shown may be performed concurrently, in a different order than shown, or may be omitted. Additional method steps may also be performed as desired.

Before commencing method 500, at least one sample collection vial (input vial) 150 and at least one output vial 160 are placed in the input rack receiving area 130 of the instrument 100. In one example, an input rack 102 holding one or more sample collection vials (or input vials) is placed in the input rack receiving area 130 of the instrument 100, and an output rack 104, which may be initially empty, is placed in the output rack receiving area 132 of the instrument 100. Input rack 102 may hold associated pairs of input vials 150 containing liquid sample material and output vials 160 that have caps, such as caps that do not include a connected collection swab and which may be penetrable by a pipette tip, that permit the contents of the vials to be processed in an automated instrument without removing the caps. The presence of at least one input rack 102 in the input rack receiving area 130 and at least one output rack 104 in the output rack receiving area 132, and whether the racks are locked in place, may be verified via sensors of the input rack receiving area and output rack receiving area module 612.

Flow of method 500 begins at step S502.

In step S502, pick-and-place module 618 and controller 602 remove an input vial 150 containing sample material (referred to for purposes of describing process 500 as the "first vial" and may be the same input vial or sample collection vial 150 shown in FIGS. 13 and 14 and described above) from an input rack 102 using the pick-and-place robot 126 and gantry 120.

In step S504, a barcode (or other machine-readable label or tag) on the first vial 150 is read by the barcode reader 270 (or other reader of the machine-readable label or tag), and information read by the reader 270 is communicated to the controller 602. In one embodiment, the pick-and-place robot 126 positions the first vial 150 in front of the barcode reader 270 and rotates the first vial 150 while the barcode reader 270 reads the barcode.

In step S506 the first vial 150 is placed in the vial holder 214 (referred to for purposes of describing method 500 as the "first vial holder"). In an embodiment, step S506 comprises the carousel module 608 and controller 602 moving the movable platform 202 (e.g., rotating) of the sample processing station 200 to place the first vial holder 214 at a position that is accessible by the pick-and-place robot 126 and placing the first vial 150 in the first vial holder 214 with the pick-and-place robot 126 and gantry 120. The movable platform may then be moved (e.g., by rotating) to place the first vial holder 214 in a predetermined position, as determined and controlled by the carousel module 608 of control architecture 600, at which openings 229 in the receptacle 228 of the first vial holder 214 are aligned with optical emitter 272a and optical receiver 272b for confirming the presence of the first vial 150 in the first vial holder 214 via vial detection module 614 of control architecture 600.

Step S508 is a determination of whether the system is in print barcode mode - i.e., whether a label is to be printed onto an output vial. If the system is not in pint barcode mode, flow continues to step S516, and if the system is in print barcode mode, flow continues to step S510.

In step S510, if the system is in print barcode mode, pick-and-place module 618 and controller 602 transport an output vial 160 to the printer. In an embodiment, step S510 comprises transferring an output vial 160 (referred to for purposes of describing method 500 as the "second vial" and may be the same as output vial 160 shown in FIG. 15 and described above) by the pick-and-place robot 126 and gantry 120 from input rack 102 to the printer.

In step S512, a notification, such as "WASTE VIAL," as communicated to the printer from controller 602 via printer module 622 of the control architecture 600, is printed on the second vial 160 by the printer 134.

In optional step S514, the notification printed on the second vial 160 is verified by an automated label reader.

In step S516, the second vial 160 is placed in the vial holder 232 (referred to for purposes of describing process 500 as the "second vial holder"). In an embodiment, step S516 comprises carousel module 608 and controller 602 moving the movable platform 202 (e.g., rotating) to place the second vial holder 232 at a position at which the second vial holder 232 is accessible by the pick-and-place robot 126, and pick-and-place module 618 and controller 602 place the second vial 160 into the second vial holder 232. The movable platform may then be moved (e.g., by rotating) to place the second vial holder 232 in a predetermined position, as determined and controlled by the carousel module 608 of control architecture 600, at which openings 229 in the receptacle 228 of the second vial holder 232 are aligned with optical emitter 272a and optical receiver 272b for confirming the presence of the second vial 160 in the second vial holder 232 by vial detection module 614 of control architecture 600.

In step S518, cap 164 is removed from second vial 160. In an embodiment, step S518 comprises carousel module 608 and controller 602 moving the movable platform 202 (e.g., rotating) to place the second vial holder 232 and the second vial 160 held thereby in the capping/decapping position beneath the capper 300. Elevator module 606 and controller 602 lower the capper chuck 302 of the capper 300 onto the cap 164 of the second vial 160 held in the second vial holder 232, capper/decapper module 604 and controller 602 actuate the jaws 306a, 306b, 306c to grasp the cap 164, and capper/decapper module 604 and controller 602 rotate the chuck body 304 while the container vessel 162 is held by clamping surfaces 220a, 220b of clamps 216a, 216b, respectively, to remove the cap 164 from vessel 162 of the second vial 160. Elevator module 606 and controller 602 then raise the capper chuck 302 in which the removed cap 164 is grasped above the second vial holder 232, and the drip shield module 610 and controller 602 may optionally rotate the movable drip shield 250 from the standby position to the deployed position shown in FIG. 3, at which the drip shield platter 252 is situated beneath the cap 164 held in the capper chuck 302.

In step S520, cap 164 removed from second vial 160 in step S518 is placed on cap holder 234. In an embodiment, step S520 comprises the carousel module 608 and controller 602 moving movable platform 202 (e.g., rotating) of the sample processing station 200 to position the cap holder 234 at the transfer position beneath the capper 300. If the moveable drip shield 250 was moved to the deployed position below the removed cap at the conclusion of step S518, the movable drip shield 250 is rotated from the deployed position shown in FIG. 3 at which the drip shield platter 252 is beneath the capper chuck 302 and cap 165 to the standby position at which no portion of the drip shield 250 will interfere with movement of the capper chuck 302. Elevator module 606 and controller 602 then lower the capper chuck 302 onto the cap holder 234, and capper/decapper module 604 and controller 602 retract the jaws 306a, 306b, 306c to release the cap 164 removed from second vial 160 in step S518 into the cup 236 of the cap holder 234. Elevator module 606 and controller 602 then raise the capper chuck 302 above the cap holder 234 to a position at which the capper chuck 302 will not interfere with rotation of the movable platform 202.

In step S522, cap 156 with swab 158 coupled thereto is removed from first vial 150. In an embodiment, step S522 comprises carousel module 608 and controller 602 moving movable platform 202 (e.g., rotating) to place the first vial holder 214 and the first vial 150 held thereby in the capping/decapping position beneath the capper 300. Elevator module 606 and controller 602 lower the capper chuck 302 onto cap 156 of first vial 150 held in first vial holder 214, capper/decapper module 604 and controller 602 actuate the jaws 306a, 306b, 306c to grasp the cap 156, and capper/decapper module 604 and controller 602 rotate the chuck body 304 while the container vessel 152 is held by clamping surfaces 220a, 220b of clamps 216a, 216b, respectively, to remove the cap 156 from the first vial 150. Elevator module 606 and controller 602 then raise the capper chuck 302 in which the removed cap 156 is grasped above the first vial holder 214 until the upper sensor 360 of the elevator module 606 is triggered, indicating that the closure bracket 330 is at its highest position, which corresponds to a position of the capper chuck 302 at which the head 159 of the swab 158 attached to cap 156 has cleared the top of the vessel 152. While the capper chuck 302 is being raised, the openings 229 in the receptacle 228 of the input vial holder 214 are aligned with optical emitter 272a and optical receiver 272b for confirming that the input vial 150 remains in the input vial holder 214, via vial detection module 614 of control architecture 600, to ensure input vial 150 is not inadvertently removed from the input vial holder 214 by the rising capper chuck 302. Upon receiving a signal via the elevator module 608 that the capper chuck 302 is in the raised position, controller 602 activates drip shield motor 256 via the drip shield module 610 to rotate the movable drip shield 250 from the standby position to the deployed position shown in FIG. 3 at which the drip shield platter 252 is beneath the cap 156 and swab 158 held in the capper chuck 302. As noted above, the range of vertical travel of the capper chuck 302 must be sufficient to completely remove the swab 158 from the vessel 152, and the distance between the capper chuck 302 and the drip shield platter 252 must accommodate the length of the swab 158 extending below the cap 156 held in the capper chuck 302.

In step S524, cap 156 and swab 158 removed from first vial 150 is secured to vessel 162 of second vial 160. In an embodiment, step S524 comprises carousel module 608 and controller 602 moving movable platform 202 (e.g., rotating) to place the second vial holder 232 and the vessel 162 of the second vial 160 held thereby (from which cap 164 was removed in step S518) in the capping/decapping position beneath the capper 300. Drip shield module 610 and controller 602 rotate the drip shield 250 from the deployed position shown in FIG. 3, at which the drip shield platter 252 is beneath the cap 156 and swab 158 held in the capper chuck 302, to the standby position, at which no portion of the drip shield 250 will interfere with movement of the capper chuck 302. Elevator module 606 and controller 602 then lower the capper chuck 302 to place the cap 156 (and swab 158) removed from first vial 150 in step S522 onto the vessel 162 of the second vial 160 while inserting the swab 158 into the vessel 162. Capper/decapper module 604 and controller 602 then rotate the chuck body 304 while the container vessel 162 is held by clamping surfaces 220a, 220b of clamps 216a, 216b, respectively, to screw the cap 156 onto a threaded end of the vessel 162, after which capper/decapper module 604 and controller 602 retract the jaws 306a, 306b, 306c to release the cap 156. Elevator module 606 and controller 602 then raise the capper chuck 302 above second vial holder 232 to a position at which the capper chuck 302 will not interfere with rotation of the movable platform 202. As no cap is held in the capper chuck 302 at the end of step S524, movement of the movable drip shield 250 from the standby position to the deployed position shown in FIG. 3 beneath the capper chuck 302 is optional.

In step S526, cap 164 held by cap holder 234 is grasped by the capper 300. In an embodiment, step S526 comprises carousel module 608 and controller 602 moving movable platform 202 (e.g., rotating) to position the cap holder 234 in the transfer position beneath the capper 300. If the movable drip shield 250 was moved to the deployed position beneath the capper chuck 302 at the conclusion of step S524, the movable drip shield 250 is rotated from the deployed position shown in FIG. 3, at which the drip shield platter 252 is beneath the capper chuck 302, to the standby position at which no portion of the drip shield 250 will interfere with movement of the capper chuck 302. Elevator module 606 and controller 602 then lower the capper chuck 302, and capper/decapper module 604 and controller 602 actuate the jaws 306a, 306b, 306c to grasp the cap 164 held in the cup 236 of the cap holder 234. Elevator module 606 and controller 602 then raise the capper chuck 302 above the cap holder 234 to a position at which the capper chuck 302 will not interfere with rotation of the movable platform 202, and the movable drip shield 250 may optionally be moved from the standby position to the deployed position shown in FIG. 3 beneath the capper chuck 302 and cap 164.

In step S528, cap 164 is secured to vessel 152 of first vial 150. In an embodiment, step S528 comprises carousel module 608 and controller 602 moving movable platform 202 (e.g., rotating) to place the first vial holder 214 and vessel 152 of first vial 150 held thereby (from which cap 156 and swab 158 were removed in step S522) in the capping/decapping position beneath the capper 300. If the movable drip shield 250 was moved to the deployed position beneath the capper chuck 302 at the conclusion of step S526, the movable drip shield 250 is rotated from the deployed position shown in FIG. 3 at which the drip shield platter 252 is beneath the capper chuck 302 and cap 164 to the standby position at which no portion of the drip shield 250 will interfere with movement of the capper chuck 302. Elevator module 606 and controller 602 then lower the capper chuck 302 to place the cap 164 removed from second vial 160 in step S518 onto the vessel 152 of the first vial 150. Capper/decapper module 604 and controller 602 then rotate the chuck body 304 while the container vessel 152 is held by clamping surfaces 220a, 220b of clamps 216a, 216b, respectively, to screw the cap 164 onto a threaded neck 153 of the vessel 152 after which capper/decapper module 604 and controller 602 retract the jaws 306a, 306b, 306c to release the cap 164. Elevator module 606 and controller 602 then raise the capper chuck 302 above the first vial holder 214 to a position at which the capper chuck 302 will not interfere with rotation of the movable platform 202.

It will be appreciated from the foregoing description that vessel 152 of first vial 150 and vessel 162 of vial 160 have the same diameter and thread pitch at their respective threaded necks so that caps 156, 164 can be switched between the vessels 152 and 164.

In step S530, first vial 150 - now with cap 164 - is removed from first vial holder 214. In an embodiment, step S530 comprises carousel module 608 and controller 602 moving movable platform 202 (e.g., rotating) to place the first vial holder 214 at a position at which the first vial holder 214 and first vial 150 held thereby are accessible by the pick-and-place robot 126, and the first vial 150, which contains sample material and to which the cap 164 has been secured, is removed from the first vial holder 214 by the pick-and-place robot 126. In an embodiment, the first vial 150 is moved by the pick-and-place robot 126 and gantry 120 to an output rack 104. In one example, prior to step S530, the output vial 160 is first moved to the incubator 280 by the pick-and-place robot 126 (e.g., 90 - 120° C for 1-30 minutes).

In step S532, second vial 160 - now with cap 156 and swab 158 - is removed from second vial holder 232. In an embodiment, step S532 comprises carousel module 608 and controller 602 moving movable platform 202 (e.g., rotating) to place the second vial holder 232 at a position at which the second vial holder 232 and second vial 160 held thereby are accessible by the pick-and-place robot 126, and the second vial 160 is removed from the second vial holder 232 by the pick-and-place robot 126. In an embodiment, the second vial 160 is moved by the pick-and-place robot 126 and gantry 120 from the second vial holder 232 back to the input rack 102.

In some examples, the instrument 100 is configured to perform both method 400 and method 500 so as to be able to perform method 400 on one input vial and then perform method 500 on a subsequent input vial.

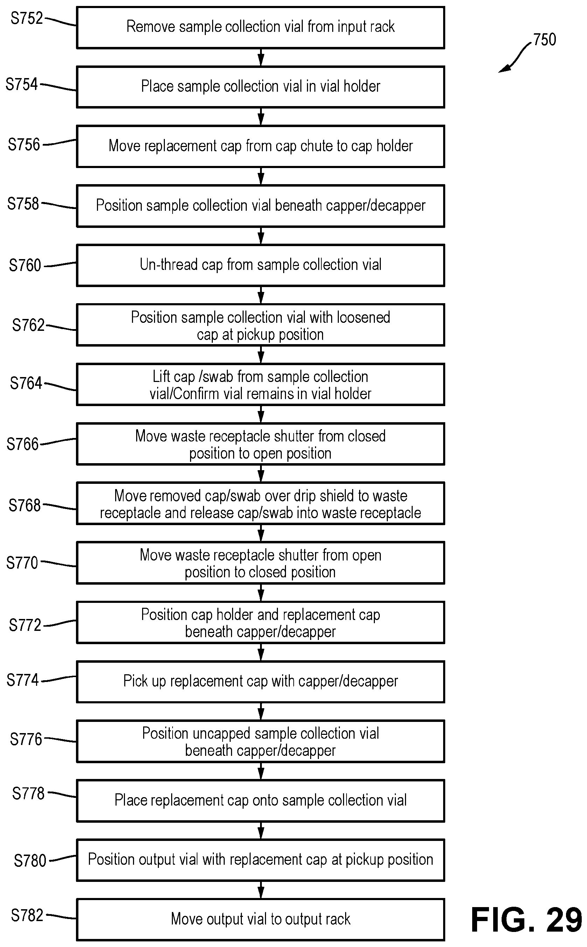

FIG. 29 shows a flow diagram illustrating a method 750 for removing and discarding a cap 156 and connected swab 158 from an input vial 150 and attaching a replacement cap 170 onto the vessel 152 of input vial 150 using sample processing instrument 700. Method 750 may be performed with or used in conjunction with any of the computer systems, devices, mechanisms, elements, sensors, or components disclosed herein, among other devices, including control architecture 600 illustrated in FIG. 25 and described above. Method 750 may be coded and stored as a computer-executable control algorithm for controlling the operation(s) of one or more of the computer systems, devices, mechanisms, elements, or components disclosed herein, among other devices via control architecture 600. In various embodiments, some of the method steps shown may be performed concurrently, in a different order than shown, or may be omitted. Additional method steps may also be performed as desired.

Before commencing method 750, at least one sample collection vial 150 and at least one replacement cap 170 are placed on the instrument 700. In one example, an input rack 102 holding one or more sample collection vials is placed in the input rack receiving area 130 of the instrument 700, and a supply of replacement caps are placed in the hopper 370. Also, an output rack 104, which may be initially empty, is placed in the output rack receiving area 132 of the instrument 700. The presence of at least one input rack 102 in the input rack receiving area 130 and at least one output rack 104 in the output rack receiving area 132, and whether the racks are locked in place, may be verified via sensors of the input rack receiving area and output rack receiving area module 612.

Flow of method 750 begins at step S752.

In step S752 the pick-and-place robot 126, controlled by the pick-and-place module 618 and controller 602, is commanded to remove a sample collection vial 150 from an input rack 102.

In step S754, the pick-and-place robot 126 and gantry 120, controlled by the pick-and-place module 618 and controller 602, are commanded to move sample collection vial 150 to the vial holder 214 on the carousel 202 and place the sample collection vial 150 into the vial holder 214. Process 750 is described herein with sample collection vial 150 being placed in vial holder 214, but process 750 could also be performed with sample collection vial 150 being placed in vial holder 232. Process 750 could be performed on an instrument 700 having a sample processing station 200 with only one vial holder 214 or 232.

Carousel 202 may then be moved (e.g., by rotating), if necessary, to place the vial holder 214 in a predetermined position (as determined and controlled by the carousel module 608 of control architecture 600) at which openings 229 in the receptacle 228 of the vial holder 214 are aligned with optical emitter 272a and optical receiver 272b for confirming the presence of a sample collection vial 150 in the vial holder 214 via vial detection module 614 of control architecture 600.

In step S756, the pick-and-place robot 126 and gantry 120, controlled by the pick-and-place module 618 and the controller 602, are commanded to move to the cap chute 372 to remove a replacement cap 170 from the end of the chute and transfer the replacement cap 170 to the cap holder 234 on the carousel 202. Carousel 202 may then be moved (e.g., by rotating), if necessary, to place the cap holder 234 in a predetermined position (as determined and controlled by the carousel module 608 of control architecture 600) at which slots 244a, 244b in the cap holder 234 are aligned with optical emitter 272a and optical receiver 272b for confirming the presence of a replacement cap 170 on the cap holder 234 via vial detection module 614 of control architecture 600.

In step S758, the carousel 202, controlled by the carousel module 608 and the controller 602, is commanded to rotate to position vial holder 214 holding the sample collection vial 150 in the capping/decapping position beneath the capper/decapper 300.

In step S760, the cap 156 and collection swab 158 are removed from vessel 152 of sample collection vial 150. Upon controller 602 receiving a signal via the carousel module 608 that the vial holder 214 is in the capping/decapping position, controller 602 activates elevation motor 340 via the elevator module 606 to lower the capper chuck 302 onto the cap 156 of the sample collection vial 150. When the lower sensor 362 of the elevator module 606 is triggered, indicating that the closure bracket 330 is at its lowest position and engaged with the cam surfaces 222a, 222b of the clamps 216a, 216b of vial holder 214, and the capper chuck 302 is supported on top of the sample collection vial 150, the jaws 306a, 306b, 306c are actuated by actuator motor 308 as commanded by controller 602 and capper/decapper module 604 to grasp the cap 156. Chuck body 304 is rotated by rotation motor 320 as commanded by controller 602 and capper/decapper module 604 while the container vessel 152 is held by clamping surfaces 220a, 220b of clamps 216a, 216b, respectively, to loosen the cap 156 from the threaded neck 153 of the vessel 152 of the sample collection vial 150. As the chuck body 304 rotates the cap 156, the threads of the cap 156 disengaging from the threaded neck 153 of the vessel 152 raise the chuck body 304, as detected by linear encoder 366 of the capper/decapper module 604. When the threads of the cap 156 completely disengage from the threaded neck 153 of the vessel 152, there is a drop of the unsupported chuck body 304 (one thread pitch) which can be detected by linear encoder 366, which, in one example, is accurate to 1/40 mm. Upon detection of the drop of the chuck body 304, rotation motor 320 is terminated by capper/decapper module 604 and controller 602, and the chuck body 304 stops rotating. The jaws 306a, 306b, 306c are actuated by actuator motor 308 as commanded by controller 602 and capper/decapper module 604 to release the cap 156. Elevator module 606 and controller 602 then activate elevation motor 340 to raise the closure bracket 330 and the capper chuck 302 supported on the closure bracket 330 until the upper sensor 360 of the elevator module 606 is triggered, indicating that the closure bracket 330 and capper chuck 302 are at their highest position. While the capper chuck 302 is being raised, the openings 229 in the receptacle 228 of the vial holder 214 are aligned with optical emitter 272a and optical receiver 272b for confirming that the sample collection vial 150 remains in the vial holder 214, via vial detection module 614 of control architecture 600, to ensure the sample collection vial 150 is not inadvertently removed from the vial holder 214 by the rising capper chuck 302.

In step S762, upon controller 602 receiving a signal via the elevator module 608 that the capper chuck 302 is in the raised position, the vessel 152 and loosened cap 156 of sample collection vial 150 are positioned for removal of the cap 156. In an example, step S762 comprises moving (e.g., rotating) carousel 202 to place the vial holder 214 and the vessel 152 of sample collection vial 150 held thereby at a predetermined position that is accessible by the pick-and-place robot 126 (a pickup position), as controlled by the carousel module 608 of control architecture 600.

In step S764, upon controller 602 receiving a signal via the carousel module 608 that the vial holder 214 is in the pickup position, controller 602 activates pick-and-place robot 126 and gantry 120, via the pick-and-place module 618, to move to a position above the vial holder 214, to pick up the cap 156 on the sample collection vial 150 held in the vial holder 214, and to raise the cap 156 until the swab 158 clears the top of the container vessel 152. While the pick-and-place robot 126 holding the cap 156 and attached swab 158 is being raised, the openings 229 in the receptacle 228 of the vial holder 214 are aligned with optical emitter 272a and optical receiver 272b for confirming that the sample collection vial 150 remains in the vial holder 214, via vial detection module 614 of control architecture 600, to ensure the vessel 152 is not inadvertently removed from the vial holder 214 while removing the cap 156 and swab 158 from the vessel 152.

In step S766, upon controller 602 receiving a signal via the pick-and-place module 618 that the pick-and-place robot 126 is in the raised position, the shutter motor/actuator 714 is activated by the controller 602 and the waste receptacle module 624 to actuate the shutter 704 from the closed position to the open position. In the open position, end 712 of shutter 704 is positioned above the carousel 202, so an end portion of the shutter 704 is positioned below the swab 158 suspended below the raised pick-and-place robot 126 to act as a shield to catch any drops that may fall from the swab 158.

In step S768, upon controller 602 receiving a signal via the shutter sensors 716 and the waste receptacle module 624 confirming that the shutter 704 is in the open position, the pick-and-place robot 126 and gantry 120 are activated by the controller 602 and pick-and-place module 618 to move to a position above the opening 706 in the shutter 704 aligned with an opening in the waste receptacle 702 or aligned with a chute connected to a waste receptacle, lower the cap 156 and swab 158 through the opening 706, and release the cap 156 and swab 158 into the waste receptacle. In one example, the pick-and-place module 618 is programed to move the pick-and-place robot 126 along a path that keeps the swab 158 suspended from the robot 126 above a portion of the shutter 704 so that any drops that fall from the swab 158 are captured by the shutter 704. As shown in FIGS. 27 and 28, shutter 704 may include radial cutouts 708 to permit fingers of the pick-and-place robot 126 to expand radially and release the cap 156. The shutter 704 has three cutouts 708 spaced 120° apart to accommodate a pick-and-place robot having three expandible/retractable fingers spaced 120° apart. In other examples, the shutter may have more or less than three cutouts depending on the number and spacing of fingers of the pick-and-place robot.

In step S770, upon controller 602 receiving a signal via the pick-and-place module 618 that the pick-and-place robot 126 is in the raised position after releasing the cap 156 and swab 158 into the waste receptacle, the shutter motor/actuator 714 is activated by the controller 602 and the waste receptacle module 624 to actuate the shutter 704 from the open position to the closed position to close the opening to the waste receptacle and so that the shutter 704 is no longer positioned above the carousel.

In step S772, upon controller 602 receiving a signal via the shutter sensors 716 and the waste receptacle module 624 confirming that the shutter 704 is in the closed position, carousel 202, controlled by the carousel module 608 and the controller 602, is commanded to rotate cap holder 234 holding the replacement cap 170 to the capping/decapping position beneath the capper/decapper 300.

In step S774, upon controller 602 receiving a signal via the carrousel module 608 that the cap holder 234 is in the capping/decapping position, controller 602 activates elevation motor 340 via the elevator module 606 to lower the capper chuck 302 onto the replacement cap 170 held on the cap holder 234. When the lower sensor 362 of the elevator module 606 is triggered, indicating that the closure bracket 330 is at its lowest position and the capper chuck 302 is supported on top of the replacement cap 170, the jaws 306a, 306b, 306c are actuated by actuator motor 308 as commanded by controller 602 and capper/decapper module 604 to grasp the replacement cap 170. Elevator module 606 and controller 602 then activate elevation motor 340 to raise the closure bracket 330 and the capper chuck 302 supported on the closure bracket 330 until the upper sensor 360 of the elevator module 606 is triggered, indicating that the closure bracket 330 and capper chuck 302 are at their highest positions.

In step S776, upon controller 602 receiving a signal via the elevator module 608 that the capper chuck 302 holding the replacement cap 170 is in the raised position, the uncapped vessel 152 of sample collection vial 150 is positioned for attachment of the replacement cap 170. In an example, carousel 202, controlled by the carousel module 608 and the controller 602, is commanded to rotate vial holder 214 holding the replacement vessel 152 to the capping/decapping position beneath the capper/decapper 300.

In step S778, replacement cap 170 is secured to vessel 152 of sample collection vial 150. In one example, upon controller 602 receiving a signal via the carrousel module 608 that the vial holder 214 and the vessel 152 of sample collection vial 150 held thereby are positioned beneath the capper/decapper 300, controller 602 activates elevation motor 340 via the elevator module 606 to lower the capper chuck 302 to place the replacement cap 170 onto the vessel 152. Capper/decapper module 604 and controller 602 then activate chuck rotation motor 320 to rotate the chuck body 304 while the container vessel 152 is held by clamping surfaces 220a, 220b of clamps 216a, 216b, respectively, to screw the replacement cap 170 onto a threaded neck 153 of the vessel 152, after which, capper/decapper module 604 and controller 602 activate the jaw actuator motor 308 to retract the jaws 306a, 306b, 306c to release the cap 170. Elevator module 606 and controller 602 then raise the capper chuck 302 above the first vial holder 214 to a position at which the capper chuck 302 will not interfere with rotation of the carousel 202.

In step S780, upon controller 602 receiving a signal via the elevator module 608 that the capper chuck 302 is in the raised position, the newly-capped vessel 152 of sample collection vial 150 is positioned for pickup by the pick-and-place robot 126. In an example, carousel 202, controlled by the carousel module 608 and the controller 602, is commanded to rotate vial holder 214 and the sample collection vial 150 held thereby at the pickup position with respect to the pick-and-place robot 126.

In step S782, sample collection vial 150 is moved to an output rack 104. In an example, sample collection vial 150 is removed from the vial holder 214 by the pick-and-place robot 126 and gantry 120 under the control of controller 602 and pick-and-place module 618 and moved by the pick-and-place robot 126 and gantry 120 to the output rack 104. In one example, prior to step S782, the output vial 160 is first moved to the incubator 280 by the pick-and-place robot 126 (e.g., 90 - 120° C for 1-30 minutes).

### Hardware and Software

Aspects of the subject matter disclosed herein may be implemented via control and computing hardware components, software (which may include firmware), data input components, and data output components. Hardware components include computing and control modules (e.g., system controller(s)), such as processing circuitry, configured to effect computational and/or control steps by receiving one or more input values, executing one or more algorithms stored on non-transitory machine-readable media (e.g., software) that provide instruction for manipulating or otherwise acting on or in response to the input values, and output one or more output values. Such processing circuitry may include one or more processors (e.g., one or more general purpose microprocessors and/or one or more other processors, such as one or more computer(s), an application specific integrated circuit (ASIC), field-programmable gate arrays (FPGAs), and the like, which processors may be co-located in a single housing or in a single data center or may be geographically distributed (i.e., the processing circuitry may be encompassed by a distributed computing apparatus). Such outputs may be displayed or otherwise indicated to a user for providing information to the user, for example information as to the status of the instrument or of a process being performed thereby, or such outputs may comprise inputs to other processes and/or control algorithms. Data input components comprise elements by which data is input for use by the control and computing hardware components. Such data inputs may comprise signals generated by sensors or scanners, such as, position sensors, speed sensors, accelerometers, environmental (e.g., temperature) sensors, motor encoders, barcode scanners, or RFID scanners, as well as manual input elements, such as keyboards, stylus-based input devices, touch screens, microphones, switches, manually-operated scanners, etc. Data inputs may further include data retrieved from memory. Data output components may comprise hard drives or other storage media, monitors, printers, indicator lights, or audible signal elements (e.g., chime, buzzer, horn, bell, etc.).

All possible combinations of elements and components described in the specification or recited in the claims are contemplated and considered to be part of this disclosure. It should be appreciated that all combinations of the foregoing concepts and additional concepts discussed in greater detail below (provided such concepts are not mutually inconsistent) are contemplated as being part of the inventive subject matter disclosed herein. In particular, all combinations of claimed subject matter appearing at the end of this disclosure are contemplated as being part of the inventive subject matter disclosed herein.

While the subject matter of this disclosure has been described and shown in considerable detail with reference to certain illustrative embodiments, including various combinations and sub-combinations of features, those skilled in the art will readily appreciate other embodiments and variations and modifications thereof as encompassed within the scope of the present disclosure. Moreover, the descriptions of such embodiments, combinations, and sub-combinations is not intended to convey that the claimed subject matter requires features or combinations of features other than those expressly recited in the claims. Accordingly, the scope of this disclosure is intended to include all modifications and variations encompassed within the scope of the following appended claims.
The further aspects of the present disclosure are set forth in the following numbered paragraphs:
1. A method for processing a first input vial and a second input vial with a processing station, wherein each of the first and second input vials contains a fluid sample and comprises a cap removably secured to a container vessel and a sample collection swab extending from the cap, and wherein the processing station comprises an input vial holder, an output vial holder, a cap holder, a capper/decapper, and a pipettor, and the input vial holder, the output vial holder, and the cap holder are movable with respect to the capper/decapper and with respect to the pipettor, wherein the method comprises automatically:
   transporting the first input vial from an input rack to the input vial holder;
   transporting a first output vial to the output vial holder, wherein the first output vial includes a container vessel and a cap secured to the container vessel;
   moving the first input vial relative to the capper/decapper to place the first input vial at a capping/decapping position with respect to the capper/decapper;
   removing the cap from the container vessel of the first input vial with the capper/decapper and raising the cap relative to the container vessel with the capper/decapper to fully remove the sample collection swab from the container vessel of the first input vial;
   moving the container vessel of the first input vial relative to the pipettor to place the container vessel of the first input vial at a position that is accessible to the pipettor;
   removing an amount of fluid sample from the container vessel of the first input vial with the pipettor;
   moving the container vessel of the first input vial relative to the capper/decapper to place the container vessel of the first input vial at the capping/decapping position with respect to the capper/decapper;
   securing the cap to the container vessel of the first input vial with the capper/decapper;
   moving the first output vial relative to the capper/decapper to place the first output vial at the capping/decapping position with respect to the capper/decapper;
   removing the cap from the container vessel of the first output vial with the capper/decapper;
   moving the container vessel of the first output vial relative to the pipettor to place the container vessel of the first output vial at a position that is accessible to the pipettor;
   dispensing an amount of fluid sample into the container vessel of the first output vial with the pipettor;
   moving the container vessel of the first output vial relative to the capper/decapper to place the container vessel of the first output vial at the capping/decapping position with respect to the capper/decapper;
   securing the cap to the container vessel of the first output vial with the capper/decapper;
   transporting the first input vial from the input vial holder to the input rack and transporting the first output vial from the output vial holder to an output rack;
   transporting the second input vial from the input rack to the input vial holder;
   transporting a second output vial to the output vial holder, wherein the second output vial includes a container vessel and a cap secured to the container vessel;
   moving the second output vial with respect to the capper/decapper to place the first output vial in an operative position with respect to the capper/decapper;
   removing the cap from the container vessel of the second output vial with the capper/decapper;
   moving the cap holder relative to the capper/decapper to place the cap holder at a transfer position with respect to the capper/decapper;
   placing the cap removed from the container vessel of the second output vial onto the cap holder with the capper/decapper;
   moving the second input vial relative to the capper/decapper to place the second input vial at the capping/decapping position with respect to the capper/decapper;
   removing the cap from the container vessel of the second input vial with the capper/decapper and raising the cap relative to the container vessel with the capper/decapper to fully remove the sample collection swab from the container vessel of the second input vial;
   moving the container vessel of the second output vial relative to the capper/decapper to place the container vessel of the second output vial at the capping/decapping position with respect to the capper/decapper;
   securing the cap removed from the container vessel of the second input vial to the container vessel of the second output vial with the capper/decapper;
   moving the cap holder relative to the capper/decapper to place the cap holder at the transfer position with respect to the capper/decapper;
   grasping the cap held by the cap holder with the capper/decapper;
   moving the container vessel of the second input vial with respect to the capper/decapper to place the container vessel of the second input vial at the capping/decapping position with respect to the capper/decapper;
   securing the cap removed from the container vessel of the second output vial onto the container vessel of the second input vial with the capper/decapper;
   transporting the second input vial from the input vial holder to the output rack; and
   transporting the second output vial from the output vial holder to the input rack.
2. A method for processing a first vial with a processing station, wherein the first vial contains a fluid sample and comprises a container vessel, a cap removably secured to the container vessel, and a sample collection swab coupled to the cap, wherein the processing station comprises a first vial holder, a second vial holder, a cap holder, and a capper/decapper, and wherein the method comprises automatically:
   (a) transporting the first vial to the first vial holder;
   (b) transporting a second vial to the second vial holder, the second vial comprising a container vessel and a cap removably secured to the container vessel;
   (c) removing the cap from the container vessel of the second vial with the capper/decapper;
   (d) placing the cap removed from the container vessel of the second vial in (c) onto the cap holder with the capper/decapper;
   (e) removing the cap and the sample collection swab from the container vessel of the first vial with the capper/decapper;
   (f) securing the cap removed from the container vessel of the first vial in (e), with the sample collection swab still coupled thereto, to the container vessel of the second vial with the capper/decapper;
   (g) removing the second vial from the second vial holder;
   (h) grasping the cap held by the cap holder with the capper/decapper;
   (i) securing the grasped cap to the container vessel of the first vial with the capper/decapper; and
   (j) removing the first vial from the first vial holder.
3. A method for processing an input vial with a processing station, wherein the input vial contains a fluid sample and comprises a cap removably secured to a container vessel and a sample collection swab coupled to the cap, and wherein the processing station comprises an input vial holder, an output vial holder, a capper/decapper, and a pipettor, and wherein the method comprises automatically:
   (a) transporting the input vial to the input vial holder;
   (b) transporting an output vial to the output vial holder;
   (c) removing the cap and the sample collection swab from the container vessel of the input vial with the capper/decapper;
   (d) removing an amount of the fluid sample from the container vessel of the input vial with the pipettor;
   (e) securing the cap removed in (c), with the sample collection swab still coupled to the cap, to the container vessel of the input vial with the capper/decapper;
   (f) after (e), removing the input vial from the input vial holder;
   (g) removing a cap from a container vessel of the output vial with the capper/decapper;
   (h) dispensing an amount of the fluid sample removed in (d) into the container vessel of the output vial with the pipettor;
   (i) securing the cap removed in (g) to the container vessel of the output vial with the capper/decapper; and
   (j) after (i), removing the output vial from the output vial holder.
4. A method for processing a first input vial and a second input vial with a processing station, wherein each input vial contains a fluid sample and comprises a cap removably secured to a container vessel and a sample collection swab coupled to the cap, and wherein the processing station comprises an input vial holder, an output vial holder, a cap holder, a capper/decapper, and a pipettor, and wherein the method comprises automatically:
   (a) transporting the first input vial to the input vial holder;
   (b) transporting a first output vial to the output vial holder;
   (c) removing the cap and the sample collection swab coupled thereto from the container vessel of the first input vial with the capper/decapper;
   (d) removing an amount of the fluid sample from the container vessel of the first input vial with the pipettor;
   (e) securing the cap removed in (c), with the sample collection swab still coupled thereto, to the container vessel of the first input vial with the capper/decapper;
   (f) after (e), removing the first input vial from the input vial holder;
   (g) removing a cap from a container vessel of the first output vial with the capper/decapper;
   (h) dispensing an amount of the fluid sample removed in (d) into the container vessel of the first output vial with the pipettor;
   (i) securing the cap removed in (g) to the container vessel of the first output vial with the capper/decapper;
   (j) after (i), removing the first output vial from the output vial holder;
   (k) transporting the second input vial to the input vial holder;
   (l) transporting a second output vial to the output vial holder;
   (m) removing a cap from a container vessel of the second output vial with the capper/decapper;
   (n) placing the cap removed from the container vessel of the second output vial in (m) onto the cap holder with the capper/decapper;
   (o) removing the cap and the sample collection swab coupled thereto from the container vessel of the second input vial with the capper/decapper;
   (p) securing the cap removed from the container vessel of the second input vial in (o), with the sample collection swab still coupled thereto, to the container vessel of the second output vial with the capper/decapper;
   (q) removing the second output vial from the output vial holder;
   (r) grasping the cap held by the cap holder with the capper/decapper;
   (s) securing the grasped cap to the container vessel of the second input vial with the capper/decapper; and
   (t) removing the second input vial from the input vial holder.
5. A system for processing a first input vial and a second input vial, wherein each input vial contains a fluid sample and comprises a cap removably secured to a container vessel and a sample collection swab coupled to the cap, and wherein the system comprises:
   an input vial holder;
   an output vial holder;
   a cap holder;
   at least one pick and place robot;
   a capper/decapper;
   a pipettor; and
   a system controller in communication with the at least one pick and place robot, the capper/decapper, and the pipettor, and wherein the system controller is programmed to execute the following functions:
      (A) activate the at least one pick and place robot to transport the first input vial to the input vial holder;
      (B) activate the at least one pick and place robot to transport a first output vial to the output vial holder;
      (C) activate the capper/decapper to remove the cap and the sample collection swab coupled thereto from the container vessel of the first input vial held in the input vial holder;
      (D) after executing function (C), activate the pipettor to remove an amount of the fluid sample from the container vessel of the first input vial;
      (E) after executing function (D), activate the capper/decapper to secure the cap, with the sample collection swab still coupled thereto, to the container vessel of the first input vial held in the input vial holder;
      (F) after executing function (E), activate the at least one pick and place robot to remove the first input vial from the input vial holder;
      (G) after executing function (E), activate the capper/decapper to remove a cap from a container vessel of the first output vial held in the output vial holder;
      (H) after executing function (G), activate the pipettor to dispense an amount of the fluid sample removed from the container vessel of the first input vial into the container vessel of the first output vial;
      (I) after executing function (H), activate the capper/decapper to secure the cap to the container vessel of the first output vial;
      (J) after executing function (I), activate the at least one pick and place robot to remove the first output vial from the output vial holder;
      (K) after executing function (F), activate the at least one pick and place robot to transport the second input vial to the input vial holder;
      (L) after executing function (J), activate the at least one pick and place robot to transport a second output vial to the output vial holder;
      (M) activate the capper/decapper to remove a cap from a container vessel of the second output vial held in the output vial holder;
      (N) after executing function (M), activate the capper/decapper to place the cap removed from the container vessel of the second output vial onto the cap holder;
      (O) after executing function (N), activate the capper/decapper to remove the cap and the sample collection swab coupled thereto from the container vessel of the second input vial held in the input vial holder;
      (P) after executing function (O), activate the capper/decapper to secure the cap removed from the container vessel of the second input vial, with the sample collection swab still coupled thereto, to the container vessel of the second output vial;
      (Q) after executing function (P), activate the at least one pick and place robot to remove the second output vial from the output vial holder;
      (R) after executing function (P), activate the capper/decapper to grasp the cap held by the cap holder;
      (S) after executing function (R), activate the capper/decapper to secure the cap to the container vessel of the second input vial held in the input vial holder; and
      (T) after executing function (S), activate the at least one pick and place robot to remove the second input vial from the input vial holder.
6. A system for processing a first input vial and a second input vial, wherein each input vial contains a fluid sample and comprises a cap removably secured to a container vessel and a sample collection swab coupled to the cap, and wherein the system comprises:
   a control system;
   an input vial holder;
   an output vial holder;
   a cap holder;
   a vial transport mechanism controlled by the control system to transport the first input vial to the input vial holder;
   a vial transport mechanism controlled by the control system to transport a first output vial to the output vial holder;
   a capper/decapper controlled by the control system to remove the cap and the sample collection swab coupled thereto from the container vessel of the first input vial held in the input vial holder; and
   a pipettor controlled by the control system to remove an amount of the fluid sample from the container vessel of the first input vial held in the input vial holder after the cap and sample collection swab are removed from the container vessel of the first input vial;
   wherein the capper/decapper is controlled by the control system to secure the cap, with the sample collection swab still coupled thereto, to the container vessel of the first input vial after the amount of fluid sample is removed from the container vessel of the first input vial;
   wherein the vial transport mechanism is controlled by the control system to remove the first input vial from the input vial holder after the cap is secured to the container vessel of the first input vial;
   wherein the capper/decapper is controlled by the control system to remove a cap from a container vessel of the first output vial held in the output vial holder;
   wherein the pipettor is controlled by the control system to dispense an amount of the fluid sample removed by the pipettor from the container vessel of the first input vial into the container vessel of the first output vial held in the output vial holder;
   wherein the capper/decapper is controlled by the control system to secure the cap to the container vessel of the first output vial after the pipettor dispenses an amount of the fluid sample into the container vessel of the first output vial;
   wherein the vial transport mechanism is controlled by the control system to remove the first output vial from the output vial holder after the capper/decapper secures the cap to the container vessel of the first output vial;
   wherein the vial transport mechanism is controlled by the control system to transport the second input vial to the input vial holder after removing the first input vial from the input vial holder;
   wherein the vial transport mechanism is controlled by the control system to transport a second output vial to the output vial holder after removing the first output vial from the output vial holder;
   wherein the capper/decapper is controlled by the control system to remove a cap from a container vessel of the second output vial held in the output vial holder;
   wherein the capper/decapper is controlled by the control system to place the cap removed from the container vessel of the second output vial onto the cap holder;
   wherein the capper/decapper is controlled by the control system to remove the cap and the sample collection swab coupled thereto from the container vessel of the second input vial held in the input vial holder;
   wherein the capper/decapper is controlled by the control system to secure the cap removed from the container vessel of the second input vial, with the sample collection swab still coupled thereto, to the container vessel of the second output vial;
   wherein the vial transport mechanism is controlled by the control system to remove the second output vial from the output vial holder after the capper/decapper secures the cap and the sample collection swab coupled thereto to the container vessel of the second output vial;
   wherein the capper/decapper is controlled by the control system to grasp the cap held by the cap holder;
   wherein the capper/decapper is controlled by the control system to secure the cap to the container vessel of the second input vial; and
   wherein the vial transport mechanism is controlled by the control system to remove the second input vial from the input vial holder after the capper/decapper secures the cap to the container vessel of the second input vial.
7. A system for processing a first vial with a processing station, wherein the first vial contains a fluid sample and comprises a container vessel, a cap removably secured to the container vessel, and a sample collection swab coupled to the cap, and wherein the system comprises:
   a first vial holder;
   a second vial holder;
   a cap holder;
   at least one pick and place robot;
   a capper/decapper; and
   a controller in communication with the at least one pick and place robot and the capper/decapper, and wherein the controller is programmed to execute the following functions:
      (A) activate the at least one pick and place robot to transport the first vial to the first vial holder;
      (B) activate the at least one pick and place robot to transport a second vial to the second vial holder;
      (C) activate the capper/decapper to remove a cap from a container vessel of the second vial held in the second vial holder;
      (D) after executing function (C), activate the capper/decapper to place the cap removed from the container vessel of the second vial onto the cap holder;
      (E) after executing function (D), activate the capper/decapper to remove the cap and the sample collection swab coupled thereto from the container vessel of the first vial held in the first vial holder;
      (F) after executing function (E), activate the capper/decapper to secure the cap removed from the container vessel of the first vial, with the sample collection swab still coupled thereto, to the container vessel of the second vial;
      (G) after executing function (F), activate the at least one pick and place robot to remove the second vial from the second vial holder;
      (H) after executing function (F), activate the capper/decapper to grasp the cap held by the cap holder;
      (I) after executing function (H), activate the capper/decapper to secure the cap to the container vessel of the first vial held in the first vial holder; and
      (J) after executing function (I), activate the at least one pick and place robot to remove the first vial from the first vial holder.
8. A system for processing a first vial with a processing station, wherein the first vial contains a fluid sample and comprises a container vessel, a cap removably secured to the container vessel, and a sample collection swab coupled to the cap, and wherein the system comprises:
   a control system;
   a first vial holder;
   a second vial holder;
   a cap holder;
   a vial transport mechanism controlled by the control system to transport the first vial to the first vial holder;
   a vial transport mechanism controlled by the control system to transport a second vial to the second vial holder; and
   a capper/decapper controlled by the control system to remove a cap from a container vessel of the second vial held in the second vial holder;
   wherein the capper/decapper is controlled by the control system to place the cap removed from the container vessel of the second vial onto the cap holder;
   wherein the capper/decapper is controlled by the control system to remove the cap and the sample collection swab coupled thereto from the container vessel of the first vial held in the first vial holder;
   wherein the capper/decapper is controlled by the control system to secure the cap removed from the container vessel of the first vial, with the sample collection swab still coupled thereto, to the container vessel of the second vial;
   wherein the vial transport mechanism is controlled by the control system to remove the second vial from the second vial holder after the capper/decapper secures the cap and the sample collection swab coupled thereto to the container vessel of the second vial;
   wherein the capper/decapper is controlled by the control system to grasp the cap held by the cap holder;
   wherein the capper/decapper is controlled by the control system to secure the cap to the container vessel of the first vial; and
   wherein the vial transport mechanism is controlled by the control system to remove the first vial from the first vial holder after the capper/decapper secures the cap to the container vessel of the first vial.
9. A system for processing an input vial, wherein the input vial contains a fluid sample and comprises a cap removably secured to a container vessel and a sample collection swab coupled to the cap, and wherein the system comprises:
   an input vial holder;
   an output vial holder;
   at least one pick and place robot;
   a capper/decapper;
   a pipettor; and
   a system controller in communication with the at least one pick and place robot, the capper/decapper, and the pipettor, wherein the system controller is programmed to execute the following functions:
      (A) activate the at least one pick and place robot to transport the input vial to the input vial holder;
      (B) activate the at least one pick and place robot to transport an output vial to the output vial holder;
      (C) activate the capper/decapper to remove the cap and the sample collection swab coupled thereto from the container vessel of the input vial held in the input vial holder;
      (D) after executing function (C), activate the pipettor to remove an amount of the fluid sample from the container vessel of the input vial;
      (E) after executing function (D), activate the capper/decapper to secure the cap, with the sample collection swab still coupled thereto, to the container vessel of the input vial held in the input vial holder;
      (F) after executing function (E), activate the at least one pick and place robot to remove the input vial from the input vial holder;
      (G) after executing function (E), activate the capper/decapper to remove a cap from a container vessel of the output vial held in the output vial holder;
      (H) after executing function (G), activate the pipettor to dispense an amount of the fluid sample removed from the container vessel of the input vial into the container vessel of the output vial;
      (I) after executing function (H), activate the capper/decapper to secure the cap to the container vessel of the output vial; and
      (J) after executing function (I), activate the at least one pick and place robot to remove the output vial from the output vial holder.
10. A system for processing an input vial, wherein the input vial contains a fluid sample and comprises a cap removably secured to a container vessel and a sample collection swab coupled to the cap, and wherein the system comprises:
   a control system;
   an input vial holder;
   an output vial holder;
   a vial transport mechanism controlled by the control system to transport the input vial to the input vial holder;
   a vial transport mechanism controlled by the control system to transport an output vial to the output vial holder;
   a capper/decapper controlled by the control system to remove the cap and the sample collection swab coupled thereto from the container vessel of the input vial held in the input vial holder; and
   a pipettor controlled by the control system to remove an amount of the fluid sample from the container vessel of the input vial held in the input vial holder after the cap and sample collection swab are removed from the container vessel of the input vial;
   wherein the capper/decapper is controlled by the control system to secure the cap, with the sample collection swab still coupled thereto, to the container vessel of the input vial after the amount of fluid sample is removed from the container vessel of the input vial;
   wherein the vial transport mechanism is controlled by the control system to remove the input vial from the input vial holder after the cap is secured to the container vessel of the input vial;
   wherein the capper/decapper is controlled by the control system to remove a cap from a container vessel of the output vial held in the output vial holder;
   wherein the pipettor is controlled by the control system to dispense an amount of the fluid sample removed by the pipettor from the container vessel of the input vial into the container vessel of the output vial held in the output vial holder;
   wherein the capper/decapper is controlled by the control system to secure the cap to the container vessel of the output vial after the pipettor dispenses an amount of sample into the container vessel of the output vial; and
   wherein the vial transport mechanism is controlled by the control system to remove the output vial from the output vial holder after the capper/decapper secures the cap to the container vessel of the output vial.
11. A method for processing a sample collection vial with an automated processing station, wherein the sample collection vial contains a fluid sample and comprises a cap removably attached to a container vessel and a sample collection swab attached to the cap, wherein the processing station comprises a vial holder, a cap holder, a capper/decapper, a pick-and-place robot, and a waste receptacle, and wherein the method comprises:
   (a) with the pick-and-place robot, transporting the sample collection vial to the vial holder;
   (b) with the pick-and-place robot, transporting a replacement cap to the cap holder, wherein the replacement cap does not include a sample collection swab;
   (c) with the capper/decapper, altering an attachment between the cap and attached sample collection swab and the container vessel so that the cap may be separated from the container vessel;
   (d) with the pick-and-place robot, removing the cap and attached sample collection swab from the container vessel;
   (e) with the pick-and-place robot, transporting the cap and attached sample collection swab to the waste receptacle and depositing the cap and attached sample collection swab in the waste receptacle;
   (f) with the capper/decapper, removing the replacement cap from the cap holder;
   (g) with the capper/decapper, attaching the replacement cap to the container vessel of the sample collection vial; and
   (h) with the pick-and-place robot, removing the sample collection vial with the replacement cap attached thereto from the vial holder.
12. A system for processing a sample collection vial, wherein the sample collection vial contains a fluid sample and comprises a cap removably attached to a container vessel and a sample collection swab attached to the cap, wherein the system comprises:
   a vial holder;
   a cap holder;
   a capper/decapper configured to remove a cap from or attach a cap to a container vessel;
   a pick-and-place robot;
   a waste receptacle, and
   a system controller in communication with the capper/decapper and the pick-and-place robot, and wherein the system controller is programmed to execute the following functions:
      (a) activate the pick-and-place robot to transport the sample collection vial to the vial holder;
      (b) activate the pick-and-place robot to transport a replacement cap to the cap holder, wherein the replacement cap does not include a sample collection swab;
      (c) activate the capper/decapper to alter an attachment between the cap and attached sample collection swab and the container vessel so that the cap may be separated from the container vessel;
      (d) activate the pick-and-place robot to remove the cap and attached sample collection swab from the container vessel;
      (e) activate the pick-and-place robot to transport the cap and attached sample collection swab to the waste receptacle and deposit the cap and attached sample collection swab in the waste receptacle;
      (f) activate the capper/decapper to remove the replacement cap from the cap holder;
      (g) activate the capper/decapper to attach the replacement cap to the container vessel of the sample collection vial; and
      (h) activate the pick-and-place robot to remove the sample collection vial with the replacement cap attached thereto from the vial holder.

## Claims

1. A method for processing a sample collection vial with an automated processing station, wherein the sample collection vial contains a fluid sample and comprises a cap removably attached to a container vessel and a sample collection swab attached to the cap, wherein the processing station comprises a vial holder, a cap holder, a capper/decapper, a pick-and-place robot, and a waste receptacle, and wherein the method comprises: (a) with the pick-and-place robot, transporting the sample collection vial to the vial holder; (b) with the pick-and-place robot, transporting a replacement cap to the cap holder, wherein the replacement cap does not include a sample collection swab; (c) with the capper/decapper, altering an attachment between the cap and attached sample collection swab and the container vessel so that the cap may be separated from the container vessel; (d) with the pick-and-place robot, removing the cap and attached sample collection swab from the container vessel; (e) with the pick-and-place robot, transporting the cap and attached sample collection swab to the waste receptacle and depositing the cap and attached sample collection swab in the waste receptacle; (f) with the capper/decapper, removing the replacement cap from the cap holder; (g) with the capper/decapper, attaching the replacement cap to the container vessel of the sample collection vial; and (h) with the pick-and-place robot, removing the sample collection vial with the replacement cap attached thereto from the vial holder.

2. The method of claim 1, wherein the replacement cap is a penetrable cap; and/or
wherein (a) comprises transporting the sample collection vial from an input rack to the vial holder, and wherein (h) comprises transporting the sample collection vial from the vial holder to an output rack with the pick-and-place robot; preferably,
comprising, prior to (h), placing the sample collection vial with the replacement cap attached thereto in an incubator to expose the sample collection vial to an elevated temperature for a prescribed period of time.

3. The method of claim 1 or 2, wherein the vial holder is movable with respect to the capper/decapper, and wherein the method comprises, prior to (c) and prior to (g), moving the vial holder with respect to the capper/decapper to place the sample collection vial held by the vial holder in a capping/decapping position with respect to the capper/decapper; and wherein the cap holder is movable with respect to the capper/decapper, and wherein the method comprises, prior to (f) moving the cap holder with respect to the capper/decapper to place the cap holder in an operative position with respect to the capper/decapper; preferably,
wherein the vial holder is positioned on a movable platform, and wherein moving the vial holder with respect to the capper/decapper to place the sample collection vial in the capping/decapping position with respect to the capper/decapper comprises moving the movable platform until the sample collection vial is disposed beneath the capper/decapper; preferably,
wherein the movable platform comprises a carousel that is rotatable about an axis of rotation, and wherein the vial holder is radially spaced from the axis of rotation, and the capper/decapper is radially spaced from the axis of rotation by the same distance as the vial holder; preferably,
wherein the cap holder is radially spaced from the axis of rotation by the same distance as the vial holder.

4. The method of any one of claims 1 to 3, wherein the processing station includes a waste receptacle shutter having an opening therein, and wherein, during (a), (b), (c), and (d), the waste receptacle shutter is in a closed position in which a portion of the shutter covers an access opening to the waste receptacle, and wherein the method comprises, before (e), automatically moving the waste receptacle shutter from the closed position to an open position in which the opening in the waste receptacle shutter is aligned with the access opening to the waste receptacle, and wherein (e) comprises automatically moving the cap and attached sample collection swab through the opening in the shutter and the access opening to deposit the cap and attached sample collection swab into the waste receptacle; preferably,
wherein, when the waste receptacle shutter is in the open position during (e), at least a portion of the waste receptacle shutter is disposed above the container vessel and below the cap and attached sample collection swab removed from the container vessel with the pick-and-place robot, and wherein (e) comprises the pick-and-place robot transporting the cap and attached sample collection swab along a path above the waste receptacle shutter; and/or
further comprising, after (e), automatically moving the waste receptacle shutter from the open position to the closed position.

5. The method of any one of claims 1 to 4, comprising, prior to (b), (i) presenting the replacement cap at a position and orientation permitting the replacement cap to be picked up by the pick-and-place robot; preferably,
wherein (i) is performed with a vibratory hopper.

6. A system for processing a sample collection vial, wherein the sample collection vial contains a fluid sample and comprises a cap removably attached to a container vessel and a sample collection swab attached to the cap, wherein the system comprises: a vial holder; a cap holder; a capper/decapper configured to remove a cap from or attach a cap to a container vessel; a pick-and-place robot; a waste receptacle, and a system controller in communication with the capper/decapper and the pick-and-place robot, and wherein the system controller is programmed to execute the following functions: (a) activate the pick-and-place robot to transport the sample collection vial to the vial holder; (b) activate the pick-and-place robot to transport a replacement cap to the cap holder, wherein the replacement cap does not include a sample collection swab; (c) activate the capper/decapper to alter an attachment between the cap and attached sample collection swab and the container vessel so that the cap may be separated from the container vessel; (d) activate the pick-and-place robot to remove the cap and attached sample collection swab from the container vessel; (e) activate the pick-and-place robot to transport the cap and attached sample collection swab to the waste receptacle and deposit the cap and attached sample collection swab in the waste receptacle; (f) activate the capper/decapper to remove the replacement cap from the cap holder; (g) activate the capper/decapper to attach the replacement cap to the container vessel of the sample collection vial; and (h) activate the pick-and-place robot to remove the sample collection vial with the replacement cap attached thereto from the vial holder.

7. The system of claim 6, wherein the replacement cap is a penetrable cap.

8. The system of claim 6 or 7, further comprising an input rack for holding one or more sample collection vials and an output rack for holding one or more sample collection vials, and wherein function (a) comprises the system controller activating the pick-and-place robot to transport the sample collection vial from the input rack to the vial holder, and function (h) comprises the system controller activating the pick-and-place robot to transport the sample collection vial from the vial holder to the output rack

9. The system of claim 8, further comprising an incubator for holding one or more sample collection vials, wherein prior to function (h), the system controller activates the pick-and-place robot to transport the sample collection vial from the vial holder to the incubator to expose the sample collection vial to an elevated temperature for a prescribed period of time.

10. The system of any one of claims 6 to 9, further comprising a movable platform on which the vial holder and the cap holder are supported, wherein the system controller is in communication with the movable platform and wherein the system controller is programmed to: prior to function (c) and prior to function (g), activate the movable platform to move the vial holder with respect to the capper/decapper to place the sample collection vial held in the vial holder in a capping/decapping position with respect to the capper/decapper; and prior to function (f), activate the movable platform to move the cap holder with respect to the capper/decapper to place the replacement cap held by the cap holder in an operative position with respect to the capper/decapper.

11. The system of claim 10, wherein the movable platform comprises a carousel that is rotatable about an axis of rotation, and wherein the vial holder is radially spaced from the axis of rotation, and the capper/decapper is radially spaced from the axis of rotation by the same distance as the vial holder; preferably,
wherein the cap holder is radially spaced from the axis of rotation by the same distance as the vial holder.

12. The system of any one of claims 6 to 11, comprising a waste receptacle shutter having an opening therein and configured for powered movement between a closed position in which a portion of the shutter covers an access opening to the waste receptacle and an open position in which the opening of the shutter is aligned with the access opening to the waste receptacle, wherein the system controller is in communication with the waste receptacle shutter, and wherein the system controller is programmed to, before function (e), activate the waste receptacle shutter to move from the closed position to the open position, and wherein function (e) comprises the system controller activating the pick-and-place robot to move the cap and attached sample collection swab through the opening in the shutter and the access opening to deposit the cap and attached sample collection swab into the waste receptacle.

13. The system of claim 12, wherein, when the waste receptacle shutter is in the open position during function (e), at least a portion of the waste receptacle shutter is disposed above the container vessel and below the cap and attached sample collection swab removed from the container vessel with the pick-and-place robot, and wherein function (e) comprises the pick-and-place robot transporting the cap and attached sample collection swab along a path above the waste receptacle shutter.

14. The system of claim 12 or 13, further comprising, after function (e), the system controller activates the waste receptacle shutter to move from the open position to the closed position.

15. The system of any one of claims 6 to 14, further comprising a vibratory hopper and a cap chute, wherein the vibratory hopper is configured to present the replacement cap at the cap chute in an orientation permitting the replacement cap to be picked up by the pick-and-place robot.
